(19) Europäisches Patentamt
European Patent Office
Office européen des brevets

(11) **EP 4 000 050 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **20747349.7**

(22) Anmeldetag: **16.07.2020**

(51) Internationale Patentklassifikation (IPC):
**G07D 7/12** *(2016.01)*    **G07D 7/1205** *(2016.01)*
**G07D 7/202** *(2016.01)*    **G01N 21/63** *(2006.01)*
**G01N 21/64** *(2006.01)*

(52) Gemeinsame Patentklassifikation (CPC):
**G01N 21/63; G07D 7/12; G07D 7/1205;
G07D 7/205;** G01N 21/6408; G01N 21/645

(86) Internationale Anmeldenummer:
**PCT/EP2020/070194**

(87) Internationale Veröffentlichungsnummer:
**WO 2021/013706 (28.01.2021 Gazette 2021/04)**

(54) **PHOTOLUMINESZENZ-SENSORVORRICHTUNG ZUM ERKENNEN EINES SICHERHEITSMERKMALS EINES SICH RELATIV ZU DER SENSORVORRICHTUNG BEWEGENDEN OBJEKTS**

PHOTOLUMINESCENCE SENSOR DEVICE FOR DETECTING A SECURITY FEATURE OF AN OBJECT MOVING RELATIVE TO THE SENSOR DEVICE

SYSTÈME DE CAPTEUR DE PHOTOLUMINESCENCE POUR RECONNAÎTRE UNE CARACTÉRISTIQUE DE SÉCURITÉ D'UN OBJET SE DÉPLAÇANT PAR RAPPORT AU SYSTÈME DE CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2019 DE 102019210760**

(43) Veröffentlichungstag der Anmeldung:
**25.05.2022 Patentblatt 2022/21**

(73) Patentinhaber: **Bundesdruckerei GmbH
10969 Berlin (DE)**

(72) Erfinder:
• **PETERS, Florian
10437 Berlin (DE)**
• **SZEGVARI, Piotr
14469 Potsdam (DE)**

(74) Vertreter: **Patentanwälte Bressel und Partner mbB
Potsdamer Platz 10
10785 Berlin (DE)**

(56) Entgegenhaltungen:
**EP-A1- 3 064 939    EP-A1- 3 503 049**

**Beschreibung**

Die Erfindung betrifft eine Photolumineszenz-Sensorvorrichtung zum Erkennen eines Sicherheitsmerkmals eines sich relativ zu der Sensorvorrichtung bewegenden Objekts in einem Messbereich der Sensorvorrichtung. Die Erfindung betrifft ferner ein Verfahren zum Erkennen eines Sicherheitsmerkmals eines sich bewegenden Objekts.

Bei dem Objekt kann es sich um ein Sicherheitsobjekt, insbesondere Sicherheitsdokument handeln, zum Beispiel eine behördlich ausgestellte Urkunde, eine Chipkarte oder Transponderkarte, ein Personalausweis, eine andere Identitätskarte oder ein Reisepass, um nur einige Beispiele zu nennen. Alternativ oder zusätzlich kann es sich bei dem Objekt um ein Wertobjekt, insbesondere ein Wertdokument handeln, wie zum Beispiel eine Banknote oder eine Aktie. Das Objekt kann zum Beispiel aus Papier gefertigt sein. Zumindest ein Photolumineszenz-Stoff kann z. B. in das Material des Objekts integriert sein und/oder auf das Material aufgebracht, zum Beispiel aufgedruckt, sein. Dabei können insbesondere Pigmente aus zumindest einem solchen Stoff oder mit zumindest einem solchen Stoff verwendet werden.

Der Stoff oder die Stoffe werden mit elektromagnetischer Strahlung geeigneter, auf die jeweilige Anregungsenergie des Stoffs abgestimmter Wellenlänge bestrahlt, wobei es sich auch um mehrere diskrete Wellenlängen und/oder um einen Wellenlängenbereich oder mehrere Wellenlängenbereiche handeln kann. Durch die Anregung wird der zumindest eine Stoff dazu gebracht, Lumineszenz-Strahlung zu emittieren. Die Anregung führt daher dazu, dass in dem zumindest einen Stoff ein Vorgang oder eine Kombination von Vorgängen stattfindet, die zu der Emission der Lumineszenz-Strahlung führt. Insbesondere können dabei Atome oder Moleküle des jeweiligen Stoffs auf ein höheres Energieniveau angeregt werden und das Verlassen vorhandener Energiezustände mit erhöhtem Energieniveau angeregt werden. Insbesondere können daher auch Phononen durch die Anregung vernichtet werden, d.h. in Photonen der Lumineszenz-Strahlung umgewandelt werden. Insbesondere wird beim direkten oder indirekten Zurückkehren auf ein niedrigeres Energieniveau elektromagnetische Strahlung mit für den Stoff charakteristischer Wellenlänge abgestrahlt, anhand der die Echtheit des Objekts feststellbar ist und somit das Objekt verifiziert werden kann.

Aus der EP 1 241 242 A2 sind sogenannte Anti-Stokes-Leuchtstoffe für die Anwendung in Sicherheitsdokumenten bekannt. Solche Anti-Stokes-Leuchtstoffe gehören zu der Gruppe der Photolumineszenzstoffe, welche über eine Anregung mit elektromagnetischer Strahlung zum Aussenden von elektromagnetischer Lumineszenz-Strahlung angeregt werden können. Anti-Stokes-Leuchtstoffe absorbieren elektromagnetische Strahlung einer Wellenlänge, welche als Anregungswellenlänge bezeichnet wird, und emittieren zumindest einen Teil der Lumineszenz-Strahlung bei zumindest einer Anti-Stokes-Wellenlänge, die kürzer als die Anregungswellenlänge ist.

Die Erfindung ist nicht beschränkt auf solche Anti-Stokes-Leuchtstoffe zur Verwendung in Sicherheitsmerkmalen. Es kann sich zum Beispiel auch um so genannte Stokes-Leuchtstoffe handeln, die zumindest einen Teil der Lumineszenz-Strahlung gemäß einer Stokes-Verschiebung bei zumindest einer Wellenlänge emittieren, die länger als die Anregungswellenlänge ist.

Insgesamt kann die anregende elektromagnetische Strahlung daher in einem ersten Wellenlängenbereich liegen und die emittierte elektromagnetische Strahlung, die auch als Lumineszenz-Strahlung bezeichnet werden kann, in einem zweiten Wellenlängenbereich liegen, der sich von dem ersten Wellenlängenbereich unterscheidet. Ein solcher Unterschied erleichtert es insbesondere, die Lumineszenz-Strahlung von reflektierten Strahlungsanteilen der anregenden elektromagnetischen Strahlung zu unterscheiden. Da die Anregung jedoch typischerweise erst zeitverzögert zu der Emission von Lumineszenz-Strahlung führt, kann eine Lumineszenz-Strahlung grundsätzlich auch in Kenntnis der Zeitverzögerung und unter Berücksichtigung des zeitlichen Verlaufs der anregenden Strahlung erkannt werden.

Die Wellenlängenbereiche sind auch dann unterschiedlich, wenn sie einander überlappen und/oder die Maxima der spektralen Intensitäten der Strahlung bei unterschiedlichen Wellenlängen liegen. Unterschiedliche Wellenlängenbereichen setzen nicht zwingend voraus, dass die Wellenlängenbereiche aneinander angrenzen oder gar einen Wellenlängenabstand zueinander aufweisen. Ein solcher Wellenlängenabstand kann aber insbesondere dann erzielt werden, wenn die anregende elektromagnetische Strahlung von einem Laser, zum Beispiel einer Laserdiode erzeugt wird.

Bei einer einfachen Form der Verifikation wird lediglich geprüft, ob eine Anti-Stokes-Lumineszenz und/oder eine Stokes-Lumineszenz erfassbar ist/sind. In einer weiter entwickelten Ausführungsform wird/werden beispielsweise die Anklingzeit und/oder die Abklingzeit der Emission der Lumineszenz-Strahlung ermittelt und/oder berücksichtigt und wird anhand einer Auswertung geprüft, ob in dem geprüften Sicherheitsdokument die für ein echtes Sicherheitsdokument korrekten Lumineszenzstoffe enthalten sind.

Eine Nachbildung von mit mindestens einem Sicherheitsmerkmal ausgestatteten Objekten durch nicht berechtigte Personen, zum Beispiel einen potentiellen Fälscher, ist aufgrund einer Verwendung eines Lumineszenzstoffs in oder am Sicherheitsmerkmal stark erschwert. Bekannte Eigenschaften und Charakteristiken eines verwendeten Lumineszenzstoffs - zum Beispiel ein erwarteter Wellenlängenbereich einer Strahlungsantwort und/oder ein erwarteter zeitlicher Verlauf einer Strahlungsantwort - können als Verifikationsmerkmal dienen, um die Echtheit des Sicherheitsmerkmals und somit des Objekts überprüfen zu können.

Weiterhin ist es möglich, dass ein originales Sicherheitsmerkmal durch einen Fälscher mit einem gefälschten Objekt verbunden wird. Ein solcher Fall ist zum Beispiel denkbar, wenn das Sicherheitsmerkmal von einem originalen Objekt ablösbar oder trennbar ist und mit dem gefälschten Objekt mechanisch verbindbar ist oder an ihm befestigt werden kann. Derartige Vorgehensweisen eines potentiellen Fälschers können durch entsprechende Ausgestaltung des originalen Sicherheitsmerkmals in Verbindung mit dem originalen Objekt mindestens erschwert werden.

EP 3 064 939 A1 offenbart eine Fluoreszenz- und Phosphoreszenzerfassungsvorrichtung Eine Lichtquelle emittiert ein Anregungslicht einer vorbestimmten Wellenlänge und eine Photodetektionseinheit detektiert eine durch das Anregungslicht von dem Papierblatt angeregte Fluoreszenzemission und Phosphoreszenzemission. Eine Datenerfassungseinheit erfasst eine Zeitreihenwellenform eines Signals, das von dem Fluoreszenz- und Phosphoreszenzsensor als Reaktion auf die Erfassung der Emission in der Photoerfassungseinheit ausgegeben wird. Eine Emissionserfassungseinheit erfasst die Fluoreszenzemission aus der Zeitreihenwellenform einer Periode, in der das Anregungslicht von der Lichtquelle emittiert wird, und erfasst die Phosphoreszenzemission aus einer auf der Zeitreihenwellenform erscheinenden Dämpfungskurve eines Zeitraums, in dem die Emission des Anregungslichts von der Lichtquelle gestoppt wird. Eine Transportinformationsaufnahmeeinheit, die gemäß einer konventionellen Technologie funktioniert, hat die Funktion, Information über eine Orientierung einer Banknote zu erhalten und eine Position der Banknote auf einem Transportweg zu identifizieren.

EP 3 503 049 A1 beschreibt eine Vorrichtung zum Nachweis eines maschinenlesbaren Sicherheitsmerkmals eines Wertdokuments. Ein Strahlungsemitter emittiert Strahlung, mit der eine Lumineszenzstrahlung des Sicherheitsmerkmals angeregt wird. Ein Sensor empfängt zumindest einen Teil der Lumineszenzstrahlung und/oder der emittierten Strahlung.

Es ist eine Aufgabe der vorliegenden Erfindung, eine Photolumineszenz-Sensorvorrichtung zum Verifizieren eines Sicherheitsmerkmals eines Objekts und ein Verfahren zum Verifizieren eines Sicherheitsmerkmals eines Objekts anzugeben, die/das es ermöglicht/ermöglichen, Objekte zuverlässig zu verifizieren.

Die beigefügten Patentansprüche definieren den Schutzumfang.

Es wird vorgeschlagen, eine Photolumineszenz-Sensorvorrichtung zum Erkennen eines Sicherheitsmerkmals eines sich relativ zu der Sensorvorrichtung bewegenden Objekts bzw. ein Verfahren zum Erkennen eines Sicherheitsmerkmals eines sich relativ zu einer Photolumineszenz-Sensorvorrichtung bewegenden Objekts derart weiterzuentwickeln, dass ein Zeitpunkt oder ein Zeitintervall bestimmt wird, in dem sich zumindest ein Teil eines Randes des Objekts an einem entsprechenden Ort im Messbereich befindet. Der Rand des Objektes kann ein Außenrand sein, oder er kann ein Rand eines Objektteils des Objektes (z.B. eines Oberflächenbereichs, speziell z. B. eines Oberflächenbereichs, der näher an dem Sicherheitsmerkmal als ein Außenrand des Objekts liegt) sein, an dem sich die optischen Eigenschaften für die Reflexion der von einer Strahlungserzeugungseinrichtung der Sensorvorrichtung erzeugten Strahlung und/oder Lumineszenzeigenschaften ändern. Der Rand des Objektes kann insbesondere auch ein Rand des Objekts angrenzend zum Sicherheitsmerkmal oder ein Rand innerhalb der Fläche des Sicherheitsmerkmals oder ein Rand eines Teilbereichs des Sicherheitsmerkmals oder ein Rand eines Bereichs von lumineszierendem Stoff sein. Insbesondere kann daher für mehrere Ränder bzw. deren Teile ein solcher Zeitpunkt oder ein solches Zeitintervall bestimmt werden.

Zum Beispiel wenn die Position eines Randes eines Objektteils (zum Beispiel aus einem ermittelten ersten Zeitpunkt oder ein Zeitintervall) bestimmt wird, der näher an dem Sicherheitsmerkmal als ein Außenrand des Objekts liegt, und wenn außerdem die Position des Sicherheitsmerkmals (zum Beispiel aus einem ermittelten zweiten Zeitpunkt oder ein Zeitintervall) bestimmt wird, wird Information über die Position des Sicherheitsmerkmals mit höherer Genauigkeit erhalten, als wenn die Position des Sicherheitsmerkmals relativ zu der Position des weiter entfernt gelegenen Außenrandes bestimmt wird.

Gemäß der Erfindung wird eine Photolumineszenz-Sensorvorrichtung nach Anspruch 1 zum Erkennen eines Sicherheitsmerkmals eines sich relativ zu der Sensorvorrichtung bewegenden Objekts in einem Messbereich der Sensorvorrichtung vorgeschlagen, wobei die Sensorvorrichtung aufweist:

- eine Strahlungserzeugungseinrichtung, die ausgestaltet ist, elektromagnetische Strahlung zu erzeugen, wobei die elektromagnetische Strahlung geeignet ist, eine Emission von Lumineszenz-Strahlung durch einen photolumineszierenden Stoff des Sicherheitsmerkmals anzuregen,
- eine Empfangseinrichtung, die ausgestaltet ist, von dem sich relativ zu der Sensorvorrichtung bewegenden Objekt ausgehende elektromagnetische Strahlung über einen Erfassungszeitraum hinweg zu empfangen und ein entsprechendes zeitabhängiges Empfangssignal zu erzeugen, wobei die von dem Objekt ausgehende elektromagnetische Strahlung - je nach Relativposition des Objekts und der Empfangseinrichtung und je nach der elektromagnetischen Strahlung, die von der Strahlungserzeugungseinrichtung erzeugt wird und auf das Objekt auftrifft - die von dem photolumineszierenden Stoff emittierte Lumineszenz-Strahlung und/oder von dem Objekt reflektierte elektromagnetische Strahlung, die von der Strahlungserzeugungseinrichtung erzeugt wurde, aufweist,
- eine Auswertungseinrichtung, die ausgestaltet ist, das zeitabhängige Empfangssignal auszuwerten,

wobei die Auswertungseinrichtung ausgestaltet ist festzustellen, ob von dem photolumineszierenden Stoff emittierte Lumineszenz-Strahlung zu dem zeitabhängigen Empfangssignal beigetragen hat,

und die Auswertungseinrichtung zusätzlich ausgestaltet ist, einen Zeitpunkt oder ein Zeitintervall zu bestimmen, in dem sich zumindest ein Teil eines Randes des Objekts an einem entsprechenden Ort im Messbereich befindet.

Ferner wird ein Verfahren nach Anspruch 10 zum Erkennen eines Sicherheitsmerkmals eines sich relativ zu einer Photolumineszenz-Sensorvorrichtung bewegenden Objekts in einem Messbereich der Sensorvorrichtung, aufweisend:

- Erzeugen von elektromagnetischer Strahlung mithilfe einer Strahlungserzeugungseinrichtung, wobei die elektromagnetische Strahlung eine Emission von Lumineszenz-Strahlung durch einen photolumineszierenden Stoff des Sicherheitsmerkmals anregt,
- Empfangen von elektromagnetischer Strahlung, die von dem sich relativ zu der Sensorvorrichtung bewegenden Objekt ausgeht, über einen Erfassungszeitraum hinweg, wobei die von dem Objekt ausgehende elektromagnetische Strahlung - je nach Relativposition des Objekts und der Empfangseinrichtung (19) und je nach der elektromagnetischen Strahlung, die von der Strahlungserzeugungseinrichtung erzeugt wird und auf das Objekt auftrifft - die von dem photolumineszierenden Stoff emittierte Lumineszenz-Strahlung und/oder von dem Objekt reflektierte elektromagnetische Strahlung, die von der Strahlungserzeugungseinrichtung erzeugt wurde, aufweist,
- Erzeugen eines entsprechenden zeitabhängigen Empfangssignals,
- Feststellen, ob von dem photolumineszierenden Stoff emittierte elektromagnetische Strahlung zu dem zeitabhängigen Empfangssignal beigetragen hat,

Bestimmen eines Zeitpunkts oder eines Zeitintervalls, in dem sich zumindest ein Teil eines Randes des Objekts an einem entsprechenden Ort im Messbereich befindet.

Die Photolumineszenz-Sensorvorrichtung kann insbesondere ortsfest sein, sodass das Objekt an der Sensorvorrichtung vorbeibewegt wird. Alternativ kann die Photolumineszenz-Sensorvorrichtung beweglich sein, zum Beispiel ein von einer Person handgeführt bewegbarer Scanner sein. Unter einer Relativbewegung des Objekts zu der Sensorvorrichtung wird daher insbesondere auch verstanden, dass sich die Sensorvorrichtung in einem Raum bewegt und das Objekt ruht. Bezogen auf einen Raum oder einen örtlichen Bereich kann sich allgemein formuliert das Objekt bewegen, die Sensorvorrichtung bewegen oder können sich beide bewegen.

Das Sicherheitsmerkmal kann insbesondere ein Materialbereich sein, der insbesondere an oder nahe einer Oberfläche des Objekts angeordnet ist. Das Sicherheitsmerkmal kann sich z. B. aber auch inmitten des Objekts befinden, wenn das Objekt und das Sicherheitsmerkmal derart ausgestaltet ist/sind, dass emittierte Lumineszenz-Strahlung aus dem Objekt austreten kann.

Das Sicherheitsmerkmal kann einen lumineszierenden Stoff oder mehrere lumineszierende Stoffe mit verschiedenen Lumineszenz-Eigenschaften aufweisen.

Es wird bevorzugt, dass das Sicherheitsmerkmal an einer vordefinierten Position des Objekts angeordnet ist. Das Sicherheitsmerkmal kann insbesondere aus einer Anordnung mehrerer Materialbereiche mit jeweils zumindest einem lumineszierenden Stoff bestehen, wobei jeder der Materialbereiche sich an einer vordefinierten Position des Objekts befinden kann und/oder zwischen jeweils zwei Materialbereichen vordefinierte Abstände vorhanden sein können. Insbesondere können verschiedene Lumineszenzstoffe an verschiedenen Positionen des Objekts angeordnet sein. Die Kenntnis der zumindest einen vordefinierten Position und/oder des zumindest einen vordefinierten Abstandes kann bei der Verifikation des Sicherheitsmerkmals genutzt werden. Um aus der Vermessung eines Objektes mittels der Sensorvorrichtung eine Position oder einen Abstand zu ermitteln, kann wie noch im weiteren Beschreibungstext erläutert vorgegangen werden bzw. kann die Sensorvorrichtung entsprechend ausgestaltet sein. Eine Mehrzahl von vordefinierten Positionen und/oder zumindest ein vordefinierter Abstand kann zur Verifizierung des Sicherheitsmerkmals mit den aus der Vermessung des Objektes ermittelten Positionen und/oder mit dem aus der Vermessung des Objektes ermittelten Abstand verglichen werden. Insbesondere anhand eines vordefinierten Vergleichskriteriums für diesen Vergleich kann dann entschieden werden ob jedenfalls das Ergebnis dieses Vergleichs für die Echtheit des Objekts spricht. Das Ergebnis dieses Vergleichs kann mit dem Ergebnis der Auswertung der von der Sensorvorrichtung empfangenen Lumineszenz-Strahlung des Objekts kombiniert werden. Auch darauf wird noch eingegangen.

Eine Randerkennung ist auch dann möglich, wenn keine Erkennung eines Sicherheitsmerkmals mit photolumineszierendem Stoff stattfindet. Offenbart wird daher ebenfalls eine nicht beanspruchte Sensorvorrichtung zum Untersuchen eines sich relativ zu der Sensorvorrichtung bewegenden Objekts in einem Messbereich der Sensorvorrichtung, wobei die Sensorvorrichtung aufweist:

- eine Strahlungserzeugungseinrichtung, die ausgestaltet ist, elektromagnetische Strahlung zu erzeugen,
- eine Empfangseinrichtung (19), die ausgestaltet ist, von dem sich relativ zu der Sensorvorrichtung bewegenden Objekt ausgehende elektromagnetische Strahlung über einen Erfassungszeitraum hinweg zu empfangen und ein entsprechendes zeitabhängiges Empfangssignal (ES) zu erzeugen, wobei die von dem Objekt ausgehende elektromagnetische Strahlung - je nach Relativposition des Objekts und der Empfangseinrichtung (19) und je nach der elektromagnetischen Strahlung, die von der Strahlungserzeugungseinrichtung erzeugt wird und auf das Objekt auftrifft - die von dem Stoff emittierte Strahlung und/oder von dem Objekt reflektierte Strahlung, die von der Strahlungserzeugungseinrichtung erzeugt wurde, aufweist,

- eine Auswertungseinrichtung, die ausgestaltet ist, das zeitabhängige Empfangssignal auszuwerten,

wobei die Auswertungseinrichtung ausgestaltet ist, einen Zeitpunkt oder ein Zeitintervall zu bestimmen, in dem sich zumindest ein Teil eines Randes des Objekts an einem entsprechenden Ort im Messbereich befindet.

Außerdem wird ein entsprechendes Verfahren zum Untersuchen eines sich relativ zu der Sensorvorrichtung bewegenden Objekts in einem Messbereich der Sensorvorrichtung offenbart, welches nicht Gegenstand der Ansprüche ist. Ausgestaltungen des Verfahrens und der Sensorvorrichtung ergeben sich aus der vorhergehenden und folgenden Beschreibung, wobei allerdings eine Erkennung eines photolumineszierenden Sicherheitsmerkmals nicht stattfindet.

Der Zeitpunkt oder das Zeitintervall, in dem sich zumindest ein Teil eines Randes des Objekts an einem entsprechenden Ort im Messbereich befindet, kann anhand der Uhrzeit oder in Bezug auf einen Bezugszeitpunkt bestimmt werden, zum Beispiel in Bezug auf einen Bezugszeitpunkt, zu dem das Objekt bei seiner Relativbewegung in den Messbereich der Sensorvorrichtung oder an eine andere vordefinierte oder eindeutige Position gelangt. Der Bezugszeitpunkt kann insbesondere innerhalb des Erfassungszeitraums liegen.

Zum Beispiel kann eine Aufzeichnung des Messsignals der Sensorvorrichtung zu einem Startzeitpunkt beginnen, an dem das sich kontinuierlich bewegende Objekt einen Ort erreicht, der sich in Bewegungsrichtung des Objekts in einem bestimmten Abstand zu dem Messbereich der Sensorvorrichtung befindet. Dieser Startzeitpunkt kann dann auch der Bezugszeitpunkt sein. Das Erreichen des Ortes kann zum Beispiel mittels einer Lichtschranke detektiert werden.

Wenn ein Rand des Objekts in den Messbereich gelangt und/oder sich in dem Messbereich bewegt, ändert sich die Strahlung, welche von dem Objekt ausgeht und von der Sensorvorrichtung empfangen wird. Entsprechendes gilt, wenn sich der Rand aus dem Messbereich heraus bewegt.

Wenn sich die Strahlung, welche von der Sensorvorrichtung empfangen wird, ändert, dann ändert sich das Empfangssignal, das durch die Sensorvorrichtung erzeugt wird. Zum Beispiel können sich hierbei Amplituden, Minimal- und/oder Maximalwerte des Empfangssignals ändern. Es handelt sich bei dem Empfangssignal um den zeitlichen Verlauf der Messwerte der von der Empfangseinrichtung empfangenen elektromagnetischen Strahlung. Insbesondere kann der zeitliche Verlauf durch eine Vielzahl einzelner Messwerte definiert sein. In diesem Fall findet aufgrund der wiederholten Erzeugung einzelner Messwerte durch die Empfangseinrichtung eine Abtastung des zeitlichen Verlaufs der von der Empfangseinrichtung empfangenen elektromagnetischen Strahlung statt. Jeder Abtastwert wird zu einem zugeordneten Zeitpunkt erzeugt.

Zum Beispiel ein Hineinbewegen des zumindest einen Teils des Randes des Objekts in den Messbereich verursacht eine solche Änderung des Empfangssignals. Auch ein Hinausbewegen des zumindest einen Teils des Randes des Objekts aus dem Messbereich verursacht eine solche Änderung des Empfangssignals. Bewegt sich der zumindest eine Teil des Randes des Objekts innerhalb des Messbereichs, zum Beispiel durch den Messbereich hindurch oder durch einen Teilbereich des Messbereichs, wird das Empfangssignal ebenfalls geändert.

Mithilfe einer solchen Änderung im Empfangssignal, kann ein Zeitpunkt oder ein Zeitintervall bestimmt werden, in dem sich der zumindest eine Teil des Randes des Objekts an einem entsprechenden Ort im Messbereich befindet.

Ein Hineinbewegen in den Messbereich ermöglicht es zum Beispiel, einen Zeitpunkt oder ein Zeitintervall zu bestimmen, in dem sich der zumindest eine Teil des Randes des Objekts am Beginn des Messbereich (betrachtet in Bewegungsrichtung) befindet. Hierzu kann insbesondere ein Beginn einer zeitlichen Veränderung des Empfangssignals oder ein anderer charakteristischer Zeitpunkt der zeitliche Veränderung (zum Beispiel ein Zeitpunkt der größten zeitlichen Änderung) bestimmt werden. Eine solche zeitliche Veränderung kann zum Beispiel ein Bereich im zeitlichen Verlauf des Empfangssignals sein, in dem sich zum Beispiel Amplituden und/oder Minimal-und/oder Maximalwerte verändern. Der entsprechende Ort liegt dann demgemäß am Beginn des Messbereichs.

Ein Hinausbewegen aus dem Messbereich ermöglicht es zum Beispiel, einen Zeitpunkt oder ein Zeitintervall zu bestimmen, in dem sich der zumindest eine Teil des Randes des Objekts am Ende des Messbereich (betrachtet in Bewegungsrichtung) befindet. Hierzu kann insbesondere ein Ende einer zeitlichen Veränderung des Empfangssignals oder ein anderer charakteristischer Zeitpunkt der zeitliche Veränderung (zum Beispiel ein Zeitpunkt der größten zeitlichen Änderung) des zeitlichen Verlaufs des Empfangssignals bestimmt werden. Der entsprechende Ort liegt dann demgemäß am Ende des Messbereichs.

Eine Bewegung des zumindest einen Teils des Randes des Objekts innerhalb des Messbereichs ermöglicht es zum Beispiel, einen Zeitpunkt oder ein Zeitintervall zu bestimmen, zu/in dem sich der zumindest eine Teil des Randes des Objekts innerhalb des Messbereichs befindet, zum Beispiel mittig oder näherungsweise mittig. Hierzu kann insbesondere ein Punkt innerhalb einer zeitlichen Veränderung des Empfangssignals bestimmt werden, zum Beispiel ein mittig oder näherungsweise mittig liegender Punkt. Der entsprechende Ort liegt dann demgemäß innerhalb des Messbereichs, zum Beispiel mittig oder näherungsweise mittig.

Der entsprechende Ort muss nicht am Beginn oder am Ende oder mittig im Messbereich liegen, sondern kann an jeder beliebigen Position im Messbereich liegen (betrachtet in Bewegungsrichtung). Der entsprechende Ort kann insbesondere lediglich durch eine Koordinate angegeben sein, insbesondere eine Koordinate in der Bewegungsrichtung. Alternativ kann der entsprechende Ort als örtlicher Bereich angegeben sein. In jedem Fall kann der entsprechende Ort sich insbesondere auf ein Bezugssystem beziehen, das ortsfest bezüglich des Messbereichs ist, oder ein Bezugssystem, das ortsfest bezüglich des Objekts ist..

Insbesondere, wenn die Empfangseinrichtung mehrere Sensorelemente (auch Sensoren genannt) insbesondere verteilt quer zur Bewegungsrichtung aufweist, kann der entsprechende Ort insbesondere durch eine zweidimensionale Angabe beschrieben werden (zum Beispiel in einem zweidimensionalen Koordinatensystem mit einer Koordinate bezüglich der Bewegungsrichtung und einer Koordinate bezüglich der Querrichtung der Bewegungsrichtung). Auch eine dreidimensionale Angabe des entsprechenden Orts ist möglich.

Insbesondere kann bei Vorhandensein einer Mehrzahl von Sensoren, die quer zur Bewegungsrichtung verteilt sind, der Ort des Randes bezüglich der Querrichtung unter Verwendung von Information über die Position zumindest eines Sensors und/oder in Bezug auf die Position zumindest eines Sensors oder eines Koordinatensystems der Sensoren ermittelt werden. Zum Beispiel ist die Koordinate des Ortes bezüglich der Querrichtung durch die Position des Messbereichs desjenigen Sensors gegeben, welches/welcher das Empfangssignal ermittelt hat, das ausgewertet wird/wurde und gemäß der Auswertung den Rand aufweist, Insbesondere wenn der Ort bezüglich der Querrichtung zwischen den Messbereichen oder im Überlappungsbereich der Messbereiche zweier benachbarter Sensoren liegt, dann kann der Ort des Randes unter Verwendung der Information über die Position mehrerer der Sensoren ermittelt werden.

Bevorzugt wird daher folgende Vorgehensweise. Die Sensorvorrichtung kann entsprechend ausgestaltet sein: Zunächst wird aus den Messsignalen der Mehrzahl von Sensoren ermittelt, welche der Sensoren Strahlung ausschließlich von einem ersten Bereich auf einer ersten Seite des Randes und welche der Sensoren Strahlung ausschließlich von einem zweiten Bereich auf einer zweiten Seite des Randes empfangen. Dabei liegt der zweite Bereich in Bezug auf den Rand auf der gegenüberliegenden Seite ersten Bereichs. Es wird davon ausgegangen, dass zumindest einer der Bereiche ein erster Oberflächenbereich des Objekts ist. Zum Beispiel in dem Fall, dass der Oberflächenbereich den photolumineszierenden Stoff aufweist, kann dies anhand des Empfangs von Lumineszenz-Strahlung festgestellt werden. Der andere Bereich kann außerhalb des Objekts liegen oder ein anderer Oberflächenbereich des Objekts sein, der von dem ersten Oberflächenbereich durch den Rand abgegrenzt ist. Die Messbereiche der Sensoren können so klein gewählt werden, dass diese Annahme bei den zu erwartenden Objekten erfüllt ist. Zum Beispiel kann ein Bereich als außerhalb des Objekts liegend erkannt werden, indem mit einem Vergleichs-Messsignal verglichen wird, das vorab durch eine Vergleichsmessung ohne Objekt erzeugt wurde. Vorzugsweise wird für jeden der Sensoren jeweils ein Vergleichs-Messsignal für die Durchführung des Vergleichs erzeugt. Wenn optische Eigenschaften zumindest eines Oberflächenbereichs des Objekts bekannt sind oder wenn eine Vorabmessung mit einem typischen Objekt durchgeführt wird, kann auch für den zumindest einen Oberflächenbereich des Objekts ein Vergleichssignal vorab ermittelt werden und kann in einem Vergleich mit den Messsignalen oder den jeweiligen Messsignalen festgestellt werden, ob der jeweilige Sensor ausschließlich Strahlung von einem Objekts mit einem derartigen Oberflächenbereich empfangen hat. Alternativ oder zusätzlich kann die Situation, dass ein Sensor ausschließlich Strahlung von einem Oberflächenbereich des Objekts empfängt, auch dadurch festgestellt werden, dass eine Mehrzahl der Sensoren alle das auf das Vorhandensein des optisch gleichen Oberflächenbereich hinweisende Empfangssignals erzeugen. Dabei unterscheiden sich die Messsignale der Sensoren zum Beispiel lediglich aufgrund der Tatsache, dass die Sensoren unterschiedliche Eigenschaften haben, zum Beispiel einen unterschiedliches Signal-Offsetwert.

Außerdem wird aus den Messsignalen der Sensoren ermittelt, welcher Sensor unter Umständen ein Messsignalen erzeugt hat, das darauf zurückzuführen ist, dass der Sensor Strahlung sowohl von dem ersten Bereich als auch den zweiten Bereich empfangen hat.

Wenn zum Beispiel in der Reihenfolge der Messbereiche der Sensoren ein erster Sensor ein Signal erzeugt, das ausschließlich auf Strahlung von dem ersten Bereich zurückzuführen ist, und ein zweiter Sensor ein Signal erzeugt, das ausschließlich auf Strahlung von dem zweiten Bereich zurückzuführen ist, dann ist liegt ein Messwert eines Messsignals eines dritten Sensors, dessen Messbereich zwischen dem ersten Sensor und dem zweiten Sensor liegt, zum Beispiel zwischen den Messwerten der Messsignale des ersten und des zweiten Sensors. Dies deutet darauf hin, dass sich der Ort des Randes in dem Messbereich des dritten Sensors befindet und der dritte Sensor sowohl Strahlung von dem ersten Bereich als auch von dem zweiten Bereich empfangen hat. Da sich der Ort des Randes aber auch zwischen zwei benachbarten Messbereichen befinden kann, ist nicht in allen Fällen ein solcher Sensor vorhanden.

Nachdem die Messsignale der Sensoren in der zuvor genannten Weise ausgewertet worden sind, kann nun der Ort des Randes quer zur Bewegungsrichtung des Objekts ermittelt werden. Der Ort des Randes liegt entweder zwischen zwei benachbarten Messbereichen von Sensoren, die jeweils ausschließlich Strahlung von einem der genannten Bereiche empfangen haben, wobei es sich um unterschiedliche Bereiche handelt, oder der Ort des Randes liegt in dem Messbereich eines Sensors, der Strahlung von beiden Bereichen auf den gegenüberliegenden Seiten eines Randes empfangen hat.

Auf diese Weise können auch die Orte von mehreren Rändern gleichzeitig ermittelt werden. Die Ortsauflösung hängt von der Größe der Messbereiche und ihrer örtlichen Verteilung ab. Optional kann die Genauigkeit der Ortsbestimmung gesteigert werden, indem der örtliche Verlauf der Messsignal-Werte der Sensoren ermittelt wird und daraus wiederum der Ort ermittelt wird, an dem sich der Rand befindet. Zum Beispiel kann dabei eine vordefinierte Funktion des Ortes in den ermittelten Verlauf der Messsignal-Werte eingepasst (gefittet) werden. In dem Fall, dass ein Sensor Strahlung von beiden Bereichen auf den gegenüberliegenden Seiten eines Randes empfangen hat, kann dadurch der Ort innerhalb des Messbereichs dieses Sensors genauer ermittelt werden.

Bei der zuvor beschriebenen Vorgehensweise werden Messsignale der Sensoren ausgewertet, die insbesondere zu einem gemeinsamen Zeitpunkt oder innerhalb eines gemeinsamen Zeitintervalls aufgenommen worden sind. Dadurch kann gewährleistet werden, dass sich eine Bewegung des Randes des Objekts relativ zu der Sensorvorrichtung nicht oder nicht wesentlich auf die Ortsbestimmung auswirkt. Anders ausgedrückt kann der Ort des Randes auf diese Weise zu dem gemeinsamen Zeitpunkt oder bezogen auf das gemeinsame Zeitintervall ermittelt werden. Dies schließt nicht aus, dass Messsignale der Sensoren wiederholt zu verschiedenen Zeitpunkten oder in verschiedenen Zeitintervallen oder kontinuierlich fortlaufend mit der Zeit in dieser Weise ausgewertet werden. Dadurch kann der Verlauf des Randes des Objekts ermittelt werden.

Ein Zusammenhang zwischen einem bestimmten Zeitpunkt bzw. einem bestimmten Zeitintervall und einem entsprechenden Ort im Messbereich, an dem sich der zumindest eine Teil des Randes des Objekts befindet, kann bekannt sein. Dies bezieht sich insbesondere auf die Koordinate des Ortes bezüglich der Bewegungsrichtung. Zum Beispiel kann mithilfe von Kalibrierobjekten ein Zusammenhang zwischen einer Veränderung des Empfangssignals und einer entsprechenden Veränderung des Ortes im Messbereich und/oder dem entsprechenden Eintreten eines Randes in den Messbereich oder Austreten eines Randes aus dem Messbereich im Vorfeld erstellt worden sein.

Ein solcher Zusammenhang ermöglicht insbesondere, ein Empfangssignal auszuwerten, sodass ein Zeitpunkt oder ein Zeitintervall bestimmbar ist, zu dem sich der zumindest eine Teil des Randes des Objekts an einem festgelegten entsprechenden Ort befindet. Wenn der festgelegte Ort der Beginn (oder Ende) des Messbereichs in Bewegungsrichtung ist, kann daher beispielsweise der entsprechende Zeitpunkt bzw. das entsprechende Zeitintervall bestimmt aus dem Messsignal ermittelt werden, zu/in dem sich der Teil des Randes des Objekts am Beginn (oder Ende) des Messbereichs befindet.

Ein solcher Zusammenhang ermöglicht alternativ, ein Empfangssignal auszuwerten, sodass ein entsprechender Ort ermittelbar ist, an dem sich der zumindest eine Teil des Randes des Objekts zu/in einem bestimmten Zeitpunkt oder Zeitintervall befindet. Es kann also beispielsweise der entsprechende Ort bestimmt werden, an dem sich der Teil des Randes des Objekts zu einem bestimmten Zeitpunkt oder Zeitintervall befindet.

Derartige Auswertungen sind unter Verwendung der Auswertungseinrichtung möglich.

Insbesondere kann ein bestimmtes oder zu bestimmendes Zeitintervall in folgender Weise mit dem Messbereich zusammenhängen: Ein Hindurchbewegen des Randes des Objekts oder zumindest eines Teil davon durch den Messbereich hindurch - also vom Beginn bis zum Ende des Messbereichs - entspricht einem Zeitbereich des sich im Laufe der Zeit verändernden Empfangssignals. Die zeitliche Veränderung des Empfangssignals muss daher erkennbar sein. Eine solche Beziehung kann zum Beispiel vorab mithilfe der Auswertungseinrichtung ermittelt werden. Allgemeiner formuliert können daher verschiedene Charakteristika des Empfangssignals vorab ermittelt werden und kann jedem konkreten, vorab ermittelten zeitlichen Verlauf des Empfangssignals ein Zeitpunkt eines Eintretens, ein Zeitpunkt eines Austreten und/oder ein Zeitintervall eines Hindurchtretens eines sich in der Bewegungsrichtung erstreckenden Objektbereichs mit einem vorderen Rand und einem hinteren Rand zugeordnet werden.

Mithilfe des Zeitpunkts bzw. des Zeitintervalls und/oder des entsprechenden Orts kann eine Position des zumindest einen Teils des Randes des Objekts bestimmt werden, zum Beispiel eine Position in dem Messbereich der Sensorvorrichtung, und somit in einem bezüglich der Sensorvorrichtung ruhenden Bezugssystem. In diesem Falle kann die Position insbesondere mit dem entsprechenden Ort übereinstimmen. Alternativ oder zusätzlich kann die Position zum Beispiel eine Position in einem sich relativ zur Sensorvorrichtung bewegenden Bezugssystem sein, das zum Beispiel fest mit einem Transportsystem, das das Objekt bewegt, verbunden ist oder ortsfest in Bezug auf das Objekt ist. Ein Ort in Bezug auf das Objekt kann insbesondere durch Erkennung einer Mehrzahl von Rändern aus dem zeitlichen Verlauf des Empfangssignals ermittelt werden. Wenn zum Beispiel zuerst ein Außenrand des Objekts in den Messbereich eintritt und danach ein zweiter Rand eines besonderen Bereichs des Objekts (wie zum Beispiel eines Bereichs mit dem Sicherheitsmerkmal), dann können die Zeitpunkte des Eintretens und/oder Austretens beider Ränder aus dem zeitlichen Verlauf des Eingangssignals ermittelt werden. Aus der Differenz der Zeitpunkte der beiden Ränder kann der Ort des zweiten Randes ermittelt werden, zum Beispiel unter Berücksichtigung der Bewegungsgeschwindigkeit oder normiert auf die Bewegungsgeschwindigkeit.

Mithilfe der Position des zumindest einen Teils des Randes des Objekts kann eine Position und/oder Lage des Objekts bestimmt werden, insbesondere eine Position und/oder Lage des Objekts in dem verwendeten Bezugssystem. Hierzu kann eine bekannte Geometrie des Objekts - zum Beispiel ein vordefiniertes Format des Objekts wie zum Beispiel ein bekanntes Papierformat berücksichtigt werden. Sind zum Beispiel eine Position eines Teils eines ersten Außenrandes des Objekts und eine Position eines Teils eines zweiten Außenrandes des Objekts ermittelt worden, kann zum Beispiel daraus geschlossen werden, dass sich das Objekt zwischen den beiden Außenrändern erstreckt.

Ist mindestens eine Soll-Position zumindest eines Randes des Objekts bekannt, kann mithilfe dieser Position überprüft werden, ob sich ein Sicherheitsmerkmal und/oder ein Teilbereich des Sicherheitsmerkmals und/oder ein Bereich eines lumineszierenden Stoffs an einer Position, an einer zu erwartenden und/oder vorgegebenen Position, an und/oder in dem Objekt befindet. Zur Überprüfung der Position des Sicherheitsmerkmals kann zum Beispiel analog wie oben beschrieben eine Position zumindest eines Teils eines Randes des Sicherheitsmerkmals ermittelt werden.

Unter Berücksichtigung der Soll-Position und der ermittelten Position des Sicherheitsmerkmals kann eine erste Verifikationsentscheidung getroffen werden, ob das Sicherheitsmerkmal an einer zu erwartenden Position an und/oder in dem Objekt angeordnet ist. Diese erste Verifikationsentscheidung kann zum Beispiel mit einer zweiten Verifikationsentscheidung, die insbesondere die Lumineszenzeigenschaften des Sicherheitsmerkmals betreffen kann, zu einer Gesamt-Verifikationsentscheidung kombiniert werden. Zum Beispiel kann die Gesamt-Verifikationsentscheidung negativ sein, also für eine Objektfälschung sprechen, wenn nur die erste oder nur die zweite Verifikationsentscheidung negativ ist. Diese Gesamt-Verifikationsentscheidung besitzt daher eine höhere Zuverlässigkeit als die zweite Verifikationsentscheidung allein.

Der Erfassungszeitraum kann insbesondere ein Hineinbewegen des zumindest einen Teils des Randes des Objekts und/oder des Sicherheitsmerkmals in den Messbereich und ein Bewegen im Messbereich und ein Hinausbewegen des zumindest einen Teils des Randes des Objekts und/oder des Sicherheitsmerkmals aus dem Messbereich umfassen. Eine Auswertung mithilfe der Auswertungseinrichtung kann insbesondere erfolgen, wenn mindestens ein Teil des Erfassungszeitraumes vergangen ist und das zeitabhängige Empfangssignal mindestens zum Teil vorliegt.

Die Strahlungserzeugungseinrichtung weist mindestens eine Strahlungsquelle auf, die elektromagnetische Strahlung abgibt, die eine Emission von Lumineszenz-Strahlung durch einen photolumineszierenden Stoff des Sicherheitsmerkmals anregen kann.

Die Strahlungsquelle kann insbesondere zum Beispiel mindestens einen Laser und/oder mindestens eine LED aufweisen oder mindestens ein Laser und/oder mindestens eine LED sein. Strahlung, die von der Strahlungserzeugungseinrichtung ausgeht, kann insbesondere auf direktem Wege und/oder über ein Fenster der Sensorvorrichtung und/oder über ein reflektierendes und/oder ein spiegelndes Element in den Messbereich der Sensorvorrichtung eingestrahlt werden.

Die elektromagnetische Strahlung, die die Strahlungserzeugungseinrichtung abgibt, kann sich im sichtbaren Spektrumsbereich und/oder in einem nicht-sichtbaren Spektrumsbereich befinden.

Die Strahlungserzeugungseinrichtung kann zum Beispiel eine Optik aufweisen, die zum Beispiel ausgestaltet ist, von der mindestens einen Strahlungsquelle ausgehende Strahlung in den Messbereich zu richten. Eine solche Optik kann insbesondere Einrichtungen zur Umlenkung, zur Reflektion, zur Zerstreuung und/oder zur Begrenzung des Querschnitts von Strahlenbündeln aufweisen. Eine Einrichtung zur Begrenzung des Querschnitts von Strahlenbündeln kann zum Beispiel eine Blende sein. Zum Beispiel kann innerhalb des Messbereichs ein kreisförmiger oder elliptischer Bereich des Messbereichs bestrahlt werden. Alternativ oder zusätzlich kann die Strahlungserzeugungseinrichtung einen Filter aufweisen, der zum Beispiel die Strahlungsintensität der erzeugten Strahlung in einem bestimmten Wellenlängenbereich reduziert. Zum Beispiel kann es sich hierbei um einen Wellenlängenbereich handeln, in dem sich Lumineszenz-Strahlung, die vom photolumineszierenden Stoff des Sicherheitsmerkmals ausgeht, mindestens teilweise befindet. Die Lumineszenz-Strahlung kann, insbesondere, wenn ein photolumineszierender Stoff verwendet wird, der eine Stokes- oder eine Anti-Stokes-Verschiebung bewirkt, mindestens zum Teil nicht im gleichen Wellenlängenbereich liegen wie die anregende Strahlung.

Die Strahlungserzeugungseinrichtung weist eine Steuereinrichtung auf, welche ausgestaltet ist, die Strahlungserzeugungseinrichtung derart zu steuern, dass die von der Strahlungserzeugungseinrichtung erzeugte elektromagnetische Strahlung in zumindest einem Zeitintervall einen zeitlichen Verlauf der Strahlungsflussdichte aufweist, welcher in dem Zeitintervall nicht konstant ist. Die Steuereinrichtung kann insbesondere eine Recheneinheit, zum Beispiel einen Prozessor, aufweisen.

Bei der Empfangseinrichtung kann es sich um jede Einrichtung handeln, die zum Empfang von elektromagnetischer Strahlung geeignet ist. Insbesondere ist die Empfangseinrichtung in der Lage, elektromagnetische Strahlung in Wellenlängenbereichen zu erfassen, in denen von dem Objekt reflektierte Strahlung und/oder von dem Sicherheitsmerkmal ausgehende Lumineszenz-Strahlung enthalten sind. Diese Wellenlängenbereiche können sich mindestens überlappen oder übereinstimmen oder separat voneinander sein.

Insbesondere kann die Empfangseinrichtung eine Photozelle oder eine Anordnung von Photozellen aufweisen. Allgemeiner formuliert kann die Empfangseinrichtung ein oder mehrere Sensorelemente aufweisen, wobei jedes Sensorelement ausgestaltet ist, beim Auftreffen von elektromagnetischer Strahlung in einem spektralen Empfindlichkeitsbereich des Sensorelements ein insbesondere der Intensität (z. B. der Strahlungsflussdichte) oder der spektralen Intensität der auftreffenden Strahlung entsprechendes Sensorsignal zu erzeugen. Insbesondere ist es möglich und wird bevorzugt, dass das Sensorelement und insbesondere jedes der Sensorelemente mit einem Signalverstärker gekoppelt ist, sodass das Sensorsignal von dem Signalverstärker verstärkt wird.

Die Empfangseinrichtung kann eine Optik aufweisen, zum Beispiel eine Optik, die Strahlung auf das eine oder die mehreren Sensorelemente lenkt. Eine solche Optik kann insbesondere Einrichtungen zur Umlenkung, zur Reflektion, zur Zerstreuung und/oder zur Begrenzung des Querschnitts von Strahlenbündeln aufweisen. Eine Einrichtung zur Begrenzung des Querschnitts von Strahlenbündeln kann zum Beispiel eine Blende sein.

Das Sensorsignal, oder im Fall zumindest eines Signalverstärkers das verstärkte Sensorsignal, bilden das Empfangssignal der Empfangseinrichtung, welches auch als Messsignal bezeichnet werden kann.

Die Auswertungseinrichtung kann insbesondere eine Recheneinheit, zum Beispiel einen Prozessor, aufweisen. Insbesondere können die Auswertungseinrichtung und die Steuereinrichtung die gleiche Recheneinheit nutzen und/oder aufweisen. Die Auswertungseinrichtung ist ausgestaltet, festzustellen, ob von dem photolumineszierenden Stoff emittierte Lumineszenz-Strahlung zu dem zeitabhängigen Empfangssignal beigetragen hat. Insbesondere kann die Auswertungseinrichtung derart ausgestaltet sein, dass sie mindestens ein Zeitintervall des Empfangssignals mit einem zu erwartenden Empfangssignal abgleichen kann. Hierzu kann die Auswertungseinrichtung insbesondere nach der Matched-Filter-Technologie arbeiten (deutsch: Optimalfilter).

Wird eine hinreichende Übereinstimmung festgestellt, kann insbesondere entschieden werden, dass von dem photolumineszierenden Stoff emittierte Lumineszenz-Strahlung zu dem zeitabhängigen Empfangssignal beigetragen hat und/oder dass diese Lumineszenz-Strahlung auf ein originales, also nicht gefälschtes Sicherheitsmerkmal hindeutet. Diese Entscheidung kann beim Treffen der oben erwähnten zweiten Verifikationsentscheidung berücksichtigt werden.

Weiterhin ist die Auswertungseinrichtung ausgestaltet, einen Zeitpunkt oder ein Zeitintervall zu bestimmen, in dem sich zumindest ein Teil eines Randes des Objekts an einem entsprechenden Ort im Messbereich befindet. Diese Funktion kann mithilfe einer separaten Auswertungseinheit (zum Beispiel in Form einer Recheneinheit), die Teil der Auswertungseinrichtung ist, erfolgen. Das heißt, dass die Feststellung, ob von dem photolumineszierenden Stoff emittierte Lumineszenz-Strahlung zu dem zeitabhängigen Empfangssignal beigetragen hat, von einer anderen Auswertungseinheit (zum Beispiel in Form einer Recheneinheit) durchgeführt werden kann. Alternativ können beide Funktionen von der gleichen Auswertungseinheit durchgeführt werden.

Die vorgeschlagene Photolumineszenz-Sensorvorrichtung bietet insbesondere die Vorteile, dass zu einer Verifikationsentscheidung, die die Lumineszenzeigenschaften des Sicherheitsmerkmals betrifft, eine weitere Verifikationsentscheidung getroffen werden kann, die insbesondere eine Position des Sicherheitsmerkmals betreffen kann. Alternativ oder zusätzlich kann zum Beispiel eine weitere Verifikationsentscheidung, die Abmessungen des Objekts betrifft, durchgeführt werden.

Eine bekannte Lage und/oder Größe des Objekts kann weiterhin zum Beispiel in einer weiteren Verarbeitung des Objekts nützlich sein. Alternativ oder zusätzlich kann eine Erkennung des Sicherheitsmerkmals verbessert werden, da bereits im Vorfeld aufgrund einer Kenntnis des Zeitpunkts oder des Zeitintervalls, in dem sich zumindest ein Teil eines Randes des Objekts an einem entsprechenden Ort im Messbereich befindet, eine Lage des Sicherheitsmerkmals bekannt sein kann. Zum Beispiel kann die Sensorvorrichtung, sobald das Objekt derart im Messbereich positioniert ist, dass ein Beitrag von Lumineszenz-Strahlung durch die Empfangseinrichtung empfangbar ist, entsprechend angepasst werden, sodass die Zuverlässigkeit der Erkennung erhöht ist - zum Beispiel durch ein zeitlich passendes Aktivieren eines Matched-Filters und/oder durch eine Änderung der erzeugten Strahlung.

Die Sensorvorrichtung kann als integrale Einheit aufgebaut sein und insbesondere die Strahlungserzeugungseinrichtung und/oder die Empfangseinrichtung innerhalb der integralen Einheit aufweisen. Eine solche integrale Einheit kann sich insbesondere dadurch auszeichnen, dass ihre Bestandteile miteinander mechanisch verbunden sind, insbesondere fest verbunden sind. Zum Beispiel kann eine integrale Einheit ein gemeinsames Gehäuse aufweisen oder mehrere Gehäuse, die miteinander mechanisch verbunden sind, insbesondere fest verbunden sind.

Gemäß den Ansprüchen weist die Sensorvorrichtung eine Steuereinrichtung auf, die ausgestaltet ist, die Strahlungserzeugungseinrichtung derart zu steuern, dass die von der Strahlungserzeugungseinrichtung erzeugte elektromagnetische Strahlung in dem Erfassungszeitraum einen zeitlichen Verlauf der Strahlungsflussdichte aufweist, welcher in dem Erfassungszeitraum nicht konstant ist.

Das Verfahren zum Erkennen eines Sicherheitsmerkmals weist daher zusätzlich die Merkmale auf:

- Steuern der Strahlungserzeugungseinrichtung, sodass die von der Strahlungserzeugungseinrichtung erzeugte elektromagnetische Strahlung in dem Erfassungszeitraum einen zeitlichen Verlauf der Strahlungsflussdichte aufweist, welcher in dem Erfassungszeitraum nicht konstant ist.

Es ist dann insbesondere möglich, zumindest einen zeitlichen Bereich des Empfangssignals der Empfangseinrichtung so auszuwerten, dass daraus erhaltene Information über die erzeugte elektromagnetische Strahlung berücksichtigt wird. Dies ist insbesondere dann möglich, wenn das Empfangssignal der Empfangseinrichtung den zeitlichen Verlauf der auf die Empfangseinrichtung einfallenden Strahlung wiedergibt.

Insbesondere wenn bei der Auswertung des Empfangssignals und/oder der Bestimmung eines Zeitpunkts oder eines Zeitintervalls eine statistische Größe genutzt wird (siehe unten), kann es vorteilhaft sein, dass das Empfangssignal, beeinflusst durch die erzeugte Strahlung, einen nicht-konstanten Verlauf aufweist, In diesem Falle kann zum Beispiel die Varianz eines zeitlichen Intervalls des Empfangssignals mit der Varianz eines anderen zeitlichen Intervalls verglichen werden und ein aussagekräftiges Vergleichsresultat erhalten werden. Würde das Empfangssignal hingegen über breite Zeiträume konstante Verläufe aufweisen, könnte ein Vergleich der Varianzen eine geringere Aussagekraft besitzen.

Bei einer Lumineszenz ist es häufig so, dass die Lumineszenz-Strahlung erst erhebliche Zeit nach dem Auftreffen der anregenden Strahlung auf den photolumineszierenden Stoff mit erheblicher Intensität erzeugt wird. Wenn die Intensität der Lumineszenz-Strahlung im Verlauf der Messung angestiegen ist, kann die Lumineszenz-Strahlung das Empfangssignal überwiegend bestimmen. Z.B. bei einem nicht spektral auflösenden Sensorelement bedeutet dies überwiegend, dass die Höhe des Sensorwertes bzw. Messwertes dann überwiegend von der Lumineszenz-Strahlung verursacht wird.

Wenn wie erwähnt ein zeitlicher Verlauf des Empfangssignals bei der Auswertung berücksichtigt wird, kann dies z.B. dadurch geschehen, dass aus dem Verlauf auf das Vorhandensein von anregender Strahlung geschlossen wird. Anhand des zeitlichen Verlaufs, der überwiegend von der anregenden Strahlung beeinflusst wird, kann auch auf ein Intervall im Empfangssignal geschlossen werden, zu dem oder in dem das Empfangssignal überwiegend von der Lumineszenz-Strahlung beeinflusst wird. Ein solches Intervall kann zusätzlich dadurch bestimmt oder genauer bestimmt werden, dass mindestens ein Zeitpunkt oder ein Zeitintervall im zeitlichen Verlauf des Empfangssignal bestimmt wird, in dem sich mindestens ein Teil des Randes des Sicherheitsmerkmals an einem bestimmten Ort im Messbereich befindet, zum Beispiel am Anfang oder am Ende des Messbereichs in Bewegungsrichtung.

Ferner kann der zeitliche Verlauf des Empfangssignals über ein Zeitintervall hinweg betrachtet werden und unter Berücksichtigung eines für das Sicherheitsmerkmal erwarteten zeitlichen Verlaufs ausgewertet werden, ob das zu verifizierende Objekt echt oder gefälscht ist. Diese Möglichkeiten der Berücksichtigung des auf die anregende Strahlung zurückgehenden Beitrags zu dem Empfangssignal bestehen insbesondere dann, wenn die von der Strahlungserzeugungseinrichtung der Sensorvorrichtung erzeugte elektromagnetische Strahlung, die während eines Messbetriebes die anregende Strahlung ist, einen hinsichtlich der Strahlungsflussdichte nicht konstanten zeitlichen Verlauf hat.

Insbesondere kann die Strahlungsflussdichte wiederholt null sein, ansteigen und wieder auf null abfallen. Dabei kann der zeitliche Verlauf zwischen dem Ansteigen der Strahlungsflussdichte von dem Wert null und dem Wiederabfallen auf den Wert null unterschiedlich ausgestaltet sein.

Gemäß einer Ausführungsform kann der zeitliche Verlauf derart sein, dass die Strahlungsflussdichte ausgehend von dem Wert null stetig bis auf ein Maximum ansteigt und dann stetig wieder auf null abfällt, zum Beispiel in Form eines Dreiecks. Es sind jedoch auch komplexere zeitliche Verläufe z.B. mit zwei oder mehr als zwei Maxima der Strahlungsflussdichte zwischen dem ersten Anstieg der Strahlungsflussdichte und dem letzten Abfall innerhalb des Zeitintervalls möglich.

Vorzugsweise ist der zeitliche Verlauf jedoch während des Betriebes einer bestimmten Sensorvorrichtung wiederholt der gleiche Verlauf. Letzteres ermöglicht es, bei gleichen zeitlichen Verläufen der Strahlungsflussdichte der erzeugten Strahlung über jeweils ein Zeitintervall hinweg entsprechende Empfangssignale aufzunehmen.

Allgemein ausgedrückt ermöglicht es die zeitliche Veränderung der Strahlungsflussdichte der erzeugten Strahlung bei der Auswertung des Empfangssignals zu ermitteln, ob das Empfangssignal in dem betrachteten Zeitintervall in erkennbarer Weise auch von Lumineszenz-Strahlung erzeugt wurde.

In einer Ausführungsform der Sensorvorrichtung ist die Auswertungseinrichtung ausgestaltet, bei einer Auswertung des zeitabhängigen Empfangssignals zumindest eine statistische Größe zu bestimmen und den Zeitpunkt oder das Zeitintervall unter Verwendung der zumindest einen statistischen Größe zu bestimmen.

In einer Ausführungsform des Verfahrens zum Erkennen eines Sicherheitsmerkmals wird beim Bestimmen des Zeitpunkts oder des Zeitintervalls eine statistische Größe, die beim Auswerten des zeitabhängigen Empfangssignals bestimmt wird, verwendet.

Die statistische Größe kann zum Beispiel der Median, der Mittelwert, die Spannweite, die mittlere Amplitude, die Standardabweichung oder die Varianz in Bezug auf mindestens ein zeitliches Intervall des Empfangssignals oder in Bezug auf das Empfangssignal insgesamt sein. Insbesondere bilden die oben erwähnten Abtastwerte des zeitlichen Verlaufs der von der Empfangseinrichtung empfangenen elektromagnetischen Strahlung die Basis für die Bestimmung der statistischen Größe. Bei jeder Bestimmung der statistischen Größe gilt dies für ein konkretes Zeitintervall des zeitlichen Verlaufs, d. h. die in dem Zeitintervall liegenden Abtastwerte bilden die Menge der Abtastwerte für die Bildung der statistischen Größe. Insbesondere kann mithilfe eines Werts der statistischen Größe ein Rückschluss darauf gezogen werden, welche Art von empfangener Strahlung innerhalb des Zeitintervalls bzw. innerhalb des Empfangssignals zu dem Empfangssignal beigetragen hat.

So kann zum Beispiel ein Intervall, zu dem im Wesentlichen vom Objekt reflektierte Strahlung beigetragen hat, einen anderen Wert der statistischen Größe aufweisen als ein Intervall, zu dem im Wesentlichen vom Sicherheitsobjekt reflektierte und/oder Lumineszenz-Strahlung beigetragen hat. Das erstgenannte Intervall kann zum Beispiel einen anderen Wert der Varianz aufweisen als das zweite Intervall. Dies gilt auch wenn Intervall, zu dem im Wesentlichen von einem Objektträger reflektierte Strahlung beigetragen hat im Vergleich zu einem Intervall, zu dem im Wesentlichen vom Objekt reflektierte Strahlung beigetragen hat.

Insbesondere kann ein Intervall des Empfangssignals mithilfe eines Werts einer statistischen Größe in seiner zeitlichen Ausdehnung verändert werden, zum Beispiel, indem ein Minimalwert oder Maximalwert der statistischen Größe in Abhängigkeit des Intervalls angestrebt wird. An einer Intervallgrenze kann sich dann insbesondere ein Zeitpunkt oder ein Zeitintervall befinden, in dem sich zumindest ein Teil eines Randes des Objekts an einem entsprechenden Ort im Messbereich befindet, zum Beispiel am Beginn oder am Ende des Messbereichs. Mithilfe des Zeitpunkts oder des Zeitintervalls kann insbesondere eine Position des zumindest einen Teils des Randes des Objekts ermittelt werden

Die Verwendung einer statistischen Größe ist eine einfache Möglichkeit, das Empfangssignal auszuwerten und den Zeitpunkt oder das Zeitintervall zu bestimmen. Die Nutzung einer statistischen Größe zu Auswertungszwecken kann nach einer Ermittlung des Empfangssignals in einem Zeitintervall und/oder bereits während einer solchen Ermittlung erfolgen.

In einer Ausführungsform der Sensorvorrichtung ist die Auswertungseinrichtung ausgestaltet, in dem zeitabhängigen Empfangssignal eine zeitliche Veränderung eines Beitrags der von dem Objekt reflektierten elektromagnetischen Strahlung festzustellen und daraus den Zeitpunkt oder das Zeitintervall zu bestimmen, in dem sich der zumindest eine Teil des Randes des Objekts an dem entsprechenden Ort im Messbereich befindet.

In einer Ausführungsform des Verfahrens zum Erkennen eines Sicherheitsmerkmals weist das Verfahren zusätzlich auf:

- Feststellen einer zeitlichen Veränderung eines Beitrags der von dem Objekt reflektierten elektromagnetischen Strahlung in dem zeitabhängigen Empfangssignal,
- Ermitteln des Zeitpunkts oder des Zeitintervalls, in dem sich der zumindest eine Teil des Randes des Objekts an dem entsprechenden Ort im Messbereich befindet, mithilfe der festgestellten zeitlichen Veränderung des Beitrags der von dem Objekt reflektierten elektromagnetischen Strahlung.

Die zeitliche Veränderung des Beitrags der von dem Objekt reflektierten elektromagnetischen Strahlung kann innerhalb des zeitlichen Verlaufs des Empfangssignals insbesondere durch die Auswertungseinrichtung feststellbar sein. Wenn zum Beispiel innerhalb eines Zeitintervalls im Wesentlichen vom Objektträger reflektierte Strahlung zum Empfangssignal beiträgt, kann sich zum Beispiel ein im Wesentlichen konstanter oder zeitlich im Wesentlichen gleichbleibender bzw. sich wiederholender Verlauf des Empfangssignals ("steady state") in dem Zeitintervall ergeben. Bewegt sich das Objekt in den Messbereich, kann sich hieraus eine feststellbare zeitliche Veränderung im Verlauf des Empfangssignals ergeben. Befindet sich das Objekt im Messbereich, sodass der Messbereich vollständig durch das Objekt abgedeckt ist, kann sich nachfolgend wieder ein im Wesentlichen konstanter oder zeitlich im Wesentlichen gleichbleibender bzw. sich wiederholender Verlauf des Empfangssignals ("steady state") ergeben. Bewegt sich das Sicherheitsmerkmal in den Messbereich, können ähnliche Effekte auftreten.

Die zeitliche Veränderung kann zum Beispiel einen Sprung aufweisen oder eine Veränderung von Minimal- und Maximalwerten und/oder Amplituden und/oder eines gleitenden Mittelwerts des Empfangssignals. Eine Feststellung der zeitlichen Veränderung kann insbesondere mithilfe der Auswertungseinrichtung erfolgen. Insbesondere kann bei der Feststellung der zeitlichen Veränderung eine statistische Größe verwendet werden. So kann zum Beispiel ein vor der zeitlichen Veränderung liegendes Zeitintervall des Empfangssignals einen anderen Wert einer bestimmten statistischen Größe aufweisen als ein nach der zeitlichen Veränderung liegendes Zeitintervall.

Ist die zeitliche Veränderung im zeitlichen Verlauf des Empfangssignals festgestellt, kann ein Zeitpunkt oder ein Zeitintervall bestimmt werden, in dem sich der zumindest eine Teil des Randes des Objekts an dem entsprechenden Ort im Messbereich befindet. Hierzu kann insbesondere ein bekannter Zusammenhang zwischen einem bestimmten Zeitpunkt bzw. einem bestimmten Zeitintervall und einem entsprechenden Ort genutzt werden wie bereits beschrieben. Der entsprechende Ort kann zum Beispiel wie bereits beschrieben am Beginn oder am Ende oder mittig oder an einer beliebigen anderen Position im Messbereich liegen.

In einer Ausführungsform der Sensorvorrichtung ist die Auswertungseinrichtung ausgestaltet, unter Verwendung des Zeitpunkts oder des Zeitintervalls, in dem sich der zumindest eine Teil des Randes des Objekts an dem entsprechenden Ort im Messbereich befindet, eine Position des zumindest einen Teils des Randes des Objekts und/oder des Objekts zu ermitteln.

In einer Ausführungsform des Verfahrens zum Erkennen eines Sicherheitsmerkmals weist das Verfahren zusätzlich auf:

- Ermitteln, unter Verwendung des Zeitpunkts oder Zeitbereichs, in dem sich der zumindest eine Teil des Randes des Objekts an dem entsprechenden Ort im Messbereich befindet, einer Position des zumindest einen Teil des Randes des Objekts und/oder des Objekts.

Mithilfe des Zeitpunkts bzw. des Zeitintervalls und/oder des entsprechenden Orts kann eine Position des zumindest einen Teils des Randes des Objekts bestimmt werden und eine Position und/oder Lage des Objekts wie bereits beschrieben. Zusätzlich kann eine Position und/oder des Sicherheitsmerkmals bestimmt werden. Wie bereits beschrieben kann hiermit eine erste Verifikationsentscheidung getroffen werden. Diese erste Verifikationsentscheidung kann zum Beispiel mit einer zweiten Verifikationsentscheidung, die insbesondere die Lumineszenzeigenschaften des Sicherheitsmerkmals betreffen kann, zu einer gemeinsamen Verifikationsentscheidung kombiniert werden. Diese gemeinsame Verifikationsentscheidung kann eine höhere Zuverlässigkeit besitzen als die zweite Verifikationsentscheidung alleine.

In einer Ausführungsform der Sensorvorrichtung weist die Strahlungserzeugungseinrichtung eine Mehrzahl von Strahlungsquellen auf, wobei die Strahlungsquellen als Feld und/oder Reihe von Strahlungsquellen angeordnet sind, das/die sich mindestens zum Teil quer zur Bewegungsrichtung des Objekts erstreckt, und jeweils ausgestaltet sind, elektromagnetische Strahlung zu erzeugen, wobei die elektromagnetische Strahlung jeweils geeignet ist, eine Emission von Lumineszenz-Strahlung durch den photolumineszierenden Stoff des Sicherheitsmerkmals anzuregen. Daher sind in einer Richtung quer zur Bewegungsrichtung des Objekts mehrere Strahlungsquellen hintereinander angeordnet. Dabei ist zu erwähnen, dass die Strahlungsquellen nicht zwangsläufig derart angeordnet sein müssen, um das Objekt in der Richtung quer zur Bewegungsrichtung über einen großen Bereich zu bestrahlen. Jeder der Strahlungsquellen ist ein Bestrahlungsbereich zugeordnet, der mit elektromagnetischer Strahlung aus der Strahlungsquelle bestrahlt wird. Diese Bestrahlungsbereiche liegen bei der Ausführungsform in der Richtung quer zur Bewegungsrichtung hintereinander, wobei sich jeweils zwei nebeneinanderliegende Strahlungsbereiche optional überlappen können.

Auch das Verfahren zum Erkennen eines Sicherheitsmerkmals kann entsprechend ausgeführt werden.

Mithilfe der Mehrzahl von Strahlungsquellen kann, im Vergleich zu einer Ausführungsform mit nur einer Strahlungsquelle, insbesondere ein größerer Bereich quer zur Bewegungsrichtung mit von der Strahlungsversorgungseinrichtung erzeugter Strahlung abgedeckt werden. Insbesondere kann deshalb der Messbereich insbesondere in Querrichtung größer sein im Vergleich zu einer Ausführungsform mit nur einer Strahlungsquelle. Dies ist vorteilhaft im Hinblick auf ein Objekt, das zum Beispiel einen langen Rand, eine große Querausdehnung, ein großes Sicherheitsmerkmal und/oder mehrere großflächig verteilte Sicherheitsmerkmale aufweist.

Da das Objekt mindestens in einem Teilbereich von mehreren Strahlungsquellen bestrahlt wird, kann die der Strahlung, die auf das Objekt strahlt, insbesondere im Messbereich höher sein. Die Strahlung kann auch bezüglich der Strahlungsflussdichte gleichmäßiger verteilt sein. Hierdurch kann/können insbesondere die reflektierte Strahlung und/oder die Lumineszenz-Strahlung in der Strahlungsflussdichte erhöht oder gleichmäßiger verteilt sein. Dies kann insbesondere in einem qualitativ besseren Empfangssignal resultieren, bei dem zum Beispiel das Signal-Rausch-Verhältnis erhöht ist.

Die erzeugte Strahlung mehrerer Strahlungsquellen kann jeweils den gleichen nicht-konstanten, sich wiederholenden zeitlichen Verlauf aufweisen, zum Beispiel eine Folge von dreieckförmigen Pulsen, die jeweils gefolgt von einer Pause sind. Zwischen den verschiedenen erzeugten Strahlungen kann jeweils ein zeitlicher Versatz liegen.

Mindestens ein Sensor kann vom Objekt reflektierte Strahlung und/oder Lumineszenz-Strahlung empfangen, in der ein zeitlicher Verlauf der Strahlung einer Strahlungsquelle und/oder ein anderer zeitlicher Verlauf der Strahlung einer anderen Strahlungsquelle erkennbar ist/sind. Hierdurch kann bei der Auswertung eine Ortsauflösung in Querrichtung in Bewegungsrichtung erreicht werden. So kann zum Beispiel anhand eines Empfangssignals, das einer bestimmten Strahlungsquelle zuzuordnen ist, auf eine Lage zumindest eines Teils des Objekts zum Beispiel unter dieser bestimmten Strahlungsquelle geschlossen werden. Ist ein Empfangssignal zwei benachbarten Strahlungsquellen zuzuordnen, kann zum Beispiel darauf geschlossen werden, dass zumindest ein Teil des Objekts zum Beispiel zwischen diesen beiden benachbarten Strahlungsquellen liegt.

In einer Ausführungsform der Sensorvorrichtung weist die Empfangseinrichtung eine Mehrzahl von Sensoren auf, die jeweils derart ausgestaltet sind, von dem Objekt ausgehende elektromagnetische Strahlung zu empfangen und jeweils ein entsprechendes zeitabhängiges Empfangssignal zu erzeugen, sodass eine Mehrzahl von Empfangssignalen erzeugt wird.

In einer Ausführungsform des Verfahrens zum Erkennen eines Sicherheitsmerkmals wird die von dem Objekt ausgehende elektromagnetische Strahlung von einer Mehrzahl von Sensoren empfangen, die jeweils ein entsprechendes zeitabhängiges Empfangssignal erzeugen, sodass eine Mehrzahl von Empfangssignalen erzeugt wird.

Insbesondere kann ein Mittelwert von allen oder mehreren der Empfangssignale gebildet und ausgewertet werden. Störungen und Einflüsse eines einzelnen der Empfangssignale wirken sich somit geringer aus. Mehrere Empfangssignale von mehreren Sensoren können daher einzeln und/oder in Gruppen ausgewertet werden. Alternativ oder zusätzlich kann ein Empfangssignal, das sich zum Beispiel deutlich von den anderen Empfangssignalen unterscheidet, obwohl ein solcher Unterschied nicht zu erwarten wäre, identifiziert werden und in der weiteren Auswertung zum Beispiel unberücksichtigt bleiben.

Eine Auswertung mehrerer Empfangssignale ermöglicht insbesondere: Ermittlung eines Randverlaufs eines Objekts; redundante und/oder verbesserte Ermittlung von Zeitpunkten und/oder Zeitintervallen; redundante, verbesserte und/oder ortsaufgelöste Ermittlung von Positionen eines Randes des Objekts und/oder des Objekts und/oder des Sicherheitsmerkmals; ortsaufgelöste Ermittlung einer Lage des Objekts zum Beispiel auf einem Objektträger. Es müssen auch nicht alle Empfangssignale für den Ermittlungszweck verwendet werden.

Unterschiedliche Sensoren, die unterschiedliche (unter Umständen auch einander überlappende) Bereiche des Objekts erfassen, ermöglichen je nach Anordnung der erfassten Bereiche zum Beispiel bei der Auswertung eine örtliche Auflösung - sowohl in der Bewegungsrichtung des Objekts als auch in der Querrichtung dazu.

In einer Ausführungsform der Sensorvorrichtung sind mehrere der Sensoren über einen Bereich verteilt angeordnet, der sich quer zur Bewegungsrichtung des Objekts erstreckt. Insbesondere erzeugt jeder der Sensoren ein Empfangssignal, sodass eine Mehrzahl von Empfangssignalen erzeugt wird. Die Messbereiche der Sensoren sind verschieden. Benachbarte Messbereiche können voneinander beabstandet sein, aneinander angrenzen oder einander überlappen. Der Messbereich der Sensorvorrichtung wird durch die Mehrzahl der Messbereiche der Sensoren gebildet.

Auch das Verfahren zum Erkennen eines Sicherheitsmerkmals kann entsprechend ausgeführt werden, d.h. es können mehrere Sensoren verwendet werden, die über einen Bereich verteilt angeordnet sind, der sich quer zur Bewegungsrichtung des Objekts erstreckt.

Dadurch wird eine örtliche Auflösung quer zur Bewegungsrichtung des Objekts ermöglicht. Insbesondere ist dadurch der Verlauf von quer oder schräg zur Bewegungsrichtung verlaufenden Rändern ermittelbar, die nicht vollständig parallel zur Bewegungsrichtung verlaufen, und/oder eine schräge Lage des Objekts ermittelbar.

Alternativ oder zusätzlich ist dadurch zumindest eine Position eines Randes des Objekts in einer Richtung quer zur Bewegungsrichtung ermittelbar, wobei der Rand oder zumindest ein Abschnitt des Randes entlang der oder schräg zur Bewegungsrichtung verläuft. Ein solcher Rand verläuft daher nicht vollständig senkrecht zur Bewegungsrichtung. Insbesondere sind dadurch Positionen von Längsrändern des Objekts ermittelbar. Unter "längs" wird verstanden, dass sich der Rand entlang der Bewegungsrichtung erstreckt. Da das Empfangssignal zeitabhängig ist, d. h. einen zeitlichen Verlauf wiedergibt, kann die Ermittlung für einen einzigen Erfassungszeitpunkt oder für eine Mehrzahl von Erfassungszeitpunkten durchgeführt werden. Es ist daher möglich, den zeitlichen Verlauf der Position zu ermitteln, d.h. zu ermitteln, wo der Rand die Erfassungsbereiche der Mehrzahl von Sensoren durchläuft.

Insbesondere kann die Auswertungseinrichtung ausgestaltet sein, die Position des Randes oder des Randabschnitts unter Verwendung der Mehrzahl von Empfangssignalen zu bestimmen. Dementsprechend kann das Verfahren zusätzlich aufweisen: Bestimmung einer Position eines Randes des Objekts oder eines Teils des Randes in dem Messbereich der Sensorvorrichtung unter Verwendung der Mehrzahl von Empfangssignalen.

In vielen Fällen kann das Objekt derart durch den Messbereich der Sensorvorrichtung bewegt werden, dass zumindest einer der Sensoren keine von dem Objekt reflektierte oder emittierte Strahlung empfängt, während zumindest ein anderer der Sensoren solche von dem Objekt reflektierte oder emittierte Strahlung empfängt.

Es wird daher Folgendes vorgeschlagen: Die Sensorvorrichtung weist eine Mehrzahl von Sensoren auf, deren Messbereiche in einer Richtung quer zur Bewegungsrichtung des Objekts verteilt angeordnet sind. Jeder der Sensoren erzeugt während des Betriebes der Sensorvorrichtung ein Sensorsignal als Empfangssignal, sodass jedes der Sensorsignale einem der Messbereiche und somit einem Ort im Gesamt-Messbereich der Sensorvorrichtung zugeordnet ist. Insbesondere können die Koordinaten des Ortes von jedem der Messbereiche als die Koordinaten eines eindeutig ermittelbaren Punktes in dem jeweiligen Messbereich definiert sein. Bei Anwesenheit eines Objekts in dem Gesamt-Messbereich werden die Sensorsignale daher in Abhängigkeit des Ortes oder anders ausgedrückt als Funktion des Ortes ermittelt. Zumindest eines der Sensorsignale entspricht Strahlung, die vom Objekt ausgeht. Je nach Lage des Randes des Objekts kann zumindest ein anderes der Sensorsignale Strahlung entsprechen, die keine vom Objekt ausgehenden Anteile hat. Aus der Funktion der Sensorsignale in Abhängigkeit des Ortes wird ein Ort ermittelt, der der Position des Randes des Objekts entspricht. Der ermittelte Ort kann, aber muss nicht einer der Orte der Messbereiche sein. Insbesondere kann der ermittelte Ort zwischen Messbereichen liegen oder ein nicht ausgezeichneter Ort (zum Beispiel nicht der Mittelpunkt) in einem der Messbereiche sein.

Bei der Ermittlung des Ortes aus der Funktion der Sensorsignale wird berücksichtigt, dass einerseits Strahlung, die von Bereichen um den Rand des Objekts ausgehend und/oder den Rand des Objekts passierend von der Sensorvorrichtung erfasst wird, und andererseits Strahlung, die von der Oberfläche des Objekts ausgehend von der Sensorvorrichtung erfasst wird, zu unterschiedlichen Sensorsignalen führen.

Ein Sensor mit einem Messbereich, der außerhalb des Randes des Objekts liegt, und ein Sensor mit einem Messbereich, der teilweise außerhalb des Randes des Objektes liegt, liefern daher ein anderes Sensorsignal als ein Sensor mit einem Messbereich, der vollständig auf der Oberfläche des Objekts liegt. Ein Ort eines Randes, der kein Außenrand des Objekts ist, kann in gleicher Art ermittelt werden. In diesem Fall wird berücksichtigt, dass von den verschiedenen Bereichen der Oberfläche des Objekts, die durch den Rand gegeneinander abgegrenzt sind, unterschiedliche Strahlung ausgeht und von der Sensorvorrichtung erfasst wird.

Insbesondere können die Sensorsignale der verschiedenen Sensoren jeweils zeitabhängige Sensorsignale sein, die zum Beispiel während einer Relativbewegung des Objekts und der Sensorvorrichtung aufgenommen werden. In diesem Fall kann für eine Mehrzahl von Zeitpunkten und/oder kurzen Zeitintervallen der Relativbewegung jeweils ein Ort eines Objekt-Randes aus der ortsabhängigen Funktion der Sensorsignale ermittelt werden.

Insbesondere kann die Sensorvorrichtung für die Zwecke der Bestimmung des Ortes von Rändern kalibriert werden, indem für zumindest ein Kalibrierobjekt Sensorsignale aufgenommen werden und zusätzlich auf andere Weise der Ort des Randes des Objekts ermittelt wird. Der auf andere Weise ermittelte Referenzwert kann nun zur Kalibrierung der Sensorvorrichtung verwendet werden. Anders ausgedrückt kann die Ermittlung des Ortes aus der Funktion der Sensorsignale so angepasst werden, dass ihr Ergebnis dem Referenzwert entspricht.

Die Sensorvorrichtung kann ausgestaltet sein, einen Rand eines Objekts wie zuvor beschrieben zu ermitteln. Ferner kann ein Verfahren zum Betreiben der Sensorvorrichtung und/oder ein Verfahren zur Erkennung eines Randes entsprechend ausgestaltet sein.

Zum Beispiel können Sensorsignale von einer ersten Teilanzahl von Sensoren und einer zweiten Teilanzahl von Sensoren miteinander verglichen werden. Die Teilanzahl kann jeweils eins oder mehr als eins betragen. Ein solcher Vergleich kann zum Beispiel ergeben, dass die Sensorsignale von der ersten Teilanzahl von Sensoren auf reflektierte Strahlung hindeuten, die von einem Objektträger stammt, auf oder an dem sich das Objekt befindet, auf Strahlung hindeuten, die aus dem Hintergrund am Rand des Objekts vorbei auf die Sensorvorrichtung eingestrahlt wird, und/oder auf Strahlung hindeuten, die von der Sensorvorrichtung selbst erzeugt wurde und die Sensorvorrichtung nicht verlässt. Dagegen ergibt der Vergleich, dass die Sensorsignale von der zweiten Teilanzahl von Sensoren auf Strahlung hindeuten, die von dem Objekt selbst stammt. Anhand der bekannten Orte der Messbereiche der ersten Teilanzahl von Sensoren und der zweiten Teilanzahl von Sensoren kann auf eine Position insbesondere eines Längsrandes geschlossen werden.

Bei einer Ausgestaltung der Rand-Positionsbestimmung kann ein erster Sensor ein Sensorsignal erzeugen, aus dem durch Auswertung ermittelbar ist, dass sich (insbesondere zu einem bestimmten Erfassungszeitpunkt) in dem Messbereich des Sensors ein Teil des Randes des Objekts befindet. Dies ist insbesondere dann der Fall, wenn ein weiterer Sensor ein Sensorsignal erzeugt, das auf einen vollständig außerhalb des Randes liegenden Messbereich hindeutet, und noch ein weiterer Sensor ein Sensorsignal erzeugt, das auf einen vollständig innerhalb des Randes liegenden Messbereich hindeutet. Zum Beispiel liegt in diesem Fall ein Signalwert des Sensorsignals des ersten Sensors zwischen den Signalwerten der Sensorsignale der weiteren Sensoren.

Das Sensorsignal des ersten Sensors hängt von der Position des Randes im Erfassungsbereich des jeweiligen Sensors ab. Insbesondere kann die Signalstärke des Sensorsignals umso höher sein, je höher der Grad ist, zu dem das Objekt den Erfassungsbereich des Sensors ausfüllt. Wenn der zeitliche Verlauf des Sensorsignals betrachtet wird, kann das Sensorsignal höhere Amplituden und/oder eine höhere Varianz und/oder einen höheren Mittelwert aufweisen, wenn das Objekt den Erfassungsbereich des mindestens einen Sensors nahezu vollflächig ausfüllt, und im Verhältnis dazu geringere Amplituden und/oder eine geringere Varianz und/oder einen geringeren Mittelwert, wenn das Objekt diesen Erfassungsbereich nur zu einem geringen Teil ausfüllt.

Dieses Beispiel verdeutlicht, dass in Kenntnis und unter Berücksichtigung des Sensorsignals auf den Ort eines Randes des Objekts, insbesondere mindestens eines Längsrandes des Objekts, im Erfassungsbereich des mindestens einen Sensors geschlossen werden kann. Der Begriff Ort bezieht sich wie in den vorangegangenen Absätzen auf die Richtung quer zur Bewegungsrichtung. In dieser Querrichtung sind die Messbereiche der verschiedenen Sensoren verteilt.

Eine Bestimmung eines Ortes (d.h. einer Position) des Randes des Objekts und/oder einer Position des Objekts in dem Messbereich der Sensorvorrichtung unter Verwendung einer Mehrzahl von Empfangssignalen ist auch dann möglich, wenn keine Erkennung eines Sicherheitsmerkmals mit photolumineszierenden Stoff stattfindet und/oder kein Zeitpunkt oder kein Zeitintervall bestimmt wird, zu/in dem sich zumindest ein Teil eines Randes des Objekts an einem entsprechenden Ort im Messbereich befindet.

Daher wird außerdem vorgeschlagen: Eine Sensorvorrichtung zum Untersuchen eines sich relativ zu der Sensorvorrichtung bewegenden Objekts in einem Messbereich der Sensorvorrichtung, wobei die Sensorvorrichtung aufweist:

- eine Strahlungserzeugungseinrichtung, die ausgestaltet ist, elektromagnetische Strahlung zu erzeugen,
- eine Empfangseinrichtung (19), die ausgestaltet ist, von dem sich relativ zu der Sensorvorrichtung bewegenden Objekt ausgehende elektromagnetische Strahlung über einen Erfassungszeitraum hinweg zu empfangen und ein entsprechendes zeitabhängiges Empfangssignal (ES) zu erzeugen, wobei die von dem Objekt ausgehende elektromagnetische Strahlung - je nach Relativposition des Objekts und der Empfangseinrichtung (19) und je nach der elektromagnetischen Strahlung, die von der Strahlungserzeugungseinrichtung erzeugt wird und auf das Objekt auftrifft - die von dem Stoff emittierte Strahlung und/oder von dem Objekt reflektierte Strahlung, die von der Strahlungserzeugungseinrichtung erzeugt wurde, aufweist,
- eine Auswertungseinrichtung, die ausgestaltet ist, das zeitabhängige Empfangssignal auszuwerten,

wobei die Auswertungseinrichtung ausgestaltet ist, eine Position zumindest eines Teils des Randes des Objekts und/oder eine Position des Objekts in dem Messbereich der Sensorvorrichtung unter Verwendung der Mehrzahl von Empfangssignalen zu bestimmen.

Außerdem wird ein entsprechendes Verfahren zum Untersuchen eines sich relativ zu der Sensorvorrichtung bewegenden Objekts in einem Messbereich der Sensorvorrichtung vorgeschlagen. Ausgestaltungen des Verfahrens und der Sensorvorrichtung ergeben sich aus der vorhergehenden und folgenden Beschreibung, wobei allerdings eine Erkennung eines photolumineszierenden Sicherheitsmerkmals und/oder eine Bestimmung eines Zeitpunkts oder eines Zeitintervalls, in dem sich zumindest ein Teil eines Randes des Objekts an einem entsprechenden Ort im Messbereich befindet, nicht stattfindet.

Insbesondere kann der Rand des Objekts ein solcher Rand des Objekts sein, der sich längs entlang der Bewegungsrichtung des Objekts erstreckt.

Ausführungsbeispiele der Erfindung werden nun unter Bezugnahme auf die beigefügte Zeichnung beschrieben. Die einzelnen Figuren der Zeichnung zeigen:

Fig. 1 schematisch eine Anordnung mit einer Sensorvorrichtung und einer Transporteinrichtung, von der ein Objekt und ein Sicherheitsmerkmal des Objekts an der Sensorvorrichtung vorbei transportiert werden kann,

Fig. 2 schematisch eine Anordnung mit einer Sensorvorrichtung und einer Transporteinrichtung, von der ein Objekt und ein Sicherheitsmerkmal des Objekts an der Sensorvorrichtung vorbei transportiert werden kann,

Fig. 3 schematisch eine Ansicht der in Fig. 1 dargestellten Sensorvorrichtung und zwar bezogen auf Fig. 1 von links,

Fig. 4 schematisch eine Ansicht der in Fig. 1 dargestellten Sensorvorrichtung und zwar bezogen auf Fig. 1 von oben,

Fig. 5 ein Intensitäts-Zeitdiagramm zur schematischen Darstellung einer zeitlichen Folge von Anregungssignalen,

Fig. 6a ein Intensitäts-Zeitdiagramm zur schematischen Darstellung eines zeitlichen Verlaufs eines Empfangssignals über einen Erfassungszeitraum hinweg,

Fig. 6b ein weiteres Intensitäts-Zeitdiagramm zur schematischen Darstellung eines zeitlichen Verlaufs eines Empfangssignals über einen Erfassungszeitraum hinweg,

Fig. 6c ein Intensitäts-Zeitdiagramm zur schematischen Darstellung des in Fig. 6a dargestellten zeitlichen Verlaufs des Empfangssignals über einen Erfassungszeitraum hinweg mit beispielhaften Werten von Übergangszeitpunkten,

Fig. 7 ein Flussdiagramm zur Erläuterung eines Ausführungsbeispiels eines Verfahrens zum Erkennen eines Sicherheitsmerkmals eines sich relativ zu der Sensorvorrichtung bewegenden Objekts,

Fig. 8 schematisch eine Anordnung einer Mehrzahl von Sensoren, die zum Beispiel Teil der Entwicklung Fig. 1 oder Fig. 2 dargestellten Sensorvorrichtung ist und deren Messbereiche quer zu einer Bewegungsrichtung eines Objekts verteilt sind,

Fig. 9 Sensorsignale der in Fig. 8 dargestellten Anordnung von Sensoren, die eine Funktion des Ortes der Messbereiche sind und aus denen der Ort Beziehung weise die Position eines Randes des Objekts ermittelbar ist.

In verschiedenen Ausführungsbeispielen werden gleiche Bezugszeichen für funktionsgleiche Einrichtungen und Elemente verwendet

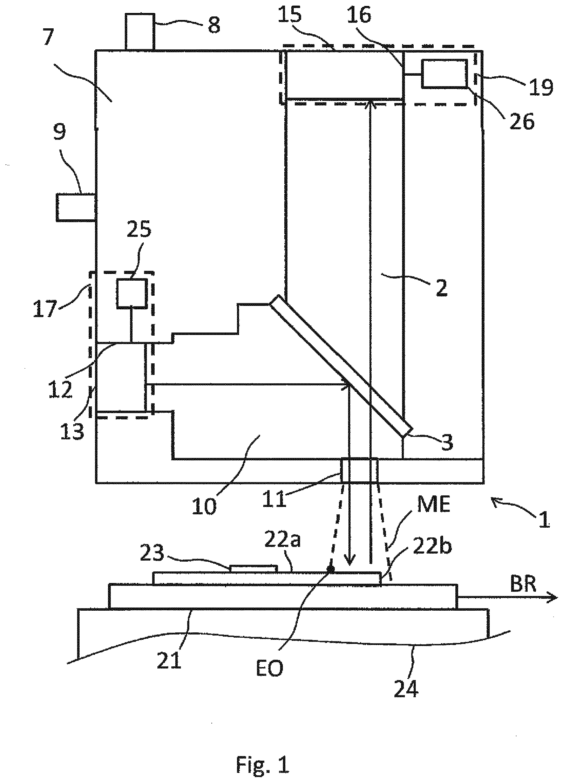

Die in Fig. 1 gezeigte Anordnung weist eine Sensorvorrichtung 1 auf und ein Objekt 22a mit einem Sicherheitsmerkmal 23. Das Objekt weist einen Objektrand 22b auf. In dem Ausführungsbeispiel ist das Sicherheitsmerkmal 23 auf einer Oberfläche des Objekts 22a angeordnet. Das Sicherheitsmerkmal kann jedoch alternativ oder zusätzlich in das Objekt 22a integriert sein. Das Sicherheitsmerkmal 23 weist zumindest einen Stoff auf, der bei Anregung durch geeignete Strahlung Lumineszenz-Strahlung abstrahlt. Dabei kann die Lumineszenz-Strahlung in einem anderen Wellenlängenbereich liegen als die anregende Strahlung. Alternativ oder zusätzlich kann die Lumineszenz-Strahlung die gleiche Wellenlänge aufweisen wie die anregende Strahlung.

Das Objekt 22a kann zum Beispiel eine behördlich ausgestellte Urkunde, eine Chipkarte oder Transponderkarte, ein Personalausweis, eine andere Identitätkarte oder ein Reisepass sein, um nur einige Beispiele zu nennen.

In dem in Fig. 1 dargestellten Ausführungsbeispiel befindet sich das Objekt 22a an einem Objektträger 21. Ein solcher Objektträger 21 kann jedoch in einem anderen Ausführungsbeispiel entfallen. Ferner ist in Fig. 1 schematisch eine Transporteinrichtung 24 dargestellt, die das Objekt 22a an einem Austrittsfenster 11 der Sensorvorrichtung 1 vorbei transportiert, während Strahlung vom Objekt 22a von der Sensorvorrichtung 1 empfangen wird. Auch eine derartige Transporteinrichtung kann entfallen. Das Objekt 22a kann auf andere Art und Weise bewegt werden. Alternativ oder zusätzlich kann die Sensorvorrichtung 1 oder ein Teil der Sensorvorrichtung 1 relativ zum Objekt 22a bewegt werden.

Die Sensorvorrichtung 1 besitzt einen Messbereich ME. Durch den Messbereich ME bewegt sich das Objekt 22a mit dem Sicherheitsmerkmal 23 und im vorliegenden Ausführungsbeispiel auch ein Teil des Objektträgers 21. Der Messbereich ME entspricht dem räumlichen Bereich unterhalb des Austrittsfensters 11. Ausgehend von dem Austrittsfenster 11 werden in dem Messbereich ME vorhandene Gegenstände bestrahlt und von den bestrahlten Gegenständen reflektierte und emittierte Strahlung gelangt durch das Austrittsfenster zurück in die Sensorvorrichtung 1 und trifft dort auf Sensorelemente 15. Gegenstände in dem Messbereich werden durch eine Strahlungsquelle 13 beschienen.

Wenn hier von unterhalb, oberhalb, rechts und links die Rede ist, bezieht sich dies auf die Darstellung in Fig. 1. In der Praxis können Objekt und Sensorvorrichtung anders relativ zueinander angeordnet sein.

Ein entsprechender Ort EO befindet sich am Anfang des Messbereichs ME in einer Bewegungsrichtung BR des Objekts 22a. Eine Auswertungseinrichtung 26 ist insbesondere ausgestaltet, einen Zeitpunkt oder ein Zeitintervall bestimmen, in dem sich der Objektrand 22b an dem entsprechenden Ort EO befindet.

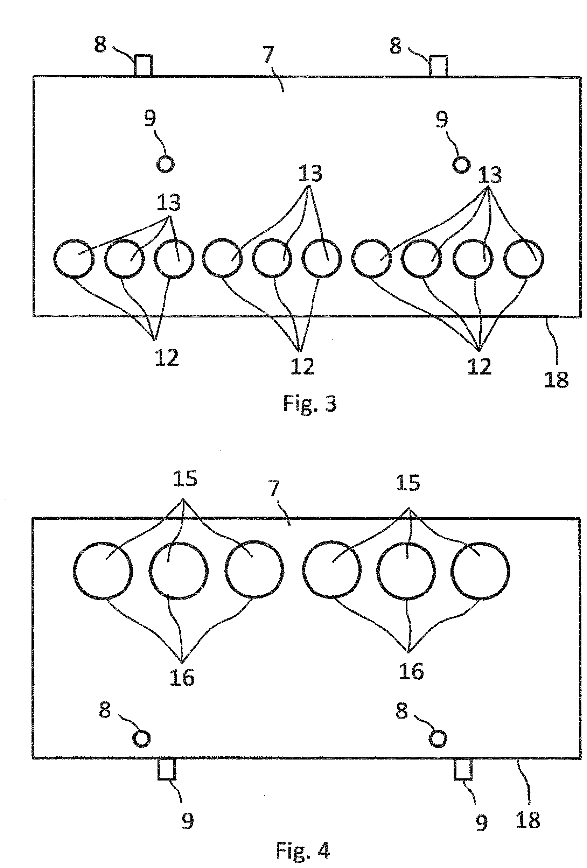

Die Sensorvorrichtung 1 weist ein Gehäuse 7 mit einem Gehäuseinnenraum 10 auf, der es elektromagnetischer Strahlung erlaubt, durch ihn hindurchzutreten. Die Sensorvorrichtung 1 weist eine Mehrzahl von Eintrittsöffnungen 12 auf. Wie Fig. 3 zeigt, besitzt die Sensorvorrichtung 1 in diesem speziellen Ausführungsbeispiel insgesamt zehn in einer Reihe nebeneinander angeordneter Eintrittsöffnungen 12. Insbesondere kann jeder dieser Eintrittsöffnungen 12 eine Strahlungsquelle 13 zugeordnet sein. Das Ausführungsbeispiel der Sensorvorrichtung 1, das in Fig. 1 dargestellt ist, besitzt zehn Strahlungsquellen 13 (Fig. 3) und sechs Sensorelemente 15 (Fig. 4), die sich jeweils nebeneinander in Tiefenrichtung der Fig. 1 erstrecken.

Die Strahlungsquellen 13 sind Teil einer Strahlungserzeugungseinrichtung 17, die durch eine aus unterbrochenen Linien bestehende Umrandung angedeutet ist. Sie weist eine Steuereinrichtung 25 auf. Die Strahlungserzeugungseinrichtung 17 ist in das Gehäuse 7 integriert. Alternativ kann/können die Strahlungserzeugungseinrichtung 17 oder Bestandteile der Strahlungserzeugungseinrichtung 17 als separates Modul/separate Teile oder Module angeordnet sein, die zum Beispiel mit dem Gehäuse 17 verbunden sein können oder separat vorliegen können. Insbesondere können Bestandteile der Strahlungserzeugungseinrichtung 17, insbesondere die Steuereinrichtung 25, eine Recheneinheit, zum Beispiel einen Prozessor aufweisen. Zum Beispiel kann die Steuereinrichtung 25 als Computer ausgestaltet sein oder einen Computer aufweisen.

Die Sensorelemente 15 sind Teil einer Empfangseinrichtung 19, die durch eine aus unterbrochenen Linien bestehende Umrandung angedeutet ist. Sie weist die Auswertungseinrichtung 26 auf. Die Auswertungseinrichtung 26 empfängt die von den einzelnen Sensorelementen 15 erzeugten Messsignale zur Auswertung. Die Empfangseinrichtung 19 ist in das Gehäuse 7 integriert. Alternativ kann/können die Empfangseinrichtung 19 oder Bestandteile der Empfangseinrichtung 19 als separates Modul/separate Teile oder Module angeordnet sein, die zum Beispiel mit dem Gehäuse 7 verbunden sein können. Insbesondere können Bestandteile der Empfangseinrichtung 19, insbesondere die Auswertungseinrichtung 26, eine Recheneinheit, zum Beispiel einen Prozessor aufweisen. Zum Beispiel kann die Auswertungseinrichtung 26 als Computer ausgestaltet sein oder einen Computer aufweisen. Die Steuereinrichtung 25 und die Auswertungseinrichtung 26 können als ein Computer oder als mehrere Computer ausgeführt sein, die insbesondere miteinander verbunden sein können.

Es ist möglich, dass die Strahlungserzeugungseinrichtung 17 und/oder die Empfangseinrichtung 19 nicht fest mit der Sensorvorrichtung 1 verbunden sind bzw. in ihr enthalten sind, sondern z.B. in einem Abstand zueinander angeordnet sind und keine Materialbrücke direkt zwischen den verschiedenen Modulen vorhanden ist.

Bevorzugt wird daher, dass im Fall separater Module die Strahlungserzeugungseinrichtung 17 und die Empfangseinrichtung 19 fest mit der Sensorvorrichtung verbunden sind. Bei Betrieb der Strahlungsquellen 13, die z. B. Leuchtdioden sind oder eine Mehrzahl von Leuchtdioden aufweisen, tritt wie schematisch durch einen nach rechts gerichteten Pfeil in Fig. 1 dargestellt ist, von den Strahlungsquellen 13 erzeugte Strahlung durch die Eintrittsöffnungen 12 in den Gehäuseinnenraum 10 ein.

Das in Fig. 1 dargestellte Ausführungsbeispiel einer Sensorvorrichtung 1 kann an der Eintrittsöffnung 12 eine Eintritts-Optik (nicht dargestellt) aufweisen, bei der es sich z.B. um eine optische Linse oder Anordnung von Linsen handeln kann, um die eintretende elektromagnetische Strahlung zu fokussieren und/oder zu zerstreuen. Alternativ oder zusätzlich zu der Eintritts-Optik kann sich an der Eintrittsöffnung 12 einen Filter (nicht dargestellt) befinden, der die in den Gehäuseinnenraum 10 eintretende Strahlung filtert. Z. B. kann auf diese Weise ein Strahlungsanteil, der nahe bei der Wellenlänge der Lumineszenz-Strahlung liegt, geschwächt und somit ausgefiltert werden.

In dem Gehäuseinnenraum 10 befindet sich ein teilweise durchlässiger Reflektor 3, der auch als teilweise durchlässiger Spiegel bezeichnet werden kann. Er ist in dem Ausführungsbeispiel unter einem Winkel von 45° zu der Hauptachse der Eintrittsöffnung 12 angeordnet. An seiner in Fig. 1 nach unten weisenden Oberfläche wird daher beim Betrieb die durch die Eintrittsöffnung 12 in den Gehäuseinnenraum 10 eintretende Strahlung mit einem Anteil an der Gesamt-Intensität der Strahlung nach unten durch das Austrittsfenster 11, welches sich im Gehäuse 7 unten befindet, in den Messbereich ME abgelenkt.

Der Gehäuseinnenraum 10 weist eine Aussparung 2 auf, die sich in der Darstellung der Fig. 1 von dem Reflektor 3 nach oben erstreckt und bis zu den Sensorelementen 15 reicht.

Alternativ oder zusätzlich kann/können sich insbesondere in der Aussparung 2 ein Filter und/oder eine Filter-Anordnung (nicht dargestellt) mit einem oder mehreren Filtern befinden. Alternativ oder zusätzlich kann/können der Filter oder die Filter-Anordnung ein Teil/Teile der Empfangseinrichtung 19 sein. Dies erlaubt es, das Spektrum der durch die Aussparung 2 verlaufenden Strahlung zu verändern.

Alternativ oder zusätzlich kann sich insbesondere in der Aussparung 2 eine Empfangs-Optik (nicht dargestellt) befinden. Alternativ oder zusätzlich kann eine solche Empfangs-Optik ein Teil der Empfangseinrichtung 19 sein. Mithilfe einer Empfangs-Optik kann zum Beispiel ein von der Empfangseinrichtung 19 zu empfangenes Strahlenbündel auf das Sensorelement 15 jeweils fokussiert werden.

Wie in Fig. 1 schematisch darstellt ist, trifft die durch die Aussparung 2 verlaufende Strahlung, die insbesondere vom Objektträger 21 und/oder vom Objekt 22a und/oder vom Sicherheitsmerkmal 23 und/oder von der Umgebung ausgehen kann, auf zumindest ein Sensorelement 15 der Empfangseinrichtung 19. Dies ist in Fig. 1 durch einen nach oben weisenden Pfeil angedeutet.

In der Darstellung der Fig. 1 liegt die Reihe der Eintrittsöffnungen 12 hintereinander in Tiefenrichtung. Dementsprechend ist in diesem Ausführungsbeispiel das Austrittsfenster 11 so groß in der Tiefenrichtung ausgeführt, dass der überwiegende Anteil der durch die Mehrzahl von Eintrittsöffnungen 12 eintretenden Strahlung nach Reflexion an dem Reflektor 3 nach unten austreten kann. Die Länge des Austrittsfensters 11 in der Transportrichtung (der horizontalen Richtung in Fig. 1, entsprechend der Bewegungsrichtung BR) ist in dem Ausführungsbeispiel erheblich kürzer. Der Messbereich ME weist daher bezogen auf Fig. 1 eine kleine Länge in Transportrichtung bei sehr viel größerer Breite in der Richtung senkrecht zur Figurenebene auf.

Bei diesem Ausführungsbeispiel weist die Empfangseinrichtung 19 eine Mehrzahl der Sensorelemente 15 auf, wobei jedes Sensorelement 15 einer Sensoröffnung 16 zugeordnet ist. Dabei liegt die Mehrzahl von Sensoröffnungen 16 in einer Reihe hintereinander entlang der Senkrechten zur Figurenebene der Fig. 1.

Wie bei dem Ausführungsbeispiel dargestellt, unterscheidet sich die Anzahl der Eintrittsöffnungen 12 von der Anzahl der Sensoröffnungen 16. Jedoch ist die Länge der Reihe von Eintrittsöffnungen 12 etwa gleich der Länge der Reihe der Sensoröffnungen 16, wobei "Länge" in diesem Fall in der Richtung senkrecht zur Figurenebene der Fig. 1 zu messen ist. Aufgrund der unterschiedlichen Anzahl von Strahlungsquellen 13 bzw. Sensorelementen 15 erfasst jedes Sensorelement 15 Strahlung, die von einer Mehrzahl der Strahlungsquellen 13 erzeugt wurde bzw. durch Anregung mittels der Strahlung mehrerer Strahlungsquellen 13 aufgrund von Lumineszenz erzeugt wurde.

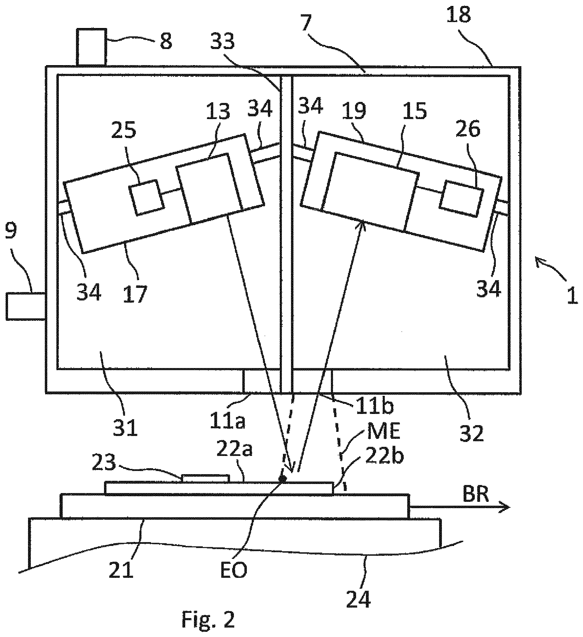

Die Eintrittsöffnungen 12 und die Sensoröffnungen 16 in den Figuren 2 und 3 sind kreisförmig dargestellt. Insbesondere kann der Gehäuseinnenraum 10 daher im Bereich dieser Öffnungen zylindrisch sein, insbesondere jeweils zylindrisch sein. Die Erfindung ist jedoch nicht auf diese Form beschränkt. Insbesondere kann/können der Bereich der Eintrittsöffnungen 12 und/oder der Bereich der Sensoröffnungen 16 in beliebiger Weise geformt sein. Insbesondere ist es auch denkbar, dass keine separaten Eintrittsöffnungen 12 und/oder Sensoröffnungen 15 vorhanden sind, sondern dass es sich um einen entlang der Reihe der Strahlungsquellen 13 und/oder entlang der Reihe der Sensorelemente 15 ganz oder teilweise durchgehenden Öffnungsbereich handelt.

Separate Öffnungen haben aber den Vorteil, dass die von den einzelnen Strahlungsquellen 13 erzeugten Strahlungsbündel jedenfalls zumindest von einem Teil der anderen Strahlungsbündel unterschieden werden können. Z. B. detektiert ein einzelnes Sensorelement 15 lediglich im Wesentlichen Strahlungsbündel von drei Strahlungsquellen bzw. der daraus resultierenden reflektierten Strahlung bzw. Lumineszenz-Strahlung. Es kann somit eine örtliche Auflösung bei der Erfassung der Strahlung durch die Sensorelemente 15 stattfinden.

Ferner ist es möglich, dass nicht nur jeweils eine Reihe von Strahlungsquellen 13 und/oder Sensorelementen 15 vorhanden ist, sondern zum Beispiel eine Mehrzahl von Reihen, sodass eine zweidimensionale örtliche Auflösung stattfinden kann.

In der in den Fig. 1, 3 und 4 dargestellten Ausführungsform (und auch in der in Fig. 2 dargestellten Ausführungsform, die weiter unten beschrieben wird) sind zum Zwecke einer Ausrichtung des Gehäuses 7 erste Ausrichtungsstifte 8 und zweite Ausrichtungsstifte 9 vorgesehen. Hierdurch kann das Gehäuse 7 zum Beispiel in einem Gestell oder einem Rahmen fixiert werden, insbesondere, um eine genaue Positionierung der Sensorvorrichtung 1 zu ermöglichen, zum Beispiel relativ zu der Transporteinrichtung 24. Alternativ oder zusätzlich können die ersten Ausrichtungsstifte 8 und/oder die zweiten Ausrichtungsstifte 9 dazu dienen, die Steuereinrichtung 25 und/oder die Auswertungseinrichtung 26 oder Teile dieser Einrichtungen am Gehäuse 7 zu positionieren und/oder zu halten.

Die ersten Ausrichtungsstifte 8 erstrecken sich von dem Gehäuse 7 der Sensorvorrichtung 1 in der Darstellung der Fig. 1 nach oben. Dies ist auch aus Fig. 3 und Fig. 4 erkennbar.

Dementsprechend (nicht dargestellt) kann die Strahlungserzeugungseinrichtung 17 Aussparungen zur Aufnahme der zweiten Ausrichtungsstifte 9 aufweisen, wenn sie zum Beispiel als separates Modul ausgeführt ist. Alternativ oder zusätzlich kann die Empfangseinrichtung 19 entsprechende Aufnahmen zur Aufnahme der ersten Ausrichtungsstifte 8 aufweisen.

In dem Ausführungsbeispiel ist die Steuereinrichtung 25 mit der Strahlungsquelle 13 verbunden, schematisch dargestellt durch eine Linie. Z. B. stellt die Steuereinrichtung 25 den zeitlichen Verlauf des elektrischen Stromes durch die als Leuchtdiode ausgestaltete Strahlungsquelle 13 in der gewünschten Weise ein, sodass die Strahlungsquelle 13 einen entsprechenden zeitlichen Intensitätsverlauf der abgestrahlten elektromagnetischen Strahlung bewirkt.

Wenn, anders als in Fig. 1 (und auch Fig. 2) dargestellt, die Strahlungserzeugungseinrichtung 17 und die Empfangseinrichtung 19 als von dem Gehäuse 7 bzw. der Sensorvorrichtung 1 separate Module bzw. Einrichtungen ausgestaltet sind, kann die beim Betrieb der Steuereinrichtung 25 und der Auswertungseinrichtung 26 erzeugte Wärme größtenteils nach außen abgeführt werden, ohne den Innenraum des Gehäuses 7 wesentlich zu erwärmen. Somit können die optischen Eigenschaften von Teilen innerhalb des Gehäuses 7, zum Beispiel dem Reflektor 3, weitestgehend unabhängig von der Betriebstemperatur der Strahlungserzeugungseinrichtung 17 und der Empfangseinrichtung 19 gehalten werden.

Im Folgenden werden nun Ausführungsbeispiele des Betriebes der Sensorvorrichtung 1 beschrieben.

Fig. 1 zeigt für eine der Strahlungsquellen 13 der Strahlungserzeugungseinrichtung 17, schematisch angedeutet durch den nach rechts weisenden Pfeil, dass die von der Strahlungsquelle 13 erzeugte elektromagnetische Strahlung auf den Reflektor 3 auftrifft. In der Praxis strahlt die Strahlungsquelle 13 ein divergierendes Strahlungsbündel auf den Reflektor 3, welches optional, wie bereits erwähnt, durch eine Eintritts-Optik (nicht dargestellt) fokussiert werden kann. Allerdings liegt der Fokuspunkt vorzugsweise nicht auf der Oberfläche des Reflektors 3, sondern davor oder dahinter, sodass auf den Reflektor 3 ein örtlich verteiltes Strahlungsbündel auftrifft. Z.B. kann es sich bei der Fläche an der Oberfläche des Reflektors 3, die von der Strahlungsquelle 13 bestrahlt wird, um eine elliptische Fläche handeln, die aus einem schrägen Schnitt durch den Strahlungskegel resultiert, welcher aus der Kombination aus Strahlungsquelle 13 und der Eintritts-Optik resultiert.

Der überwiegende Teil der von der Strahlungsquelle 13 erzeugten und auf den Reflektor 3 auftreffenden Strahlung wird, wie durch einen nach unten weisenden Pfeil in Fig. 4 dargestellt ist, durch das Austrittsfenster 11 hindurch aus der Sensorvorrichtung 1 heraus in den Messbereich ME reflektiert. Wenn sich in dem Messbereich ME ein Objekt 22a befindet, wird entweder lediglich Strahlung zurückreflektiert oder es wird zusätzlich Lumineszenz-Strahlung von dem Sicherheitsmerkmal 23 in Richtung des Austrittsfensters 11 abgestrahlt, d.h. emittiert. Die Strahlung tritt durch das Austrittsfenster 11 in die Sensorvorrichtung 1 ein, tritt durch die Aussparung 2 hindurch und erreicht zumindest ein Sensorelement 15 der Empfangseinrichtung 19. Dort wird die Strahlung detektiert und es wird ein entsprechendes Messsignal erzeugt.

Das Sensorelement 15 empfängt sowohl dann elektromagnetische Strahlung aus dem Messbereich ME, wenn sich dort kein lumineszierender Stoff als Teil eines Sicherheitsmerkmals 23 befindet, als auch dann, wenn sich dort ein solcher Stoff befindet und Lumineszenz-Strahlung abgestrahlt wird.

Konkrete Exemplare der Strahlungsquellen 13 und der Sensorelemente 15 können sich unterscheidende optische Eigenschaften aufweisen. Auch können die optischen Eigenschaften konkreter Exemplare einer Eintritts-Optik (nicht dargestellt), einer Empfangs-Optik (nicht dargestellt), des Reflektors 3, der Filter-Anordnung (nicht dargestellt) oder des Filters (nicht dargestellt) sich deutlich von anderen Exemplaren unterscheiden.

Durch das Austrittsfenster 11 tritt Strahlung in die Sensorvorrichtung 1 ein und verursacht das Messsignal. Die Erfindung ist nicht auf ein solches Austrittsfenster 11 beschränkt. Grundsätzlich könnte auch kein Austrittsfenster 11 vorhanden sein. Nicht vorhanden sein muss jedoch ein Austrittsfenster 11, durch das hindurch die Strahlung in den Messbereich ME austritt und durch das in die Sensorvorrichtung 1 die Messstrahlung wieder eintritt. Z.B. können ein Austrittsfenster und ein separates Eintrittsfenster vorhanden sein. Eine solche Ausführungsform wird in Fig. 2 gezeigt.

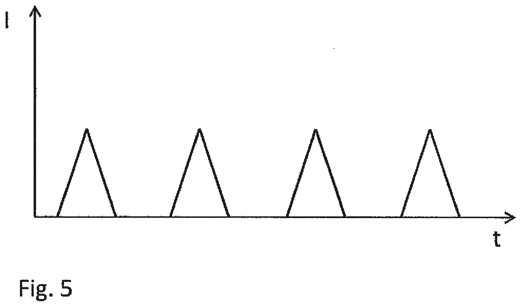

Die Strahlungserzeugungsvorrichtung 17 kann insbesondere Strahlung von wechselnder Strahlungsintensität I (Fig. 5) erzeugen, gemäß den Patenansprüchen durch die Steuereinrichtung 25 gesteuert. Ein Beispiel für einen solchen zeitlichen Verlauf der Strahlungsintensität I ist in Fig. 5 gezeigt. In Fig. 5 ist ein dreieckförmiger, sich wiederholender zeitlicher Strahlungsintensitätsverlauf gezeigt. Zwischen zwei Dreieckformen befindet sich jeweils eine Pause, die den gleichen Zeitraum umfasst wie eine Dreieckform selbst. Alternativ kann ein solcher Strahlungsintensitätsverlauf anders ausgestaltet sein, zum Beispiel eine andere Signalform aufweisen und/oder andere Pausen aufweisen. Alternativ kann der Strahlungsintensitätsverlauf zum Beispiel konstant sein oder konstante Anteile besitzen.

Eine solche elektromagnetische Strahlung kann insbesondere über einen Zeitraum erzeugt werden, in dem sowohl ein Teil des Objektträgers 21 und der Objektrand 22b als auch mindestens ein Teil des Objekts 22a und/oder mindestens ein Teil des Sicherheitsmerkmals 23, wobei dieser Teil insbesondere photolumineszierenden Stoff aufweist, sich in den und/oder in dem Messbereich ME bewegen.

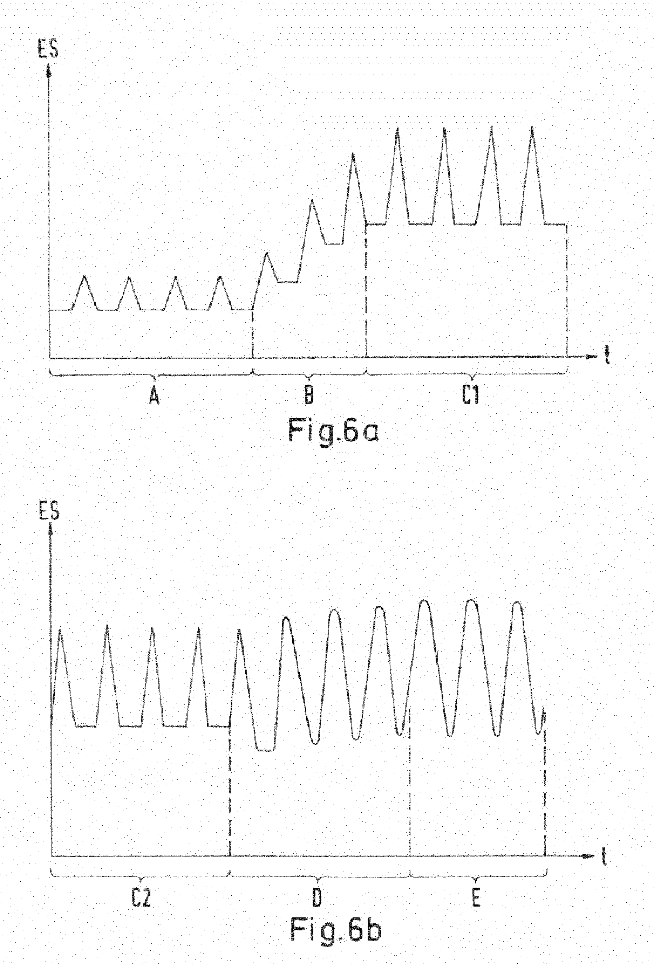

Die Strahlung, die vom Objektträger 21 vor dem Bewegen des Objektrandes 22b in den Messbereich ME von dem Objektträger 21 ausgeht und auf das Sensorelement 15 trifft, unterscheidet sich in der spektralen Strahlungsflussdichteverteilung von der Strahlung, die vom Objekt 22a nach dem Bewegen des Objektrandes 22b in den Messbereich ME von dem Objekt 22a ausgeht. Zum Beispiel aus dem Integral der Strahlungsflussdichte über den Erfassungsbereich des jeweiligen Sensorelements 15, das auch als Strahlungsintensität I bezeichnet wird, wird als Antwort ein zeitlicher Verlauf eines Empfangssignals ES bestimmt. Ein solcher zeitlicher Verlauf des Empfangssignals ES ist beispielhaft in Fig. 6a gezeigt.

Im Bereich A der Fig. 6a ist beispielhaft ein zeitlicher Verlauf des Empfangssignals ES gezeigt, der der Strahlung entspricht, die vom Objektträger 21 vor dem Bewegen des Objektrandes 22b in den Messbereich ME ausging und von den Sensorelementen 15 empfangen wurde. Im Bereich C1 der Fig. 6a ist beispielhaft ein zeitlicher Verlauf des Empfangssignals ES gezeigt, der der Strahlung entspricht, die insbesondere vom Objekt 22a nach dem Bewegen des Objektrandes 22b durch den Messbereich ME ausging, d.h. die Objektoberfläche befindet sich im Messbereich ME. Die Bereiche A und C1 sind jeweils ein stationärer ("steady-state") oder näherungsweise stationärer Bereich.

Im Bereich B der Fig. 6a ist beispielhaft ein zeitlicher Verlauf des Empfangssignals ES gezeigt, der der Strahlung entspricht, die vom Objektträger 21 und vom Objekt 22a während des Bewegens des Objektrandes 22b durch den Messbereich ME ausging.

Der in Fig. 5 ersichtliche dreieckförmige zeitliche Verlauf der Strahlungsintensität I mit jeweils nachfolgenden Pausen ist entsprechend in den Bereichen A, B und C1 der Fig. 6a im zeitlichen Verlauf des Empfangssignals ES erkennbar. Der Bereich A weist vergleichsweise geringe Minimal- und Maximalwerte des Empfangssignals ES auf. Die Amplituden der dreieckförmigen Verläufe, die sich jeweils zwischen den Minimal- und den Maximalwerten befinden, sind vergleichsweise gering. Der Bereich C1 weist höhere Minimalwerte und höhere Maximalwerte auf, auch die Amplituden sind vergleichsweise groß. Der Bereich B ist ein Übergangsbereich. In ihm erhöhen sich die Minimalwerte und die Maximalwerte und die Amplituden des Empfangssignals ES. Die Strahlungsintensität I der Strahlung, die vom Objektträger 21 ausgeht und durch die Sensorelemente 15 aufgenommen wird, besitzt in dem durch Fig. 6a gezeigten Beispiel im zeitlichen Verlauf geringere Minimalwerte, geringere Maximalwerte und geringere Amplituden als die Strahlungsintensität I der Strahlung, die vom Objekt 22a ausgeht und durch die Sensorelemente 15 aufgenommen wird. Die Zeitdauern (entsprechend den Pausen in Fig. 5) zwischen den dreieckförmigen Verläufen sind gleichbleibend.

Zur Bestimmung eines Zeitpunkts oder eines Zeitbereichs, in dem sich zumindest ein Teil des Objektrandes 22b in den Messbereich ME bewegt, sich also am entsprechenden Ort EO befindet, kann insbesondere die Lage des Bereichs B in dem zeitlichen Verlauf des Empfangssignals ES durch die Auswertungseinrichtung 26 bestimmt werden, insbesondere automatisiert bestimmt werden. Hierzu können mathematische Verfahren angewendet werden, insbesondere unter Nutzung einer statistischen Größe. Ein Beispiel hierfür wird im Folgenden erläutert:

Ausgehend vom Beginn des in Fig. 6a dargestellten zeitlichen Verlaufs des Empfangssignals ES werden Segmente des zeitlichen Verlaufs vom Beginn bis zum Ende des in Fig. 6a dargestellten Zeitintervalls gebildet. Jedes Segment kann zum Beispiel mindestens einen Anstieg und/oder mindestens einen Abfall und/oder einen (näherungsweise) konstanten Bereich umfassen. Insbesondere können Segmente jeweils das gleiche Zeitintervall umfassen. Von jedem Segment kann nun ein Mittelwert und/oder ein Minimalwert und/oder ein Maximalwert gebildet werden. Ein Segment kann alternativ zum Beispiel durch eine Vorgabe eines Zeitintervalls definiert werden.

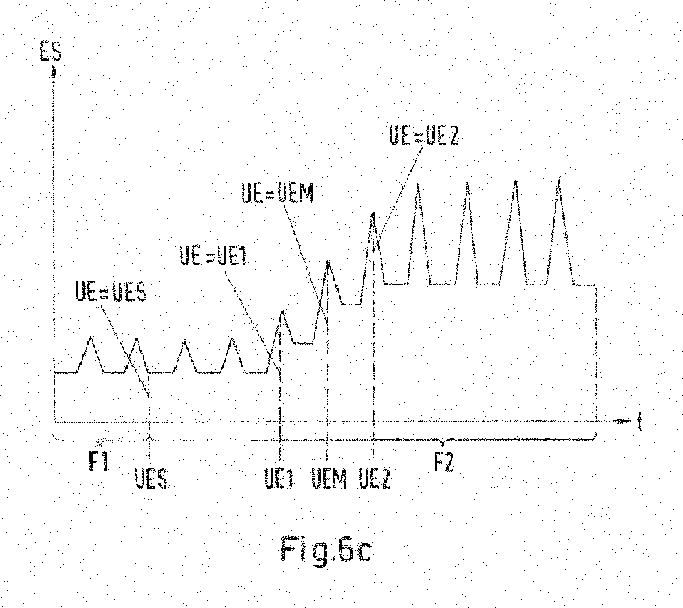

Nun kann zum Beispiel die Varianz der jeweiligen Mittelwerte oder der jeweiligen Differenzen zwischen dem jeweiligen Minimalwert und dem jeweiligen Maximalwert (Spannweiten) der einzelnen Segmente ermittelt werden. Dies kann zum Beispiel für die Segmente in einem Zeitintervall F1 (Fig. 6c) erfolgen, das die ersten zwei Segmente des zeitlichen Verlaufs des Empfangssignals ES umfasst wie in Fig. 6c dargestellt ist. Die gesamte Länge des zeitlichen Verlaufs des Empfangssignals ES kann insbesondere anhand einer Voreinstellung oder einer Kalibrierung ausgewählt sein. Der zeitliche Verlauf des Empfangssignals ES kann insbesondere durch die Auswertungseinrichtung 26 bereitgestellt werden, zum Beispiel in Form von insbesondere aufeinanderfolgenden Zahlenwerten, insbesondere in einem computerlesbaren Format.

Eine solche Ermittlung der Varianz der jeweiligen Mittelwerte oder der jeweiligen Spannweiten der einzelnen Segmente kann nun auch für ein Zeitintervall F2 durchgeführt werden, das dem Zeitintervall F1 an einem Wert UES eines Übergangszeitpunkts UE nachfolgt und bis zum Ende des zeitlichen Verlaufs des Empfangssignals ES reicht. Nun kann gemäß dem folgenden mathematischen Ausdruck (1) das Minimum Min der Differenz der Varianz Var in dem Zeitintervall F1 und der Varianz Var in dem Zeitintervall F2 bestimmt werden. Hierbei sind der Wert des Übergangszeitpunkts UE und entsprechend die Längen des Zeitintervalls F1 und des Zeitintervalls F2 veränderlich:

$$\text{Min}[\text{Var}(F1(UE)) - \text{Var}(F2(UE))]. \qquad\qquad (1)$$

Das Zeitintervall F1 und das Zeitintervall F2 und die jeweils entsprechenden Werte der Varianz ändern sich jeweils, wenn der Wert des Übergangszeitpunkts UE geändert wird. Wird durch Änderung des Werts des Übergangszeitpunkts UE das Minimum der Differenz erreicht, ist die Varianz in dem Zeitintervall F2 in dem Ausführungsbeispiel verhältnismäßig groß und die Varianz in dem Zeitintervall F1 verhältnismäßig klein. Bei dem entsprechenden Wert UE1 des Übergangszeitpunkt UE bewegt sich in dem Ausführungsbeispiel der Objektrand 22b in den Messbereich ME hinein, befindet sich also an dem entsprechenden Ort EO.

Bei dieser beispielhaften Berechnungsmethode und dem beispielhaften zeitlichen Verlauf des Empfangssignals ES, der in Fig. 6a und in Fig. 6c gezeigt wird, wird der Wert UE1 (Fig. 6c) des Übergangszeitpunkts UE bestimmt, der einen Zeitpunkt beschreibt, der am Beginn des Bereichs B (Fig. 6a) liegt.

Alternativ oder zusätzlich kann zum Beispiel gemäß dem folgenden mathematischen Ausdruck (2) das Minimum der Differenz der Varianz in dem Zeitintervall F2 und der Varianz in dem Zeitintervall F1 bestimmt werden, wobei der Wert des Übergangszeitpunkts UE hierbei wieder veränderlich ist:

$$Min[Var(F2(UE)) - Var(F1(UE))]. \qquad\qquad (2)$$

Wird durch Änderung des Werts des Übergangszeitpunkts UE das Minimum der Differenz erreicht, ist die Varianz in dem Zeitintervall F1 verhältnismäßig groß und die Varianz in dem Zeitintervall F2 verhältnismäßig klein. Bei dem entsprechenden Wert UE2 (Fig. 6c) des Übergangszeitpunkts UE bewegt sich der Objektrand 22b aus dem Messbereich ME heraus, befindet sich also an einem entsprechenden Ort am Ende des Messbereichs ME in Bewegungsrichtung BR, also in Fig. 1 rechts am Messbereich ME.

Bei dieser beispielhaften Berechnungsmethode und dem beispielhaften zeitlichen Verlauf des Empfangssignals ES, der in Fig. 6a und in Fig. 6c gezeigt wird, wird ein Wert UE2 des Übergangszeitpunkts UE bestimmt, der einen Zeitpunkt beschreibt, der am Ende des Bereichs B (Fig. 6a) liegt.

In der praktischen Anwendung der Sensorvorrichtung 1 kann insbesondere der Wert UE1 des Übergangszeitpunkts UE oder der Wert UE2 des Übergangszeitpunkts UE als Zeitpunkt gewählt werden, in dem sich zumindest ein Teil des Objektsrandes 22b an einem entsprechenden Ort im Messbereich ME befindet. Je nachdem, welcher Wert UE1 oder UE2 des Übergangszeitpunkts UE für weitere Arbeitsschritte gewählt wird, befindet sich entsprechende Ort in Bezug auf die Bewegungsrichtung BR beim Anfang (entsprechend dem Wert UE1) oder beim Ende (entsprechend dem Wert UE2) des Messbereich MEs. Abhängig von einem konkreten zeitlichen Verlauf des Empfangssignals ES können die Übergangszeitpunkte UE1 und UE2 verhältnismäßig nahe beieinander liegen, insbesondere, wenn der Messbereich ME in Richtung der Bewegungsrichtung BR verhältnismäßig kurz ist.

Von dem Wert UE1 und dem Wert UE2 des Übergangszeitpunkts UE kann zum Beispiel ein Mittelwert UEM (Fig. 6c) gebildet werden. Dieser Mittelwert UEM liegt dann innerhalb des Bereichs B in Fig. 6a. Er kann einem entsprechenden Ort entsprechen, der bei der Mitte des Messbereichs liegt.

Alternativ oder zusätzlich kann zum Beispiel das Intervall zwischen dem Wert UE1 und dem Wert UE2 des Übergangszeitpunkts UE als Zeitintervall gewählt werden, in dem sich zumindest ein Teil des Objektrandes 22b in dem Messbereich ME befindet. Der entsprechende Ort entspricht dann dem Messbereich ME selbst. Eine solche Vorgehensweise kann insbesondere sinnvoll sein, wenn der Messbereich ME in Bewegungsrichtung BR klein ist.

Mithilfe des Zeitpunkts und/oder Zeitbereichs, in dem sich zumindest ein Teil des Objektrandes 22b an einem entsprechenden Ort befindet, kann zum Beispiel eine Position zumindest des Teils des Objektrandes 22b im Messbereich ME der Sensorvorrichtung 1 und/oder auf dem Objektträger 21 bestimmt werden. Hierzu muss die Bewegungsgeschwindigkeit des Objekts 22a bekannt sein. Die Bewegungsgeschwindigkeit kann zum Beispiel zwischen 1 m/s und 10 m/s liegen, bevorzugt zwischen 3 m/s und 5 m/s.

Wird zum Beispiel der mathematische Ausdruck (1) zur Ermittlung des Wertes UE1 des Übergangszeitpunkts UE genutzt, kann schon im Vorfeld, zum Beispiel durch im Vorfeld durchgeführte Kalibriermessungen, bekannt sein, dass der entsprechende Ort sich in diesem Fall am Beginn des Messbereichs befindet, bezogen auf die Bewegungsrichtung BR. Der Wert UE1 des Übergangszeitpunkts UE kann daher insbesondere den Zeitpunkt beschreiben, zu dem der zumindest eine Teil des Objektrandes 22b sich in den Messbereich ME hinein bewegt.

Wird zum Beispiel der mathematische Ausdruck (2) zur Ermittlung des Wertes UE2 des Übergangszeitpunkts UE bestimmt, kann schon im Vorfeld bekannt sein, dass der entsprechende Ort sich in diesem Fall am Ende des Messbereich MEs befindet, bezogen auf die Bewegungsrichtung BR Der Wert UE2 des Übergangszeitpunkts UE kann daher insbesondere den Zeitpunkt beschreiben, zu dem der zumindest eine Teil des Objektrandes 22b sich aus dem Messbereich ME hinaus bewegt.

Wird zum Beispiel der Werte UEM des Übergangszeitpunkts UE bestimmt, kann schon im Vorfeld bekannt sein, dass der entsprechende Ort sich in diesem Fall bei oder an der Mitte des Messbereichs befindet, bezogen auf die Bewegungsrichtung BR. Der Wert UEM des Übergangszeitpunkts UE kann daher insbesondere den Zeitpunkt beschreiben, zu dem der zumindest eine Teil des Objektrandes 22b sich mittig im Messbereich ME befindet.

Ist die Position zumindest des Teils des Objektrandes 22b bekannt, kann auf die Position des Objekts 22a und/oder auf die Position des Sicherheitsmerkmals 23, zum Beispiel eine Position im Messbereich ME und/oder eine Position auf dem Objektträger 21, geschlossen werden. Hierzu kann insbesondere eine bekannte Geometrie des Objekts 22a und/oder eine bekannte, übliche Position des Sicherheitsmerkmals 23 auf dem Objekt 22a verwendet werden.

Ist beispielsweise die Geometrie des Objekts 22a bekannt, kann zum Beispiel eine Erkennung des Sicherheitsmerkmals 23 zu einem Zeitpunkt begonnen werden, wenn das Sicherheitsmerkmal 23, ausgehend von der bekannten Position zumindest des Teils des Objektrandes 22b, im Messbereich ME der Sensorvorrichtung 1 erwartet wird. Alternativ oder zusätzlich kann die Position zumindest des Teils des Objektrands 22b und/oder des Objekts und/oder des Sicherheitsmerkmals 23 auf dem Objekt 22a sinnvoll für weitere Verarbeitungsschritte in Bezug auf das Objekt 22a sein.

Die Sensorvorrichtung 1 weist eine Mehrzahl von Strahlungsquellen 13 und eine Mehrzahl von Sensorelementen 15 auf. Der zeitliche Verlauf des Empfangssignals ES, der in Fig. 6a dargestellt ist, kann zum Beispiel insbesondere durch Mittelwertbildung einzelner Empfangssignale ES der einzelnen Sensorelemente 15 gebildet sein. Alternativ kann der zeitliche Verlauf des Empfangssignals ES der Verlauf von einer einzigen oder ein zum Beispiel durch Mittelwertbildung erhaltener Verlauf einer Teilmenge der Mehrzahl von Sensorelementen 15 sein.

Mehre zeitliche Verläufe des Empfangssignals ES können insbesondere einzeln zum Beispiel durch die Auswertungseinrichtung 26 ausgewertet werden. Zeigen sich zeitliche Unterschiede in den jeweiligen zeitlichen Verläufen insbesondere in Form von verschiedenen Werten UE1 bzw. UE2 der Übergangszeitpunkte, kann dies zum Beispiel auf eine schiefe Lage des Objekts 22a bzw. des Objektrandes 22b auf dem Objektträger 21 hinweisen und/oder darauf, dass das Objekt 22a einen schiefen Objektrand 22b besitzt.

In einer anderen, besonders einfachen Ausführungsform weist die Sensorvorrichtung nur eine Strahlungsquelle 13 und/oder nur ein Sensorelement 15 auf.

Die Strahlung, die vom Objekt 22a vor dem Bewegen des Sicherheitsmerkmals 23 in den Messbereich ME ausgeht und auf das Sensorelement 15 trifft, unterscheidet sich in der spektralen Strahlungsflussdichteverteilung und im zeitlichen Verlauf von der Strahlung, die vom Sicherheitsmerkmal 23 nach dem Bewegen des Sicherheitsmerkmals 23 in den Messbereich ME ausgeht. Zum Beispiel aus dem Integral der Strahlungsflussdichte, das auch als Strahlungsintensität bezeichnet wird, über den Erfassungsbereich des jeweiligen Sensorelements 15 wird als Antwort ein entsprechender zeitlicher Verlauf des Empfangssignals ES bestimmt. Ein solcher zeitlicher Verlauf des Empfangssignals ES ist beispielhaft in Fig. 6b gezeigt. Zu diesem zeitlichen Verlauf des Empfangssignals ES kann insbesondere mindestens zum Teil Lumineszenz-Strahlung beitragen wie weiter unten noch erläutert wird. Angenommen wird, dass das Sicherheitsmerkmal 23 vollständig oder nahezu vollständig von einem photolumineszierenden Stoff bedeckt ist. Das Sicherheitsmerkmal 23 kann alternativ nur in zumindest einem Teilbereich von dem photolumineszierenden Stoff bedeckt sein.

Im Bereich C2 der Fig. 6b ist ein beispielhafter zeitlicher Verlauf des Empfangssignals ES gezeigt, der der Strahlung entspricht, die vom Objekt 22a vor dem Bewegen des Sicherheitsmerkmals 23 in den Messbereich ME ausging und von den Sensorelementen 15 empfangen wurde. Im Bereich E der Fig. 6b ist ein beispielhafter zeitlicher Verlauf des Empfangssignals ES gezeigt, der der Strahlung entspricht, die insbesondere vom Sicherheitsmerkmal 23 nach dem Bewegen des Sicherheitsmerkmals 23 in den Messbereich ME ausging. In dieser Strahlung ist mindestens anteilig Lumineszenz-Strahlung enthalten, die insbesondere zu einer Zeitverzögerung in der Strahlungsantwort und daher im zeitlichen Verlauf des Empfangssignals ES führen kann. Deshalb sind im Bereich E auf- und absteigende Flanken jeweils in ihrem oberen und in ihrem unteren Bereich leicht abgerundet dargestellt. Zudem sind nahezu konstante Bereiche (entsprechend den Pausen in Fig. 5) zwischen den abgerundeten Dreiecksformen im Verhältnis kürzer. Die Bereiche C2 und E sind jeweils ein stationärer (steady-state) oder näherungsweise stationärer Bereich.

Im Bereich D der Fig. 6b ist ein beispielhafter zeitlicher Verlauf des Empfangssignals ES gezeigt, der der Strahlung entspricht, die vom Objekt 22a und vom Sicherheitsmerkmal 23 während des Bewegens eines Randes des Sicherheitsmerkmals 23 durch den Messbereich ME ausging.

Der in Fig. 5 ersichtliche dreieckförmige zeitliche Verlauf findet sich entsprechend im Bereich C2, der Fig. 6b im zeitlichen Verlauf des Empfangssignals ES wieder. In den Bereichen D und E entspricht der zeitliche Verlauf des Empfangssignals ES nur näherungsweise dem dreieckförmigen zeitlichen Verlauf, da nunmehr Lumineszenz-Strahlung mindestens anteilig das Empfangssignal ES beeinflusst.

Der Bereich C2 weist vergleichsweise große Minimal- und Maximalwerte des Empfangssignals ES auf, entsprechend dem Bereich C1 in Fig. 6a. Die Amplituden der dreieckförmigen Verläufe, die sich jeweils zwischen den Minimal- und den Maximalwerten befinden, sind vergleichsweise hoch. Der Bereich E weist geringere Minimalwerte und höhere Maximalwerte auf, die Amplituden sind vergleichsweise noch größer als im Bereich C2.

Der Bereich D ist ein Übergangsbereich, wobei der erste Minimalwert im Bereich D deutlich niedriger liegt als die Minimalwerte im Bereich C2. Im Bereich D erhöhen sich die Minimalwerte und die Maximalwerte des Empfangssignals ES. Weiterhin verkleinern sich die konstanten Bereiche. Die Strahlungsintensität der Strahlung, die vom Sicherheitsmerkmal 23 ausgeht und durch die Sensorelemente 15 aufgenommen wird, besitzt in dem durch Fig. 6b gezeigten Beispiel im zeitlichen Verlauf höhere Minimalwerte, höhere Maximalwerte und höhere Amplituden als die Strahlungsintensität der Strahlung, die vom Objekt 22a ausgeht und durch die Sensorelemente 15 aufgenommen wird.

In Bezug auf den in Fig. 6b gezeigten Verlauf des Empfangssignals ES, der zum Teil durch Lumineszenz-Strahlung beeinflusst ist, kann auch die in Bezug auf den in Fig. 6a erklärte Vorgehensweise angewendet werden, um einen Zeitpunkt oder einen Zeitbereich zu bestimmen, in dem sich zumindest ein Teil des Randes des Sicherheitsmerkmals 23 bzw. das Sicherheitsmerkmal 23 an einem entsprechenden Ort im Messbereich ME befindet, zum Beispiel dem entsprechenden Ort EO am Anfang des Messbereich MEs. Hierdurch kann/können dann insbesondere eine Position zumindest des Teil des Sicherheitsmerkmals 23 bzw. eine Position des Sicherheitsmerkmals 23 in dem Messbereich ME und/oder auf dem Objektträger 21 und/oder auf dem Objekt 22a bestimmt werden.

Zur Erkennung, dass sich das Sicherheitsmerkmal 23 in dem Messbereich ME mindestens zum Teil befindet, kann insbesondere das Empfangssignal ES in den Teilbereichen D und/oder E von der Auswertungseinrichtung 26 ausgewertet werden. Insbesondere kann ein Matched Filter (Optimalfilter) verwendet werden, zum Beispiel zur Auswertung des Empfangssignals in den Teilbereichen D und/oder E. Zum Beispiel kann das Empfangssignal ES in den Teilbereichen D und/oder E mit einem erwarteten Empfangssignal verglichen werden. Ein solches erwartetes Empfangssignal kann beispielsweise mithilfe eines Kalibrierobjekts ermittelt worden sein, das den gleichen photolumineszierenden Stoff (insbesondere in der gleichen Konzentration und/oder Dichte) aufweist wie das Sicherheitsmerkmal 23. Ein Verifikationsergebnis, ob das Sicherheitsmerkmal korrekt durch die Sensorvorrichtung 1 erkannt wurde oder nicht, kann insbesondere durch die Auswertungseinrichtung 26 ermittelt und zum Beispiel ausgegeben werden.

Mithilfe einer Mehrzahl von Sensorelementen 13 ist auch eine Erkennung mindestens eines Teils zumindest eines Objektrandes, zum Beispiel mindestens eines Teils eines Sicherheitsmerkmalrandes möglich, wobei sich zumindest ein Abschnitt des Objektrandes entlang der oder schräg zur Bewegungsrichtung BR erstreckt. Ein solcher Rand kann somit insbesondere als Längsrand bezeichnet werden, wenn der Objektrand im Wesentlichen entlang der Bewegungsrichtung BR verläuft.

In Bezug auf einen solchen Teil eines Objektrandes oder Sicherheitsmerkmalrandes kann eine solche Situation vorliegen, wenn zunächst auf zumindest ein Sensorelement 15 getroffene Strahlung zu einem sensorspezifischen Empfangssignal ES führt, das im zeitlichen Verlauf auf das Bewegen mindestens eines Teils eines Objektrandes oder Sicherheitsmerkmalrandes in den Erfassungsbereich des zumindest einen Sensorelements 15 hindeutet. Dieser Fall wird Fall A genannt. Ein solcher zeitlicher Verlauf eines Empfangssignals ES wird in Fig. 6a beispielhaft gezeigt. Der Erfassungsbereich kann insbesondere ein Teil des Messbereichs ME sein.

Weiterhin kann zumindest auf zumindest ein weiteres Sensorelement 15 im gleichen Zeitraum getroffene Strahlung zu einem sensorspezifischen Empfangssignal ES führen, das im zeitlichen Verlauf darauf hindeutet, dass sich gerade kein Teil eines Objektrandes oder Sicherheitsmerkmalrandes in den Erfassungsbereich des weiteren Sensorelements 15 bewegt. Dieser Fall wird Fall B genannt. Ein solcher zeitlicher Verlauf eines Empfangssignals ES kann zum Beispiel dem Zeitintervall A in Fig. 6a entsprechen, denn Bereich A entspricht einer Strahlungsantwort von hauptsächlich vom Objektträger 21 ausgehender Strahlung.

Liegt nun in Bezug auf ein erstes Sensorelement 15 Fall A vor und in Bezug auf zumindest ein weiteres Sensorelement 15 Fall B, kann darauf geschlossen werden, dass sich im Erfassungsbereich des ersten Sensorelements 15 der Teil des Objektrandes oder des Sicherheitsmerkmalrandes befindet und im Erfassungsbereich des zumindest einen weiteren Sensorelements 15 kein Teil des Objekts oder des Sicherheitsmerkmals. Mithilfe eines von dem ersten Sensorelement 15 erzeugten Empfangssignals ist es möglich, eine Position des zumindest einen Teils des Objektrandes oder des Sicherheitsmerkmalrandes im Erfassungsbereich des ersten Sensorelements 15 zu bestimmen.

Mehrere zeitliche Verläufe der sensorspezifischen Empfangssignale ES können dann zum Beispiel dazu dienen, eine Lage und/oder eine Position des Objektrandes und/oder des Objekts (zum Beispiel das Objekt 22a) zu bestimmen. Analog kann für einen Sicherheitsmerkmalrand und/oder ein Sicherheitsmerkmal (zum Beispiel das Sicherheitsmerkmal 23) vorgegangen werden.

Die in Fig. 2 gezeigte Anordnung weist eine Sensorvorrichtung 1 auf, die sich in ihrem Aufbau von der Sensorvorrichtung 1, die in Fig. 1 gezeigt ist, unterscheidet. Weiterhin weist die in Fig. 2 gezeigte Anordnung entsprechend der Darstellung in Fig. 1 ein Objekt 22a mit einem Objektrand 22b auf, wobei das Objekt 22b sich in der Bewegungsrichtung BR relativ zur Sensorvorrichtung 1 bewegt. Das Objekt 22a befindet sich an einem Objektträger 21, der dem Objektträger 21 entspricht, der in Fig. 1 dargestellt ist. Ferner ist in Fig. 2 schematisch eine Transporteinrichtung 24, die der Transporteinrichtung 1 in Fig. 1 entspricht, dargestellt, die das Objekt 22a an einem Austrittsfenster 11a und einem Eintrittsfenster 11b der Sensorvorrichtung 1 vorbei transportiert.

Die Sensorvorrichtung 1 besitzt einen Messbereich ME. Ein entsprechender Ort innerhalb des Messbereichs ME befindet sich zum Beispiel am Beginn des Messbereichs ME in Bewegungsrichtung BR (entsprechender Ort EO).

Analog zum in Fig. 1 gezeigten Ausführungsbeispiel besitzt das Ausführungsbeispiel der in Fig. 2 gezeigten Sensorvorrichtung 1 zehn Strahlungsquellen 13 und sechs Sensorelemente 15, die sich jeweils entlang der Tiefenrichtung der Fig. 2 erstrecken. Alternativ kann/können die Anzahl der Strahlungsquellen 13 und/oder die Anzahl der Sensorelemente 15 jeweils eine andere sein.

Die Sensorvorrichtung 1 weist ein Gehäuse 7 mit einer ersten Kammer 31 und einer zweiten Kammer 32 auf, die es elektromagnetischer Strahlung jeweils erlauben, durch sie hindurchzutreten. Eine Strahlungserzeugungseinrichtung 17 ist schräg innerhalb der ersten Kammer 31 mithilfe von Haltern 34 angeordnet. Sie kann alternativ auch anders angeordnet sein. Die Strahlungserzeugungseinrichtung 17 weist eine Steuereinrichtung 25 und die Strahlungsquellen 13 auf. Alternativ können insbesondere nur die Strahlungsquellen 13 in der ersten Kammer 31 angeordnet sein. Insbesondere die Steuereinrichtung 25 kann außerhalb der ersten Kammer 31 angeordnet sein. Es kann sich um eine separate Einheit handeln. Die Steuereinrichtung 25 ist mit den Strahlungsquellen 13 verbunden.

Eine Empfangseinrichtung 19 ist schräg innerhalb der zweiten Kammer 32 mithilfe von Haltern 34 angeordnet. Die Empfangseinrichtung 19 weist eine Auswertungseinrichtung 26 und die Sensorelemente 15 auf. Alternativ können insbesondere nur die Sensorelemente 15 in der zweiten Kammer 32 angeordnet sein. Insbesondere die Auswertungseinrichtung 26 kann außerhalb der zweiten Kammer 32 angeordnet sein. Es kann sich um eine separate Einheit handeln.

Bei Betrieb der Strahlungsquellen 13, die zum Beispiel Leuchtdioden sind oder eine Mehrzahl von Leuchtdioden aufweisen, tritt wie schematisch durch einen Pfeil in Fig. 2 dargestellt ist, von den Strahlungsquellen 13 erzeugte Strahlung in die erste Kammer 31 ein. Innerhalb der ersten Kammer 31 kann, insbesondere zur Reduzierung und/oder Vermeidung von Streustrahlung innerhalb der ersten Kammer 31, ein materiell ausgestalteter Kanal (nicht dargestellt), zum Beispiel in Form eines Rohrs, jeweils von den Strahlungsquellen 13 zum Austrittsfenster 11a führen, durch den die von den Strahlungsquellen 13 erzeugte Strahlung zum Austrittsfenster 11a gelangen kann. Ein solcher Kanal kann auch von allen Strahlungsquellen 13 zum Austrittsfenster 11a führen, d. h., ein solcher Kanal wird für alle Strahlungsquellen 13 verwendet. Alternativ kann ein solcher Kanal jeweils für eine Strahlungsquelle 13 oder eine Mehrzahl von Strahlungsquellen 13 vorgesehen sein.

Alternativ oder zusätzlich kann auch mindestens ein materiell ausgestalteter Empfangskanal (nicht dargestellt), der insbesondere von Eintrittsfenster 11b zu mindestens einem Sensorelement 15 reichen kann, vorgesehen sein.

Separate Empfangskanäle haben den Vorteil, dass die von den einzelnen Strahlungsquellen 13 erzeugten Strahlungsbündel jedenfalls zumindest von einem Teil der anderen Strahlungsbündel unterschieden werden können. Z. B. detektiert dann ein einzelnes Sensorelement 15 lediglich im Wesentlichen Strahlungsbündel von drei Strahlungsquellen bzw. der daraus resultierenden reflektierten Strahlung bzw. Lumineszenz-Strahlung. Es findet somit eine örtliche Auflösung bei der Erfassung der Strahlung durch die Sensorelemente 15 statt.

Das in Fig. 2 dargestellte Ausführungsbeispiel einer Sensorvorrichtung 1 kann eine Eintritts-Optik (nicht dargestellt) aufweisen, bei der es sich z.B. um eine optische Linse oder Anordnung von Linsen handeln kann, um die durch die Strahlungsquellen 13 erzeugte elektromagnetische Strahlung zu fokussieren und/oder zu zerstreuen. Eine solche Eintritts-Optik kann insbesondere an den Strahlungsquellen 13 und/oder am Austrittsfenster 11a angeordnet sein. Alternativ oder zusätzlich zu der Eintritts-Optik kann sich insbesondere an den Strahlungsquellen 13 und/oder am Austrittsfenster 11a ein Filter (nicht dargestellt) befinden, der die durch die Strahlungsquellen 13 erzeugte Strahlung filtert.

Alternativ oder zusätzlich kann/können sich insbesondere am Eintrittsfenster 11b und/oder an den Sensorelementen 15 ein Filter und/oder eine Filter-Anordnung (nicht dargestellt) mit einem oder mehreren Filtern befinden. Alternativ oder zusätzlich kann/können der Filter oder die Filter-Anordnung ein Teil/Teile der Empfangseinrichtung 19 sein. Dies erlaubt es, das Spektrum der zu den Sensorelementen verlaufenden Strahlung zu verändern.

Alternativ oder zusätzlich kann sich insbesondere am Eintrittsfenster 11b und/oder an den Sensorelementen 15 eine Empfangs-Optik (nicht dargestellt) befinden. Alternativ oder zusätzlich kann eine solche Empfangs-Optik ein Teil der Empfangseinrichtung 19 sein. Mithilfe einer Empfangs-Optik kann zum Beispiel ein von der Empfangseinrichtung 19 zu empfangenes Strahlenbündel auf das Sensorelement 15 jeweils fokussiert werden.

Im Unterschied zu der in Fig. 1 dargestellten Ausführungsform besitzt die in Fig. 2 dargestellte Ausführungsform keinen Reflektor 3 (Fig. 1). Insbesondere aufgrund der schrägen Anordnung der Strahlungsquellen 13 und/oder der Sensorelemente 15 ist keine Umlenkung von Strahlung erforderlich. Die von den Strahlungsquellen 13 erzeugte Strahlung trifft unter einem Winkel auf und wird ggf. entsprechend reflektiert. Reflektierte Strahlung kann durch die Sensorelemente 15 aufgenommen werden. Auch Lumineszenz-Strahlung kann durch die Sensorelemente 15 aufgenommen werden.

Zwischen der ersten Kammer 31 und der zweiten Kammer 32 ist eine Trennwand 33 angeordnet, die insbesondere strahlungsundurchlässig sein kann. Alternativ kann die Trennwand 33, wie auch der Reflektor 3 in Fig. 1 ist, mindestens teilweise strahlungsdurchlässig sein. In einer nicht-bevorzugten, besonders einfachen Ausführungsform fehlt die Trennwand 33.

Das Austrittsfenster 11a kann in der Tiefenrichtung der Fig. 2 so groß ausgeführt sein, dass der überwiegende Anteil der durch die Strahlungsquellen 13 erzeugten Strahlung nach unten durch das Austrittsfenster 11a austreten kann. Die Länge des Austrittsfensters 11a in der Bewegungsrichtung BR ist in dem Ausführungsbeispiel erheblich kürzer. Der Messbereich ME weist daher bezogen auf Fig. 1 eine kleine Länge in Bewegungsrichtung BR bei sehr viel größerer Breite in Tiefenrichtung auf

Im Folgenden werden nun Ausführungsbeispiele des Betriebes der Sensorvorrichtung 1 beschrieben.

Fig. 2 zeigt schematisch für eine der Strahlungsquellen 13 der Strahlungserzeugungseinrichtung 17, schematisch angedeutet durch einen einzigen nach unten weisenden Pfeil, dass die von der Strahlungsquelle 13 erzeugte elektromagnetische Strahlung überwiegend durch das Austrittsfenster 11a hindurch mindestens auf das Objekt 22a und auf den Objektträger 21 im Bereich des Objektrands 22b trifft. In der Praxis strahlt die Strahlungsquelle 13 ein divergierendes Strahlungsbündel welches optional, wie bereits erwähnt, durch eine Eintritts-Optik (nicht dargestellt) fokussiert werden kann.

Allerdings liegt der Fokuspunkt vorzugsweise nicht auf der Oberfläche des Objekts 22a und/oder des Objektträgers 21, sondern davor oder dahinter, sodass hierauf ein örtlich verteiltes Strahlungsbündel auftrifft. Z.B. kann es sich bei der Fläche an der Oberfläche des Objekts 22a und/oder des Objektträgers 21, die von den Strahlungsquellen 13 bestrahlt wird, um eine elliptische Fläche handeln, die aus einem schrägen Schnitt durch den Strahlungskegel resultiert, welcher aus der Kombination aus der Strahlungsquelle 13 und zum Beispiel einer Eintritts-Optik resultiert.

Der Verlauf der reflektierten Strahlung und optional der Lumineszenz-Strahlung ist durch einen von unten nach rechts oben weisenden Pfeil in Fig. 2 schematisch dargestellt. Die Strahlung tritt durch das Eintrittsfenster 11b in die Sensorvorrichtung 1 ein und erreicht mindestens ein Sensorelement 15 der Empfangseinrichtung 19. Dort wird die Strahlung detektiert und es wird ein entsprechendes Messsignal erzeugt.

Im Ergebnis empfängt das zumindest eine Sensorelement 15 daher sowohl dann elektromagnetische Strahlung aus dem Messbereich ME, wenn sich dort kein lumineszierender Stoff als Teil eines Sicherheitsmerkmals 23 befindet, als auch dann, wenn sich dort ein solcher Stoff befindet und Lumineszenz-Strahlung abgestrahlt wird.

Weitere, insbesondere in Bezug auf Fig. 1 und Fig. 5, 6a, 6b, 6c vorgenommene Beschreibungen, insbesondere eine Ermittlung von Werten UE1, UE2, UEM des Übergangszeitpunkts UE, gelten, sofern zutreffend, analog in Bezug auf das in Fig. 2 gezeigte Ausführungsbeispiel. Dies gilt auch für Beschreibungen in Bezug auf eine Erkennung mindestens eines Teils eines Objektrandes und/oder eine Erkennung mindestens eines Teils eines Sicherheitsmerkmalrandes, wobei die Erstreckungsrichtung mindestens anteilig längs entlang der Bewegungsrichtung BR verläuft.

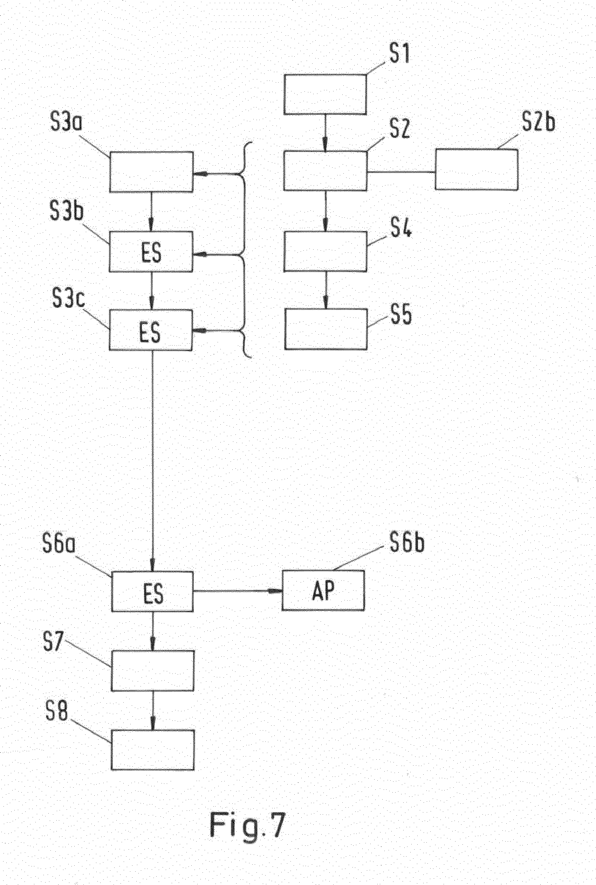

Fig. 7 zeigt ein Flussdiagramm zur Erläuterung eines Ausführungsbeispiels eines Verfahrens zum Erkennen eines Sicherheitsmerkmals eines sich relativ zu einer Photolumineszenz-Sensorvorrichtung bewegenden Objekts. Es kann sich insbesondere um das Sicherheitsmerkmal 23 handeln, das vorangehend beschrieben wird.

In einem Schritt S1 wird ein Messbetrieb der Sensorvorrichtung, zum Beispiel der in Fig. 1 oder Fig. 2 schematisch dargestellten Sensorvorrichtung 1, wie sie vorangehend beschrieben wird, initiiert. Zum Beispiel wird ein Betrieb der Sensorvorrichtung aufgenommen, wobei zum Beispiel eine Steuereinrichtung, die zur Steuerung von Strahlungsquellen dient, und/oder eine Auswertungseinrichtung, die zum Auswerten eines Empfangssignals dient, in betriebsbereiten Zustand versetzt werden.

Die Steuereinrichtung kann insbesondere die Steuereinrichtung 25 sein, wie sie vorangehend beschrieben wird. Die Auswertungseinrichtung kann insbesondere die Auswertungseinrichtung 26 sein, wie sie vorangehend beschrieben wird. Ist/sind die Steuereinrichtung und/oder die Auswertungseinrichtung zum Beispiel als Recheneinheit/-en, zum Beispiel als ein oder mehrere Computer, ausgeführt, kann im Schritt S1 insbesondere (jeweils) ein Bootvorgang des einen oder der Mehrzahl an Computer ausgeführt werden.

Optional kann detektiert werden, ob sich in dem Messbereich ME der Sensorvorrichtung ein Objekt befindet oder nicht. Vorzugsweise wird der Messbetrieb nur dann initiiert, wenn sich in dem Messbereich ME (noch) kein Objekt befindet. Alternativ oder zusätzlich kann der Messbetrieb auch dann initiiert werden, wenn sich ein Objekt, zum Beispiel mithilfe einer Transporteinrichtung, zur Sensorvorrichtung hin bewegt oder wenn zum Beispiel die Transporteinrichtung mit einem Objekt versehen ist, das zur Sensorvorrichtung hin bewegt werden soll. Das Objekt kann zum Beispiel das Objekt 22a sein, wie es vorangehend beschrieben wird. Die Transporteinrichtung kann zum Beispiel die vorangehend beschriebene Transporteinrichtung 24 sein.

Ist die Sensorvorrichtung bereits in Betrieb zum Beispiel aufgrund einer vorangegangenen Messung, kann auf den Schritt S1 verzichtet werden.

In einem Schritt S2 wird begonnen, elektromagnetische Strahlung zu erzeugen, die geeignet ist, eine Emission von Lumineszenz-Strahlung durch einen photolumineszierenden Stoff des Sicherheitsmerkmals anzuregen. Der zweite Schritt S2 kann insbesondere parallel mit dem Schritt S1 und/oder im Zuge des Schritts S1 ausgeführt werden.

Die elektromagnetische Strahlung kann insbesondere mithilfe einer Strahlungserzeugungseinrichtung erzeugt werden, zum Beispiel der vorangehend beschriebenen Strahlungserzeugungseinrichtung 17. Die Strahlungserzeugungseinrichtung kann insbesondere mindestens eine Strahlungsquelle aufweisen, zum Beispiel mindestens eine Strahlungsquelle 13, wie vorangehend beschrieben.

Erzeugt die Sensorvorrichtung bereits elektromagnetische Strahlung, zum Beispiel aufgrund einer vorangehenden Messung, kann auf den Schritt S2 verzichtet werden.

In einem optionalen Schritt S2b, der insbesondere parallel mit dem und/oder nach dem Schritt S2 und/oder dem Schritt S1 ausgeführt werden kann, wird die mindestens eine Strahlungsquelle derart gesteuert, dass die erzeugte elektromagnetische Strahlung innerhalb des Messbetriebs zum Beispiel einen periodischen Verlauf hat. Es kann sich zum Beispiel um einen solchen Verlauf handeln, wie er in Fig. 5 dargestellt ist. Alternativ oder zusätzlich kann die mindestens eine Strahlungsquelle im Schritt 2b derart gesteuert werden, dass die erzeugte elektromagnetische Strahlung innerhalb des Messbetriebs einen nicht-konstanten Verlauf hat. Dieser Verlauf muss nicht periodisch sein.

Nicht-konstante und/oder periodische elektromagnetische Strahlung bietet insbesondere den Vorteil, dass sie (jeweils) einen Verlauf aufweisen kann/können, der, insbesondere von einer Auswertungseinrichtung, die elektromagnetische Strahlung empfängt, erkannt werden kann.

Insbesondere, wenn der optionale Schritt S2b nicht ausgeführt wird, kann die erzeugte elektromagnetische Strahlung auch einen konstanten Verlauf haben.

In Schritt S3a wird elektromagnetische Strahlung empfangen, wobei es sich insbesondere um von der mindestens einen Strahlungsquelle erzeugte Strahlung handelt, die zum Beispiel von dem Objektträger und/oder der Transporteinrichtung und/oder dem Objekt und/oder dem Sicherheitsmerkmal reflektiert wird oder um Lumineszenz-Strahlung, die vom Sicherheitsmerkmal emittiert wird.

In einem Schritt S3b wird ein zeitabhängiges Empfangssignal erzeugt, insbesondere mithilfe der Auswertungseinrichtung. Hierbei kann es sich zum Beispiel um ein zeitabhängiges Empfangssignal handeln, wie es in Fig. 6a oder Fig. 6b dargestellt ist. Auch kann es sich zum Beispiel um ein Empfangssignal handeln, das in einem ersten Zeitintervall dem in Fig. 6a gezeigten Verlauf entspricht und in einem zweiten, nachfolgenden Zeitintervall dem in Fig. 6b gezeigten Verlauf entspricht. Deshalb wird in der Fig. 7 bei mehreren Schritten das Bezugzeichen "ES" angeführt. Die in den Fig. 6a und 6b gezeigten Verläufe sind beispielhafte Verläufe, die in einer praktischen Anwendung mit hoher Wahrscheinlichkeit anders verlaufen würden. Die beispielhaften, in den Fig. 6a und 6b gezeigten Verläufe dienen insbesondere zur Erklärung und Veranschaulichung von Auswertungsprozessen. Das zeitabhängige Empfangssignal kann insbesondere als Messsignal des zeitlichen Verlaufs der gemessenen Strahlungsintensität in einem Empfindlichkeitsbereich der Empfangseinrichtung erzeugt werden.

In einem Schritt S3c wird das zeitabhängige Empfangssignal aufgezeichnet und/oder zwischengespeichert. Eine Aufzeichnung kann zum Beispiel auf einen Datenspeicher erfolgen, der fest oder flüchtig sein kann, zum Beispiel einen Speicherchip, eine Festplatte und/oder einen Arbeitsspeicher. Insbesondere kann das zeitabhängige Empfangssignal durch die Auswertungseinrichtung aufgezeichnet werden.

Besitzt die Sensorvorrichtung mehrere Sensorelemente, können sich die Schritte S3a, S3b und S3c insbesondere auf jeweils eines der Mehrzahl an Sensorelementen beziehen. D. h.: In dem Schritt S3a wird von mehreren Sensorelementen jeweils elektromagnetische Strahlung empfangen. In dem Schritt S3b wird dann mithilfe der Mehrzahl an Sensorelementen jeweils ein zeitabhängiges Empfangssignal für jedes Sensorelement erzeugt. In dem Schritt S3c werden dann entsprechend mehrere zeitabhängige Empfangssignale aufgezeichnet und/oder zwischengespeichert.

Vorzugsweise finden die Messung und die Aufzeichnung und/oder Zwischenspeicherung mit einer Abtastfrequenz statt, die um zumindest einen Faktor 10 und vorzugsweise gemäß dem bekannten Abtasttheorem größer ist als die Frequenz der Erzeugung des Anregungssignals - sofern es sich um ein periodisches und/oder nicht konstantes, mit einer Frequenz versehenes Anregungssignal handelt - durch die Strahlungserzeugungseinrichtung. Bevorzugt wird insbesondere, dass die Abtastung mit einer so hohen Frequenz durchgeführt wird, dass das Messsignal mit einem erwarteten Signal gemäß der Matched-Filter-Technologie zuverlässig auswertbar ist.

Die Schritte S3a, S3b und S3c können, mindestens teilweise, parallel ausgeführt werden. Sie können auch, mindestens teilweise, parallel zum Schritt S1 und/oder zum Schritt S2 und oder zum Schritt S2b ausgeführt werden.

Die Schritte S3a, S3b und S3c können mindestens teilweise entfallen, wenn ein Empfangen elektromagnetischer Strahlung und/oder ein Erzeugen mindestens eines Empfangssignals und/oder ein Aufzeichnen und/oder ein Zwischenspeichern mindestens eines zeitabhängigen Empfangssignals bereits durchgeführt werden.

Im Schritt S4 wird das Objekt in den Messbereich derart bewegt, dass mindestens ein Teil eines Objektrandes sich in den Messbereich bewegt. Der Messbereich kann zum Beispiel der Messbereich ME sein (Fig. 1 oder 2). Der Objektrand kann zum Beispiel der bereits beschriebene Objektrand 22b sein.

In Schritt S5 wird das Sicherheitsmerkmal in den Messbereich bewegt.

Während der Schritte S4 und S5 wird elektromagnetische Strahlung erzeugt. Weiterhin werden die Schritte S3b und S3c parallel zu den Schritten S4 und S5 ausgeführt. Dies wird schematisch durch eine geschweifte Klammer innerhalb der Fig. 7 dargestellt.

In Schritt S6a, der insbesondere nach den bisher genannten Schritten durchgeführt werden kann, wird begonnen, das mindestens eine Empfangssignal auszuwerten. Eine solche Auswertung kann insbesondere den Schritt S6b aufweisen.

In Schritt S6b wird festgestellt, ob von dem photolumineszierenden Stoff emittierte elektromagnetische Strahlung zu dem mindestens einen zeitabhängigen Empfangssignal beigetragen hat. Hierzu kann zum Beispiel ein Matched-Filter verwendet werden.

Insbesondere, wenn eine zu erwartende Signalform und/oder ein zu erwartender zeitlicher Signalverlauf bekannt ist/sind - zum Beispiel aufgrund einer Kalibriermessung mit einem Kalibrierobjekt, das das gleiche photolumineszierende Material aufweist, wie das Sicherheitsmerkmal - kann eine solche Feststellung erfolgen.

Die Feststellung kann zum Beispiel durch Vergleich des mindestens einen zeitabhängigen Empfangssignals bzw. mindestens eines gefilterten zeitabhängigen Empfangssignals mit einer zu erwartenden Signalform und/oder einem zu erwartenden zeitlichen Signalverlauf erfolgen. Ergibt der Vergleich zum Beispiel eine Ähnlichkeit, kann dies darauf hindeuten, dass das Sicherheitsmerkmal echt ist.

Alternativ oder zusätzlich kann eine solche Feststellung auf anderem Wege erfolgen, zum Beispiel, indem eine statistische Größe eines Zeitintervalls des mindestens einen zeitabhängigen Empfangssignals bzw. mindestens eines gefilterten zeitabhängigen Empfangssignals gebildet wird, zum Beispiel die Varianz. Ähnelt der ermittelte Varianzwert einem zu erwartenden Varianzwert, kann dies dafür sprechen, dass ein Beitrag der von dem photolumineszierenden Stoff emittierten Lumineszenz-Strahlung an dem mindestens einen Empfangssignal vorliegt. Wird hierbei zum Beispiel ein Toleranzintervall eingehalten, kann dies kann darauf hindeuten, dass das Sicherheitsmerkmal echt ist.

Der Beitrag der von dem photolumineszierenden Stoff emittierten Lumineszenz-Strahlung an dem mindestens einen Empfangssignal wird in Fig. 7 durch das Bezugzeichen "AP" gekennzeichnet.

In Schritt S6b kann zusätzlich eine Verifikationsentscheidung getroffen werden. Hierbei wird zum Beispiel entschieden, ob der Beitrag AP zum Beispiel anhand der oben beschriebenen Vorgehensweisen auf ein echtes oder gefälschtes Sicherheitsmerkmal hindeutet. Im Falle eines echten Sicherheitsmerkmals kann die Verifikationsentscheidung eine Bestätigung der Echtheit des Sicherheitsmerkmals sein, im Falle eines gefälschten Sicherheitsmerkmals kann die Verifikationsentscheidung dementsprechend gegenteilig sein. Eine solche Verifikationsentscheidung kann ausgegeben werden, zum Beispiel an eine Ausgabeeinrichtung, zum Beispiel für einen menschlichen Nutzer der Sensorvorrichtung, und/oder einen Datenspeicher.

Im Schritt S7 wird ein Zeitpunkt und/oder ein Zeitintervall, in dem sich ein Teil des Randes des Objekts in den Messbereich bewegt, sich also an einem entsprechenden Ort am Beginn des Messbereichs befindet (zum Beispiel entsprechender Ort EO wie oben beschrieben), bestimmt. Alternativ oder zusätzlich kann/können insbesondere ein Zeitpunkt und/oder ein Zeitintervall bestimmt werden, in dem sich ein Teil des Randes des Sicherheitsmerkmals in den Messbereich bewegt, sich also an dem entsprechenden Ort befindet. Alternativ oder zusätzlich kann/können ein Zeitpunkt und/oder ein Zeitintervall, in dem sich ein Teil des Randes des Objekts und/oder ein Teil des Randes des Sicherheitsmerkmals aus dem Messbereich bewegt, bestimmt werden, sich also an einem entsprechenden Ort am Ende des Messbereichs befindet. Insbesondere kann eine solche Bestimmung mithilfe der Auswertungseinrichtung und/oder einer externen Einrichtung, zum Beispiel eine Recheneinheit aufweisend, ermittelt werden.

Beispielhafte Vorgehensweisen werden bereits oben in Bezug auf Ausführungsbeispiele der Sensorvorrichtung beschrieben. So kann der Zeitpunkt zum Beispiel der Zeitpunkt UE1 oder UE2 oder UEM sein wie oben beschrieben. Ein Zeitintervall kann zum Beispiel -wie auch im Falle der oben beschriebenen Ausführungsbeispiel der Sensorvorrichtung - gebildet werden mithilfe von mindestens zwei ermittelten Zeitpunkten, zum Beispiel UE1, UE2 oder UEM. Alternativ kann ein Zeitintervall zum Beispiel gebildet werden als vorgegebene Umgebung um einen einzigen Zeitpunkt in eine oder zwei Richtungen.

Im Schritt S8 wird/werden eine Position des einen Teils des Randes des Objekts und/oder eine Position des Objektes ermittelt. Insbesondere können hierfür der ermittelte Zeitpunkt (Schritt S7) und eine Bewegungsgeschwindigkeit bzw. eine Bewegungsrichtung des Objekts, zum Beispiel eine Bewegungsgeschwindigkeit bzw. eine Bewegungsrichtung in dem maßgeblichen Bezugssystem, notwendig sein. Die Bewegungsgeschwindigkeit kann zum Beispiel bekannt und/oder voreingestellt sein oder zum Beispiel mithilfe einer Erfassungseinrichtung, zum Beispiel einer optischen Erfassungseinrichtung wie einer Lichtschranke, ermittelt werden.

Insbesondere kann eine Position des einen Teils des Randes des Objekts und/oder eine Position des Objektes mithilfe der Auswertungseinrichtung und/oder einer externen Einrichtung, zum Beispiel eine Recheneinheit aufweisend, ermittelt werden. Insbesondere kann eine Position des Objekts mithilfe einer Position eines Teils eines Randes des Objekts ermittelt werden. Hierzu kann insbesondere erforderlich sein, dass Geometriedaten, zum Beispiel Längs- und/oder Querdimensionen, des Objekts bekannt sind.

Ein ermittelter Zeitpunkt und/oder ein ermitteltes Zeitintervall (Schritt S7) und/oder eine ermittelte Position des Objekts kann/können mithilfe von Positions- und/oder Bewegungsdaten abgeglichen und/oder korrigiert werden, die zum Beispiel mithilfe einer Erfassungseinrichtung, zum Beispiel einer optischen Erfassungseinrichtung wie einer Lichtschranke, ermittelt werden. Alternativ oder zusätzlich können insbesondere Einrichtungen, die die Schritte S7 und S8 ausführen, zum Beispiel die Auswertungseinrichtung, mithilfe von bekannten Positions- und/oder Bewegungsdaten kalibriert werden, die zum Beispiel mithilfe einer Erfassungseinrichtung, zum Beispiel einer optischen Erfassungseinrichtung wie einer Lichtschranke, ermittelt worden sind. Solche Positions- und/oder Bewegungsdaten können dann zum Beispiel mithilfe von Kalibrierobjekten ermittelt worden sein.

Insbesondere kann eine Kalibrierung eines von der Auswertungseinrichtung genutzten Zusammenhangs zwischen einem entsprechenden Ort und einem Zeitpunkt oder einem Zeitintervall, an dem sich zumindest ein Teil eines Randes eines Objekts an dem entsprechenden Ort befindet, mithilfe solcher Positions- und/oder Bewegungsdaten erfolgen.

Alternativ oder zusätzlich kann insbesondere in entsprechender Weise im Schritt S8 eine Position des Randes des Sicherheitsmerkmals und/oder eine Position des Sicherheitsmerkmals ermittelt werden. Es kann zusätzlich überprüft werden, ob sich das Sicherheitsmerkmal an einer vorgegebenen Position des Objekts befindet, zum Beispiel an einer zu erwartenden Position. Ist an einer zu erwartenden Position kein Sicherheitsmerkmal vorhanden, kann dies zum Beispiel dafür sprechen, dass das Objekt nicht echt ist. Eine solche Information kann in einer Verifikationsentscheidung berücksichtigt werden, zum Beispiel in der Verifikationsentscheidung, die in Schritt S6b getroffen wird. In diesem Falle ist es denkbar, dass die zu Schritt S6b beschriebene Verifikationsentscheidung erst später getroffen wird, wenn die besagte Information vorliegt.

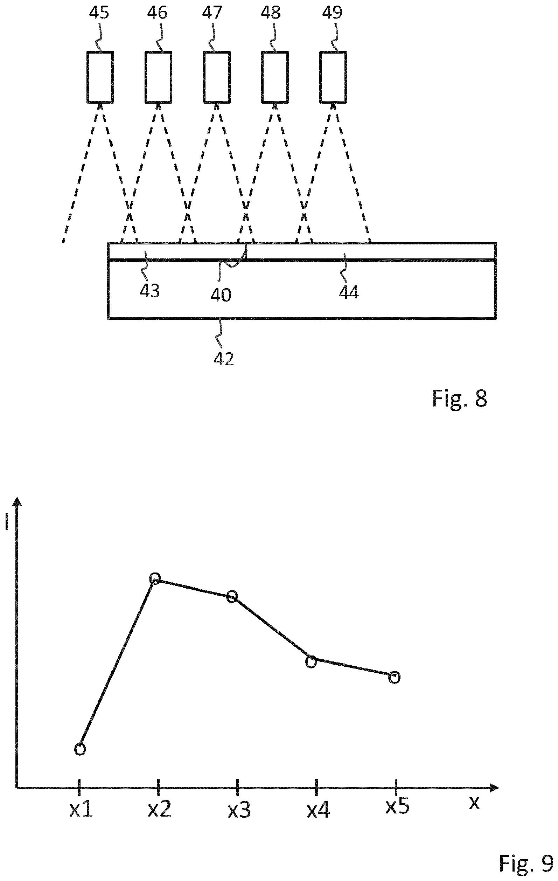

Fig. 8 zeigt eine Mehrzahl von Sensoren 45-49, bei denen es sich zum Beispiel jeweils um ein Sensorelement 15 wie in der Sensorvorrichtung der Fig. 1 oder Fig. 2 handeln kann und die in einer Richtung quer zur Bewegungsrichtung eines Objekts 42 verteilt angeordnet sind. Im Ausführungsbeispiel der Fig. 8 sind fünf Sensoren 45-49 vorhanden. Es kann sich jedoch alternativ um jede andere Anzahl von zwei oder mehr Sensoren handeln. Die Bewegungsrichtung des Objekts 42 verläuft senkrecht zur Figurenebene. Die Bewegung des Objekts schließt jedoch nicht aus, dass die Bewegung auch gestoppt wird und dann wieder fortgesetzt wird. Die Sensoren können die Oberfläche des Objekts 42 vor, während und/oder nach einer Bewegungsphase erfassen.

Das Objekt 42 weist zwei verschiedene Oberflächenbereiche 43, 44 auf, die (wie durch einen kurzen in vertikaler Richtung verlaufenden Strich angedeutet ist, durch einen Rand 40 voneinander abgegrenzt sind. Die in diesem speziellen Ausführungsbeispiel parallel zueinander ausgerichteten Sensoren 45-49 weisen, wie durch gestrichelte Linien angedeutet ist, jeweils einen zugeordneten Messbereich auf, in dem sie die von Oberflächenbereichen des Objekts ausgehende Strahlung erfassen können. Die Messbereiche sind daher ebenfalls in der Richtung quer zur Bewegungsrichtung des Objekts 42 verteilt angeordnet. In dem speziellen Ausführungsbeispiel überlappen sich die Messbereiche auf der Oberfläche des Objekts 42. Es sind jedoch auch Anordnungen möglich, bei denen sich die Messbereiche nicht überlappen oder stärker überlappen.

Die Sensoren 45-49 und ihre Messbereiche bilden in der Darstellung der Fig. 8 eine Reihenfolge. Auf die Sensoren und ihre Messbereiche wird wie folgt Bezug genommen: der am weitesten links in Fig. 8 dargestellte Sensor 45 ist der erste Sensor, der am weitesten rechts in Fig. 8 dargestellte Sensor 49 ist der fünfte Sensor. Die Sensoren dazwischen sind der zweite Sensor 46, der dritte Sensor 47 und der vierte Sensor 48. Da die Sensoren parallel zueinander ausgerichtet sind gilt entsprechendes für deren Messbereiche.

In Fig. 9 ist ein Diagramm der von den Sensoren 45-49 erzeugten Messsignale dargestellt, und zwar in dem in Fig. 8 gezeigten Bewegungszustand. Das Diagramm zeigt in dem konkreten Ausführungsbeispiel die Intensität I der Messsignale als Messwerte (durch kleine Kreise dargestellt) in Abhängigkeit vom Ort x des jeweiligen Messbereichs. An der Stelle x1 ist der Messwert des ersten Sensors 45 dargestellt, an der Stelle x2 der Messwert des zweiten Sensors 46 usw..

Wie aus Fig. 8 erkennbar ist, liegt der Messbereich des ersten Sensors 45 überwiegend außerhalb der Objektoberfläche des Objekts 42. Der entsprechende Messwert an der Stelle x1 im Diagramm der Fig. 9 ist sehr viel kleiner als der Messwert des zweiten Sensors 46 an der Stelle x2. Der zweite Sensor 46 erfasst ausschließlich Strahlung von dem Oberflächenbereich 43. Der dritte Sensor 47 erfasst weit überwiegend ebenfalls Strahlung von dem Oberflächenbereich 43, jedoch auch zu einem kleinen Anteil Strahlung aus dem zweiten Oberflächenbereich 44. Daher liegt sein Messwert an der Stelle x3 geringfügig unterhalb des Messwertes des zweiten Sensors 46. Der vierte Sensor 48 erfasst weit überwiegend Strahlung von dem zweiten Oberflächenbereich 44, jedoch auch zu einem kleinen Anteil Strahlung aus dem ersten Oberflächenbereich 43. Weil die von dem zweiten Oberflächenbereich 44 ausgehende Strahlung pro Fläche zu einer deutlich geringeren gemessenen Intensität führt als die von dem ersten Oberflächenbereich 43 ausgehende Strahlung, liegt sein Messwert an der Stelle x4 deutlich unterhalb des Messwertes des dritten Sensors 47. Der fünfte Sensor 49 erfasst ausschließlich Strahlung von dem zweiten Oberflächenbereich 44. Sein Messwert an der Stelle x5 liegt daher noch geringfügig unterhalb des Messwertes des vierten Sensors 48.

Insbesondere liegt Information darüber vor, welcher Messwert für einen Sensor zu erwarten ist, der ausschließlich Strahlung außerhalb der Objektoberfläche des Objekts empfängt. Ferner liegt vorzugsweise Information darüber vor, beispielsweise durch Auswertung des zeitlichen Verlaufs der Messsignale des zweiten Sensors 46 und des dritten Sensors 47, dass der erste Oberflächenbereich 43 ein Oberflächenbereich mit einem photolumineszierenden Stoff ist. Da der zweite Oberflächenbereich 44 Messsignale der Sensoren 48 und 49 erzeugt, die nicht der Intensität in einem neben dem Objekt 42 liegenden Erfassungsbereich entsprechen, kann aus den Messwerten der Sensoren 48 und 49 auf die Tatsache geschlossen werden, dass es sich um einen Oberflächenbereich handelt. Entsprechend kann optional auch in Bezug auf den ersten Oberflächenbereich vorgegangen werden. Der erste Oberflächenbereich 43 kann dann von dem zweiten Oberflächenbereich 44 unterschieden werden, weil die Messwerte der Sensoren 46-49 nicht einem Messbereich entsprechen, der neben dem Objekt 42 liegt.

Durch eine entsprechende Kategorisierung der in Fig. 9 dargestellten Messwerte kann daher folgendes über die Orte von Rändern des Objekts 42 aus den Messwerten geschlossen werden: ein Außenrand des Objekts 42 liegt im Messbereich des ersten Sensors 45.

Insbesondere kann daher der Ort des Außenrandes bezüglich der Richtung quer zur Bewegungsrichtung des Objekts 42 als der Mittelpunkt des Messbereichs des ersten Sensors 45 ermittelt werden. Wenn außerdem Information darüber vorliegt, welchen Messwert der erste Sensors 45 liefern müsste, wenn sein Messbereich vollständig außerhalb des Objekts läge, kann der Ort des Außenrandes noch genauer ermittelt werden. Dabei kann unter Berücksichtigung des Messwertes des zweiten Sensors 46 das Verhältnis der Anteile des Messbereichs des ersten Sensors 45 ermittelt werden, die den ersten Oberflächenbereich 43 bzw. nicht die Oberfläche des Objekts erfassen. Daraus lässt sich der Ort des Außenrandes des Objekts 42 in der Richtung quer zur Bewegungsrichtung des Objekts 42 innerhalb des Messbereichs des ersten Sensors 45 ermitteln.

Der Ort des Randes 40, der die Oberflächenbereiche 43 und 44 gegeneinander abgegrenzt, kann aus dem örtlichen Verlauf der Messsignale der Sensoren 46-49 oder unmittelbar lediglich aus den Messwerten des dritten Sensors 47 und des vierten Sensors 48 ermittelt werden. Wenn lediglich die Messwerte des dritten und vierten Sensors berücksichtigt werden, kann der Ort als in der Mitte zwischen den Mittelpunkten der Messbereiche der beiden Sensoren liegend ermittelt werden. Wenn der örtliche Verlauf der Messsignale berücksichtigt wird, kann der Ort im Allgemeinen genauer ermittelt werden. Dabei kann berücksichtigt werden, wenn entsprechende Information vorhanden ist, dass der zweite Sensor 46 ausschließlich Strahlung von dem ersten Oberflächenbereich 43 empfängt und der fünfte Sensor ausschließlich Strahlung von dem zweiten Oberflächenbereich 44 empfängt. Die Abweichung des Messsignals des dritten Sensors 47 von dem Messsignal des zweiten Sensors 46 und die Abweichung des Messsignals des vierten Sensors 48 von dem Messsignal des fünften Sensors 49 sind darauf zurückzuführen, dass sie zu einem kleinen Anteil auch den Oberflächenbereich jenseits des Randes 40 erfassen. Es bestehen unterschiedliche Möglichkeiten den örtlichen Verlauf auszuwerten. Eine Möglichkeit besteht darin, die genannten Abweichungen der Messsignale zu berücksichtigen und daraus zu schließen, wo im Überlappungsbereich der Messbereiche des dritten Sensors 47 und des vierten Sensors 48 der Rand bezüglich der Richtung quer zur Bewegungsrichtung des Objekts 42 liegt. Im dargestellten Ausführungsbeispiel liegt der Rand genau in der Mitte des Überlappungsbereichs, sodass der örtliche Verlauf zu keiner Steigerung der Genauigkeit der Ortsbestimmung führt. In vielen Fällen ist aber eine solche Steigerung der Genauigkeit möglich.

Bezugszeichenliste

| | |
|------|---------------------------------------------------------------------------------------|
| 1 | Sensorvorrichtung |
| 2 | Aussparung |
| 3 | teilweise durchlässiger Reflektor |
| 7 | Gehäuse |
| 8 | erster Ausrichtungsstift |
| 9 | zweiter Ausrichtungsstift |
| 10 | Gehäuseinnenraum |
| 11 | Austrittsfenster |
| 11a | Austrittsfenster |
| 11b | Eintrittsfenster |
| 12 | Eintrittsöffnung |
| 13 | Strahlungsquelle |
| 15 | Sensorelement |
| 16 | Sensoröffnung |
| 17 | Strahlungserzeugungseinrichtung |
| 19 | Empfangseinrichtung |
| 21 | Objektträger |
| 22a | Objekt |
| 22b | Objektrand |
| 23 | Sicherheitsmerkmal |
| 24 | Transporteinrichtung |
| 25 | Steuereinrichtung |
| 26 | Auswertungseinrichtung |
| 31 | erste Kammer |
| 32 | zweite Kammer |
| 33 | Trennwand |
| 34 | Halter |
| 40 | Rand |
| 42 | Objekt |
| 43 | Oberflächenbereich |
| 44 | Oberflächenbereich |
| 45-49 | Sensoren |
| A | Bereich |
| AP | Beitrag der von dem photolumineszierenden Stoff emittierten Lumineszenz-Strahlung an dem mindestens einen Empfangssignal |
| B | Bereich |
| BR | Bewegungsrichtung |
| C1 | Bereich |
| C2 | Bereich |
| D | Bereich |
| E | Bereich |
| EO | entsprechender Ort |
| ES | Empfangssignal |

| F1 | Zeitintervall |
| F2 | Zeitintervall |
| I | Strahlungsintensität |
| ME | Messbereich |
| S1: | Schritt 1, Initiierung des Messbetriebs |
| S2: | Schritt 2, Beginn eines Erzeugens von elektromagnetischer Strahlung |
| S2b: | Schritt 2b, Steuern einer Strahlungsquelle |
| S3a: | Schritt 3a, Empfangen von elektromagnetischer Strahlung |
| S3b: | Schritt 3b, Erzeugen eines zeitabhängigen Empfangssignals |
| S3c: | Schritt 3c, Aufzeichnen und/oder Zwischenspeichern eines zeitabhängigen Empfangssignals |
| S4: | Schritt 4, Bewegen eines Objekts in den Messbereich |
| S5: | Schritt 5, Bewegen eines Sicherheitsmerkmals in den Messbereich |
| S6a: | Schritt 6a, Beginn eines Auswertens des Empfangssignals |
| S6b: | Schritt 6b, Feststellen, ob von dem photolumineszierenden Stoff emittierte elektromagnetische Strahlung zu dem zeitabhängigen Empfangssignal beigetragen hat |
| S7: | Schritt 7, Bestimmen von einem Zeitpunkt oder einem Zeitintervall |
| S8: | Schritt 8, Ermitteln einer Position des einen Teils des Randes des Objekts und/oder Ermitteln einer Position des Objekts |
| t | Zeit |
| UE | Übergangszeitpunkt |
| UE1 | Wert des Übergangszeitpunkts |
| UE2 | Wert des Übergangszeitpunkts |
| UEM | Wert des Übergangszeitpunkts |
| UES | Wert des Übergangszeitpunkts |
| x | Ort |

**Patentansprüche**

1. Photolumineszenz-Sensorvorrichtung (1) zum Erkennen eines Sicherheitsmerkmals (23) eines sich relativ zu der Sensorvorrichtung (1) bewegenden Objekts (22a) in einem Messbereich (ME) der Sensorvorrichtung (1), wobei die Sensorvorrichtung (1) aufweist:

- eine Strahlungserzeugungseinrichtung (17), die ausgestaltet ist, elektromagnetische Strahlung zu erzeugen, wobei die elektromagnetische Strahlung geeignet ist, eine Emission von Lumineszenz-Strahlung durch einen photolumineszierenden Stoff des Sicherheitsmerkmals (23) anzuregen,
- eine Empfangseinrichtung (19), die ausgestaltet ist, von dem sich relativ zu der Sensorvorrichtung (1) bewegenden Objekt (22a) ausgehende elektromagnetische Strahlung über einen Erfassungszeitraum hinweg zu empfangen und ein entsprechendes zeitabhängiges Empfangssignal (ES) zu erzeugen, wobei die von dem Objekt (22a) ausgehende elektromagnetische Strahlung - je nach Relativposition des Objekts (22a) und der Empfangseinrichtung (19) und je nach der elektromagnetischen Strahlung, die von der Strahlungserzeugungseinrichtung (17) erzeugt wird und auf das Objekt (22a) auftrifft - die von dem photolumineszierenden Stoff emittierte Lumineszenz-Strahlung und/oder von dem Objekt (22a) reflektierte elektromagnetische Strahlung, die von der Strahlungserzeugungseinrichtung (17) erzeugt wurde, aufweist,
- eine Auswertungseinrichtung (26), die ausgestaltet ist, das zeitabhängige Empfangssignal (ES) auszuwerten, wobei die Auswertungseinrichtung (26) ausgestaltet ist festzustellen, ob von dem photolumineszierenden Stoff emittierte Lumineszenz-Strahlung zu dem zeitabhängigen Empfangssignal (ES) beigetragen hat,
wobei die Sensorvorrichtung (1) eine Steuereinrichtung (25) aufweist, die ausgestaltet ist, die Strahlungserzeugungseinrichtung (17) derart zu steuern, dass die von der Strahlungserzeugungseinrichtung (17) erzeugte elektromagnetische Strahlung in dem Erfassungszeitraum einen zeitlichen Verlauf der Strahlungsflussdichte aufweist, welcher in dem Erfassungszeitraum nicht konstant ist, und
wobei die Auswertungseinrichtung (26) zusätzlich ausgestaltet ist, durch Auswertung des Empfangssignals (ES) hinsichtlich eines zeitlichen Verlaufes der Höhe der Strahlungsintensität (I) der von der Empfangseinrichtung (19) erfassten elektromagnetischen Strahlung einen Zeitpunkt (UE1, UE2, UEM) oder ein Zeitintervall zu bestimmen, in dem sich zumindest ein Teil eines Randes (22b) des Objekts (22a) an einem entsprechenden Ort (EO) im Messbereich (ME) befindet.

2. Photolumineszenz-Sensorvorrichtung (1) nach Anspruch 1, wobei die Auswertungseinrichtung (26) ausgestaltet ist, bei einer Auswertung des zeitabhängigen Empfangssignals (ES) zumindest eine statistische Größe zu bestimmen und den Zeitpunkt (UE1, UE2, UEM) oder das Zeitintervall unter Verwendung der zumindest einen statistischen Größe zu bestimmen.

3.  Photolumineszenz-Sensorvorrichtung (1) nach Anspruch 1 oder 2, wobei die Auswertungseinrichtung (26) ausgestaltet ist, in dem zeitabhängigen Empfangssignal (ES) eine zeitliche Veränderung eines Beitrags der von dem Objekt (22a) reflektierten elektromagnetischen Strahlung festzustellen und daraus den Zeitpunkt (UE1, UE2, UEM) oder das Zeitintervall zu bestimmen, in dem sich der zumindest eine Teil des Randes (22b) des Objekts (22a) an dem entsprechenden Ort (EO) im Messbereich (ME) befindet.

4.  Photolumineszenz-Sensorvorrichtung (1) nach Anspruch 3, wobei die Auswertungseinrichtung (26) ausgestaltet ist, die zeitliche Veränderung als einen Sprung, eine Veränderung von Minimal- und Maximalwerten und/oder Amplituden und/oder eines gleitenden Mittelwerts des Empfangssignals (ES) festzustellen.

5.  Photolumineszenz-Sensorvorrichtung (1) nach einem der Ansprüche 1-4, wobei die Auswertungseinrichtung (26) ausgestaltet ist, unter Verwendung des Zeitpunkts (UE1, UE2, UEM) oder des Zeitintervalls, in dem sich der zumindest eine Teil des Randes (22b) des Objekts (22a) an dem entsprechenden Ort (EO) im Messbereich (ME) befindet, eine Position des zumindest einen Teils des Randes (22b) des Objekts (22a) und/oder des Objekts (22a) zu ermitteln.

6.  Photolumineszenz-Sensorvorrichtung (1) nach einem der Ansprüche 1-5, wobei die Strahlungserzeugungseinrichtung (17) eine Mehrzahl von Strahlungsquellen (13) aufweist, wobei die Strahlungsquellen (13) als Feld und/oder Reihe von Strahlungsquellen (13) angeordnet sind, das/die sich mindestens zum Teil quer zur Bewegungsrichtung (BR) des Objekts (22a) erstreckt, und jeweils ausgestaltet sind, elektromagnetische Strahlung zu erzeugen, wobei die elektromagnetische Strahlung jeweils geeignet ist, eine Emission von Lumineszenz-Strahlung durch den photolumineszierenden Stoff des Sicherheitsmerkmals (23) anzuregen.

7.  Photolumineszenz-Sensorvorrichtung (1) nach einem der Ansprüche 1-6, wobei die Empfangseinrichtung eine Mehrzahl von Sensoren (15) aufweist, die jeweils derart ausgestaltet sind, von dem Objekt (22a) ausgehende elektromagnetische Strahlung zu empfangen und jeweils ein entsprechendes zeitabhängiges Empfangssignal (ES) zu erzeugen, sodass eine Mehrzahl von Empfangssignalen (ES) erzeugt wird.

8.  Photolumineszenz-Sensorvorrichtung (1) nach Anspruch 7, wobei mehrere der Sensoren (15) über einen Bereich verteilt angeordnet sind, der sich quer zur Bewegungsrichtung (BR) des Objekts (22a) erstreckt.

9.  Photolumineszenz-Sensorvorrichtung (1) nach Anspruch 7 oder 8, wobei die Auswertungseinrichtung (26) ausgestaltet ist, eine Position zumindest eines Teils des Randes (22b) des Objekts (22a) und/oder eine Position des Objekts (22a) in dem Messbereich (ME) der Sensorvorrichtung (1) unter Verwendung der Mehrzahl von Empfangssignalen (ES) zu bestimmen.

10. Verfahren zum Erkennen eines Sicherheitsmerkmals (23) eines sich relativ zu einer Photolumineszenz-Sensorvorrichtung (1) bewegenden Objekts (22a) in einem Messbereich (ME) der Sensorvorrichtung (1), aufweisend:

    - Erzeugen von elektromagnetischer Strahlung mithilfe einer Strahlungserzeugungseinrichtung (17), wobei die elektromagnetische Strahlung eine Emission von Lumineszenz-Strahlung durch einen photolumineszierenden Stoff des Sicherheitsmerkmals (23) anregt,
    - Empfangen von elektromagnetischer Strahlung, die von dem sich relativ zu der Sensorvorrichtung (1) bewegenden Objekt (22a) ausgeht, über einen Erfassungszeitraum hinweg, wobei die von dem Objekt (22a) ausgehende elektromagnetische Strahlung - je nach Relativposition des Objekts (22a) und der Empfangseinrichtung (19) und je nach der elektromagnetischen Strahlung, die von der Strahlungserzeugungseinrichtung (17) erzeugt wird und auf das Objekt (22a) auftrifft - die von dem photolumineszierenden Stoff emittierte Lumineszenz-Strahlung und/oder von dem Objekt (22a) reflektierte elektromagnetische Strahlung, die von der Strahlungserzeugungseinrichtung (17) erzeugt wurde, aufweist,
    - Erzeugen eines entsprechenden zeitabhängigen Empfangssignals (ES),
    - Feststellen, ob von dem photolumineszierenden Stoff emittierte elektromagnetische Strahlung zu dem zeitabhängigen Empfangssignal (ES) beigetragen hat,
    - Steuern der Strahlungserzeugungseinrichtung (17) derart, dass die von der Strahlungserzeugungseinrichtung (17) erzeugte elektromagnetische Strahlung in dem Erfassungszeitraum einen zeitlichen Verlauf der Strahlungsflussdichte aufweist, welcher in dem Erfassungszeitraum nicht konstant ist,
- Bestimmen eines Zeitpunkts (UE1, UE2, UEM) oder eines Zeitintervalls, in dem sich zumindest ein Teil eines Randes (22b) des Objekts (22a) an einem entsprechenden Ort (EO) im Messbereich (ME) befindet, durch Auswertung des Empfangssignals (ES) hinsichtlich eines zeitlichen Verlaufes der Höhe der Strahlungsintensität (I) der von der Empfangseinrichtung (19) erfassten elektromagnetischen Strahlung.

11. Verfahren nach Anspruch 10, wobei beim Bestimmen des Zeitpunkts oder des Zeitintervalls eine statistische Größe, die beim Auswerten des zeitabhängigen Empfangssignals (ES) bestimmt wird, verwendet wird.

12. Verfahren nach Anspruch 10 oder 11, zusätzlich aufweisend:

- Feststellen einer zeitlichen Veränderung eines Beitrags der von dem Objekt (22a) reflektierten elektromagnetischen Strahlung in dem zeitabhängigen Empfangssignal (ES),
- Ermitteln des Zeitpunkts oder des Zeitintervalls, in dem sich der zumindest eine Teil des Randes (22b) des Objekts (22a) an dem entsprechenden Ort (EO) im Messbereich (ME) befindet, mithilfe der festgestellten zeitlichen Veränderung des Beitrags der von dem Objekt (22a) reflektierten elektromagnetischen Strahlung.

13. Verfahren nach einem der Ansprüche 10-12, zusätzlich aufweisend:

- Ermitteln, unter Verwendung des Zeitpunkts (UE1, UE2, UEM) oder Zeitbereichs, in dem sich der zumindest eine Teil des Randes (22b) des Objekts (22a) an dem entsprechenden Ort (EO) im Messbereich (ME) befindet, einer Position des zumindest einen Teil des Randes (22b) des Objekts (22a) und/oder des Objekts (22a).

14. Verfahren nach einem der Ansprüche 10-13, wobei von dem Objekt (22a) ausgehende elektromagnetische Strahlung mithilfe einer Mehrzahl von Sensoren (15) empfangen wird, die jeweils ein entsprechendes zeitabhängiges Empfangssignal (ES) erzeugen, sodass eine Mehrzahl von Empfangssignalen (ES) erzeugt wird.

15. Verfahren nach Anspruch 14, zusätzlich aufweisend:

- Bestimmung einer Position zumindest eines Teils des Randes (22b) des Objekts (22a) und/oder des Objekts (22a) in dem Messbereich (ME) der Sensorvorrichtung (1) unter Verwendung der Mehrzahl von Empfangssignalen (ES).

## Claims

1. A photoluminescence sensor device (1) for detecting a security feature (23) of an object (22a) moving relative to the sensor device (1) in a measuring range (ME) of the sensor device (1), wherein the sensor device (1) comprises:

- a radiation-generating device (17), which is configured to generate electromagnetic radiation, wherein the electromagnetic radiation is suitable for exciting an emission of luminescent radiation by a photoluminescent substance of the security feature (23),
- a receiving device (19), which is configured to receive electromagnetic radiation that originates from the object (22a) moving relative to the sensor device (1) over a detection period and to generate a corresponding time-dependent receiving signal (ES), wherein the electromagnetic radiation emitted by the object (22a) - depending on the relative position of the object (22a) and the receiving device (19) and depending on the electromagnetic radiation generated by the radiation generating device (17) and incident on the object (22a) - comprises the luminescent radiation emitted by the photoluminescent substance and/or electromagnetic radiation reflected by the object (22a) which has been generated by the radiation generating device (17),
- an evaluation device (26), which is configured to evaluate the time-dependent receiving signal (ES), wherein the evaluation device (26) is configured to determine whether luminescent radiation emitted by the photoluminescent substance has contributed to the time-dependent receiving signal (ES), wherein the sensor device (1) comprises a control device (25) which is configured to control the radiation generating device (17) such that the electromagnetic radiation generated by the radiation generating device (17) in the detection period comprises a time sequence of the radiation flux density which is not constant in the detection period, and wherein the evaluation device (26) is additionally configured, by evaluating the receiving signal (ES) with respect to a time sequence of the level of radiation intensity (I) of the electromagnetic radiation detected by the receiving device (19) to determine a time point (UE1, UE2, UEM) or a time interval in which at least a part of an edge (22b) of the object (22a) is located in a corresponding location (EO) in the measuring range (ME).

2. The photoluminescence sensor device (1) according to claim 1, wherein the evaluation device (26) is configured to determine at least one statistical variable and the time point (UE1, UE2, UEM) or the time interval by using the at least one statistical variable in an evaluation of the time-dependent receiving signal (ES).

3. The photoluminescence sensor device (1) according to claim 1 or 2, wherein the evaluation device (26) is configured to determine in the time-dependent receiving signal (ES) a variation over time of a contribution of the electromagnetic radiation reflected by the object (22a) and to determine from this the time point (UE1, UE2, UEM) or the time interval in which the at least one part of the edge (22b) of the object (22a) is located at the corresponding location (EO) in the measuring range (ME).

4. The photoluminescence sensor device (1) according to claim 3, wherein the evaluation device (26) is configured to determine the change in time as a jump, a change of minimal and maximal values and/or amplitudes and/or a sliding average of the receiving signal (ES).

5. The photoluminescence sensor device (1) according to any one of claims 1-4, wherein the evaluation device (26) is configured using the time point (UE1, UE2, UEM) or the time interval in which the at least one part of the edge (22b) of the object (22a) is located at the corresponding location (EO) in the measuring range (ME), to determine a position of the at least one part of the edge (22b) of the object (22a) and/or the object (22a).

6. The photoluminescence sensor device (1) according to any one of claims 1-5, wherein the radiation generating device (17) comprises a plurality of radiation sources (13), wherein the radiation sources (13) are arranged as an array and/or series of radiation sources (13), which extend(s) at least partly transversely to the direction of movement (BR) of the object (22a), and are configured respectively to generate electromagnetic radiation, wherein the electromagnetic radiation is capable in each case of exciting an emission of luminescent radiation by the photoluminescent substance of the security feature (23).

7. The photoluminescence sensor device (1) according to any one of claims 1-6, wherein the receiving device comprises a plurality of sensors (15) each of which is configured to receive electromagnetic radiation emitted by the object (22a) and to generate a corresponding time-dependent receiving signal (ES) so that a plurality of receiving signals (ES) are generated.

8. The photoluminescence sensor device (1) according to claim 7, wherein a plurality of sensors (15) are distributed over an area which extends transversely to the direction of movement (BR) of the object (22a).

9. The photoluminescence sensor device (1) according to claim 7 or 8, wherein the evaluation device (26) is configured to determine a position of at least a part of the edge (22b) of the object (22a) and/or a position of the object (22a) in the measuring range (ME) of the sensor device (1) using the plurality of receiving signals (ES).

10. A method for detecting a security feature (23) of an object (22a) moving relative to a photoluminescence sensor device (1) in a measuring range (ME) of the sensor device (1), comprising:

- generating electromagnetic radiation by means of a radiation generating device (17), wherein the electromagnetic radiation excites an emission of luminescent radiation by a photoluminescent substance of the security feature (23),
- receiving electromagnetic radiation which is emitted by the object (22a) moving relative to the sensor device (1) over a detection period, wherein the electromagnetic radiation originates from the object (22a) - depending on the relative position of the object (22a) and the receiving device (19) and depending on the electromagnetic radiation generated by the radiation generating device (17) and incident on the object (22a) - comprises the luminescent radiation emitted by the photoluminescent substance and/or electromagnetic radiation reflected by the object (22a) which has been generated by the radiation generating device (17),
- generating a corresponding time-dependent receiving signal (ES),
- determining whether electromagnetic radiation emitted by the photoluminescent substance has contributed to the time-dependent receiving signal (ES),
- controlling the radiation generating device (17), so that the electromagnetic radiation generated by the radiation generating device (17) in the detection period includes a variation over time of the radiation flux density which is not constant in the detection period,
- determining a time point (UE1, UE2, UEM) or a time interval, in which at least a part of an edge (22b) of the object (22a) is located at a corresponding location (EO) in the measuring range (ME) by evaluating the receiving signal (ES) with respect to a time sequence of the level of radiation intensity (I) of the electromagnetic radiation detected by the receiving device (19).

**11.** The method according to claim 10, wherein on determining the time point or the time interval a statistical variable is used which is determined during the evaluation of the time-dependent receiving signal (ES).

**12.** The method according to claim 10 or 11, additionally comprising:

- determining a change over time of a contribution of the electromagnetic radiation reflected by the object (22a) in the time-dependent receiving signal (ES),
- detecting the time point or the time interval, in which the at least one part of the edge (22b) of the object (22a) is located at the corresponding location (EO) in the measuring range (ME), using the determined change over time of the contribution of the electromagnetic radiation reflected by the object (22a).

**13.** The method according to any one of claims 10-12, additionally comprising:

- determining, using the time point (UE1, UE2, UEM) or time range in which the at least one part of the edge (22b) of the object (22a) is located at the corresponding location (EO) in the measuring range (ME), a position of the at least one part of the edge (22b) of the object (22a) and/or the object (22a).

**14.** The method according to any one of claims 10-13, wherein electromagnetic radiation emitted by the object (22a) is received by means of a plurality of sensors (15), each of which generates a corresponding time-dependent receiving signal (ES) so that a plurality of receiving signals (ES) are generated.

**15.** The method according to claim 14, additionally comprising:

- determining a position of at least one part of the edge (22b) of the object (22a) and/or the object (22a) in the measuring range (ME) of the sensor device (1) using the plurality of receiving signals (ES).

**Revendications**

**1.** Dispositif capteur de photoluminescence (1) permettant la reconnaissance d'une caractéristique de sécurité (23) d'un objet (22a) se déplaçant par rapport au dispositif capteur (1) dans une zone de mesure (ME) du dispositif capteur (1), le dispositif capteur (1) présentant :

- un dispositif de génération de rayonnement (17) qui est conçu pour générer un rayonnement électromagnétique, où le rayonnement électromagnétique est conçu pour activer une émission d'un rayonnement de luminescence par une substance photo luminescente de la caractéristique de sécurité (23),
- un dispositif récepteur (19) qui est conçu pour recevoir le rayonnement électromagnétique émis par l'objet (22a) se déplaçant par rapport au dispositif capteur (1) sur un intervalle de temps de détection et pour générer un signal de réception (ES) en fonction du temps correspondant, où le rayonnement électromagnétique émis à partir de l'objet (22a), selon la position relative de l'objet (22a) et du dispositif récepteur (19) et selon le rayonnement électromagnétique, qui est généré par le dispositif de génération de rayonnement (17) et qui tombe sur l'objet (22a), présente le rayonnement de luminescence émis par la substance photo luminescente et/ou le rayonnement électromagnétique réfléchi par l'objet (22a) qui a été généré par le dispositif de génération de rayonnement (17),
- un dispositif d'évaluation (26) qui est conçu pour évaluer le signal de réception (ES) en fonction du temps, dans lequel le dispositif d'évaluation (26) est conçu pour distinguer si le rayonnement de luminescence émis par la substance photo luminescente a contribué au signal de réception (ES) en fonction du temps, où le dispositif capteur (1) présente un dispositif de commande (25) qui est conçu pour commander le dispositif de génération de rayonnement (17) de telle manière que le rayonnement électromagnétique généré par le dispositif de génération de rayonnement (17) présente dans la zone de détection une évolution temporelle de la densité de flux de rayonnement, laquelle n'est pas constante dans l'intervalle de temps de détection, et dans lequel le dispositif d'évaluation (26) est en outre conçu pour déterminer, par l'évaluation du signal de réception (ES) par rapport à une évolution temporelle de l'amplitude de l'intensité de rayonnement (I) du rayonnement électromagnétique détecté par le dispositif récepteur (19), un instant (UE1, UE2, UEM) ou un intervalle de temps pendant lequel au moins une partie d'un bord (22b) de l'objet (22a) se trouve à un endroit (EO) correspondant dans la zone de mesure (ME).

2. Dispositif capteur de photoluminescence (1) selon la revendication 1, dans lequel le dispositif d'évaluation (26) est conçu, lors de l'évaluation du signal de réception (ES) en fonction du temps, pour déterminer au moins une grandeur statistique et pour déterminer l'instant (UE1, UE2, UEM) ou l'intervalle de temps, moyennant l'emploi de l'au moins une grandeur statistique.

3. Dispositif capteur de photoluminescence (1) selon la revendication 1 ou la revendication 2, dans lequel le dispositif d'évaluation (26) est conçu pour distinguer, dans le signal de réception (ES) en fonction du temps, une modification dans le temps d'une contribution du rayonnement électromagnétique réfléchi par l'objet (22a) et déterminer à partir de cela l'instant (UE1, UE2, UEM), ou l'intervalle de temps, pendant lequel l'au moins une partie du bord (22b) de l'objet (22a) se trouve à l'endroit (EO) correspondant dans la zone de mesure (ME).

4. Dispositif capteur de photoluminescence (1) selon la revendication 3, dans lequel le dispositif d'évaluation (26) est conçu pour distinguer la modification dans le temps sous la forme d'un saut, d'une modification de valeurs minimales et maximales et/ou d'amplitudes, et/ou d'une valeur moyenne glissante du signal de réception (ES).

5. Dispositif capteur de photoluminescence (1) selon l'une des revendications 1 à 4, dans lequel le dispositif d'évaluation (26) est conçu pour déterminer, moyennant l'emploi de l'instant (UE1, UE2, UEM) ou de l'intervalle de temps pendant lequel l'au moins une partie du bord (22b) de l'objet (22a) se trouve à l'endroit (EO) correspondant dans la zone de mesure (ME), une position de l'au moins une partie du bord (22b) de l'objet (22a) et/ou l'objet (22a).

6. Dispositif capteur de photoluminescence (1) selon l'une des revendications 1 à 5, dans lequel le dispositif de génération de rayonnement (17) présente une multiplicité de sources de rayonnement (13), où les sources de rayonnement (13) sont disposées sous forme d'un champ et/ou d'une rangée de sources de rayonnement (13), qui s'étendent au moins en partie perpendiculairement par rapport à la direction de déplacement (BR) de l'objet (22a) et sont respectivement conçues pour générer un rayonnement électromagnétique, où le rayonnement électromagnétique est respectivement conçu pour provoquer une émission d'un rayonnement de luminescence par la substance photo luminescente de la caractéristique de sécurité (23).

7. Dispositif capteur de photoluminescence (1) selon l'une des revendications 1 à 6, dans lequel le dispositif récepteur présente une multiplicité de capteurs (15) qui sont respectivement conçus de telle manière à réceptionner un rayonnement électromagnétique partant de l'objet (22a) et à générer respectivement un signal de réception (ES) en fonction du temps correspondant de sorte qu'une multiplicité de signaux de réception (ES) est générée.

8. Dispositif capteur de photoluminescence (1) selon la revendication 7, dans lequel plusieurs parmi les capteurs (15) sont disposés distribués sur une zone qui s'étend perpendiculairement par rapport à la direction de déplacement (BR) de l'objet (22a).

9. Dispositif capteur de photoluminescence (1) selon la revendication 7 ou la revendication 8, dans lequel le dispositif d'évaluation (26) est conçu pour déterminer une position d'au moins une partie du bord (22b) de l'objet (22a) et/ou une position de l'objet (22a) dans la zone de mesure (ME) du dispositif capteur (1) moyennant l'emploi de la multiplicité des signaux de réception (ES).

10. Procédé de reconnaissance d'une caractéristique de sécurité (23) d'un objet (22a) se déplaçant dans une zone de mesure (ME) du dispositif capteur (1) par rapport à un dispositif capteur de photoluminescence (1) présentant :

   - la génération de rayonnement à l'aide d'un dispositif de génération de rayonnement (17), où le rayonnement électromagnétique est conçu pour activer une émission d'un rayonnement de luminescence par une substance photo luminescente de la caractéristique de sécurité (23),
   - la réception du rayonnement électromagnétique qui est émis par l'objet (22a) se déplaçant par rapport au dispositif capteur (1) sur un intervalle de temps de détection, où le rayonnement électromagnétique émis par l'objet (22a), selon la position relative de l'objet (22a) et du dispositif récepteur (19) et selon le rayonnement électromagnétique, qui est généré par le dispositif de génération de rayonnement (17) et qui tombe sur l'objet (22a), présente le rayonnement de luminescence émis par la substance photo luminescente et/ou le rayonnement électromagnétique réfléchi par l'objet (22a) qui a été généré par le dispositif de génération de rayonnement (17),

- la génération d'un signal de réception (ES) en fonction du temps correspondant,
- la distinction si le rayonnement électromagnétique émis par la substance photo luminescente a contribué au signal de réception (ES) en fonction du temps,
- la commande du dispositif de génération de rayonnement (17) de telle manière que le rayonnement électromagnétique généré par le dispositif de génération de rayonnement (17) présente dans la zone de détection une évolution temporelle de la densité de flux de rayonnement, lequel n'est pas constant dans l'intervalle de temps de détection,
- la détermination d'un instant (UE1, UE2, UEM) ou d'un intervalle de temps pendant lequel au moins une partie d'un bord (22b) de l'objet (22a) se trouve à un endroit (EO) correspondant dans la zone de mesure (ME), par l'évaluation du signal de réception (ES) en fonction d'une évolution temporelle de l'amplitude de l'intensité de rayonnement (I) du rayonnement électromagnétique détecté par le dispositif récepteur (19).

**11.** Procédé selon la revendication 10, dans lequel, au cours de la détermination de l'instant ou de l'intervalle de temps, on emploie une grandeur statistique qui est déterminée lors de l'évaluation du signal de réception (ES) en fonction du temps.

**12.** Procédé selon la revendication 10 ou la revendication 11, présentant en outre :

- la distinction d'une modification dans le temps d'une contribution du rayonnement électromagnétique réfléchi par l'objet (22a) dans le signal de réception (ES) en fonction du temps,
- la détermination de l'instant ou de l'intervalle de temps pendant lequel l'au moins une partie du bord (22b) de l'objet (22a) se trouve à l'endroit (EO) correspondant dans la zone de mesure (ME), à l'aide de la modification constatée dans le temps de la contribution du rayonnement électromagnétique réfléchi par l'objet (22a).

**13.** Procédé selon l'une des revendications 10 à 12, présentant en outre :

- la détermination, moyennant l'emploi de l'instant (UE1, UE2, UEM) ou de l'intervalle de temps pendant lequel au moins une partie d'un bord (22b) de l'objet (22a) se trouve à un endroit (EO) correspondant dans la zone de mesure (ME), d'une position de l'au moins une partie du bord (22b) de l'objet (22a) et/ou de l'objet (22a).

**14.** Procédé selon l'une des revendications 10 à 13, dans lequel le rayonnement électromagnétique émis à partir de l'objet (22a) est réceptionné à l'aide d'une multiplicité de capteurs (15) qui génèrent respectivement un signal de réception (ES) en fonction du temps correspondant de sorte qu'une multiplicité de signaux de réception (ES) est générée.

**15.** Procédé selon la revendication 14 présentant en outre :

- la détermination d'une position d'au moins une partie du bord (22b) de l'objet (22a) et/ou de l'objet (22a) dans la zone de mesure (ME) du dispositif capteur (1) moyennant l'emploi de la multiplicité des signaux de réception (ES).

Fig. 1

Fig. 2

Fig. 3

Fig. 4

Fig. 5

Fig.6a

Fig.6b

Fig.6c

Fig.7

45   46   47   48   49

43   40   44

42

Fig. 8

I

x1   x2   x3   x4   x5   x

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1241242 A2
- EP 3064939 A1

- EP 3503049 A1